(19) Europäisches Patentamt
European Patent Office
Office européen des brevets

(11) EP 4 424 733 A1

(12) EUROPEAN PATENT APPLICATION
published in accordance with Art. 153(4) EPC

(43) Date of publication:
**04.09.2024 Bulletin 2024/36**

(21) Application number: **22886423.7**

(22) Date of filing: **16.08.2022**

(51) International Patent Classification (IPC):
***C08F 297/04*** *(2006.01)* ***C08F 8/04*** *(2006.01)*
***C08L 53/02*** *(2006.01)* ***C08L 95/00*** *(2006.01)*
***E01C 7/18*** *(2006.01)*

(52) Cooperative Patent Classification (CPC):
**C08F 8/04; C08F 297/04; C08L 53/02; C08L 95/00; E01C 7/18**

(86) International application number:
**PCT/JP2022/030950**

(87) International publication number:
**WO 2023/074089 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.10.2021 JP 2021173982**

(71) Applicant: **Asahi Kasei Kabushiki Kaisha**
**Tokyo 1000006 (JP)**

(72) Inventors:
- **SHIROMOTO, Takayuki**
  **Tokyo 100-0006 (JP)**
- **KAMEDA, Ippei**
  **Tokyo 100-0006 (JP)**
- **KONDO, Tomohiro**
  **Tokyo 100-0006 (JP)**
- **ARAKI, Yoshifumi**
  **Tokyo 100-0006 (JP)**

(74) Representative: **Strehl Schübel-Hopf & Partner**
**Maximilianstrasse 54**
**80538 München (DE)**

# (54) BLOCK COPOLYMER, ASPHALT COMPOSITION, AND MODIFIED ASPHALT MIXTURE

(57) A block copolymer (P) that is a hydrogenated product of a block copolymer comprising a polymer block (A) mainly composed of a vinyl aromatic monomer unit and a polymer block (B) mainly composed of a conjugated diene monomer unit, the block copolymer (P) satisfying the following conditions (1) and (2):
(1) a 5% by mass toluene solution viscosity at 25°C is 5 mPa·s or more and 45 mPa·s or less
(2) the block copolymer (P) comprises a functional group.

EP 4 424 733 A1

## Description

Technical Field

The present invention relates to a block copolymer, an asphalt composition, and a modified asphalt mixture.

Background Art

A block copolymer is widely utilized as a modifier for an asphalt composition.

In the technical field of an asphalt composition, an asphalt composition to which various block copolymers are added as modifiers is widely utilized in order to add performance properties according to various uses such as road pavement, a sound insulation sheet, and asphalt roofing.

As such a block copolymer as a modifier, for example, a block copolymer containing a conjugated diene monomer unit and a vinyl aromatic monomer unit is known.

Specifically, a technique for improving various properties of an asphalt by adding a block copolymer having a specific structure to the asphalt has been disclosed (see, for example, Patent Documents 1 and 2).

List of Prior Art Documents

Patent Document

Patent Document 1: Japanese Patent Laid-Open No. 9-12898
Patent Document 2: Japanese Patent Laid-Open No. 2004-59781

Summary of Invention

Problems to be Solved by Invention

However, the asphalt compositions disclosed in Patent Documents 1 and 2 have the following problems: the balance of the properties of high softening point properties, low melt viscosity, and heat resistance stability is still insufficient for practical use, and properties of an asphalt mixture obtained by mixing an aggregate into the above asphalt composition are also insufficient for practical use.

Therefore, an object of the present invention is to provide a block copolymer that, when added to an asphalt, yields an asphalt composition excellent in high softening point properties, low melt viscosity, and heat resistance stability, to provide an asphalt composition containing the block copolymer and an asphalt, and excellent in high softening point properties, low melt viscosity, and heat resistance stability, and further to provide a modified asphalt mixture that uses the asphalt composition and is excellent in dynamic stability and water resistance.

Means for Solving Problems

As a result of diligent studies to solve the above problems, the present inventors have found that by using a block copolymer having a specific molecular structure, an asphalt composition excellent in high softening point properties, low melt viscosity, and heat resistance stability can be obtained, and found that by using the above asphalt composition, a modified asphalt mixture excellent in dynamic stability and water resistance can be obtained, leading to completion of the present invention.

That is, the present invention is as follows.

[1] A block copolymer (P) that is a hydrogenated product of a block copolymer comprising a polymer block (A) mainly composed of a vinyl aromatic monomer unit and a polymer block (B) mainly composed of a conjugated diene monomer unit, the block copolymer (P) satisfying the following conditions (1) and (2):

(1) a 5% by mass toluene solution viscosity at 25°C is 5 mPa·s or more and 45 mPa·s or less
(2) the block copolymer (P) comprises a functional group.

[2] The block copolymer (P) according to [1], wherein a nitrogen content is 20 ppm or more and 1000 ppm or less.

[3] The block copolymer (P) according to [1] or [2], wherein a silicon content is 50 ppm or more and 300 ppm or less.
[4] The block copolymer (P) according to any one of [1] to [3], wherein a mass proportion (TS) of the vinyl aromatic monomer unit is 20% by mass or more and 60% by mass or less.
[5] The block copolymer (P) according to any one of [1] to [4], wherein a vinyl bond content derived from the conjugated diene monomer is 9% by mass or more and 50% by mass or less.
[6] The block copolymer (P) according to any one of [1] to [5], wherein a mass proportion (BS) of the polymer block (A) calculated by the following expression (I) is 10% by mass or more and 40% by mass or less:

$$BS = (\text{mass of polymer block (A)}/\text{mass of block copolymer (P)}) \times 100 \quad (I).$$

[7] The block copolymer (P) according to any one of [1] to [6], wherein the polymer block (B) is a polymer block (C) comprising a vinyl aromatic monomer unit and a conjugated diene monomer unit, and
a mass proportion (RS) of the vinyl aromatic monomer unit in the polymer block (C) calculated by the following expression (II) is 3% by mass or more and less than 50% by mass:

$$RS = (TS - BS)/(100 - BS) \times 100 \quad (II)$$

wherein TS represents a mass proportion of the vinyl aromatic monomer unit in the block copolymer (P), and BS represents a mass proportion of the polymer block (A) in the block copolymer (P).
[8] The block copolymer (P) according to any one of [1] to [7], wherein a weight average molecular weight is 50,000 or more and 500,000 or less.
[9] The block copolymer (P) according to any one of [1] to [8], wherein the block copolymer (P) comprises an amino group and/or an alkoxysilyl group as the functional group.
[10] The block copolymer (P) according to [9], wherein the block copolymer (P) comprises a structure in which a polymer chain is attached to a structure represented by either the following general formula (1) or (2):

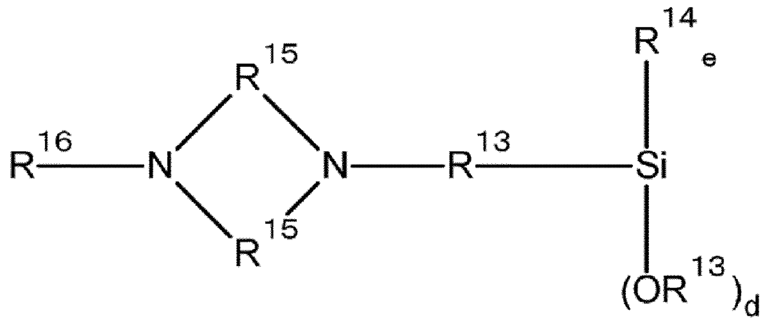

(1)

wherein $R^{13}$ is a hydrocarbon group having 1 to 12 carbon atoms and optionally has an unsaturated bond; a plurality of $R^{13}$ are each optionally different or the same; $R^{14}$ is a hydrocarbon group having 1 to 20 carbon atoms that is optionally substituted with an organic group including Si, O, or N and having no active hydrogen, and optionally has an unsaturated bond;
d is an integer of 2 to 3, and e is an integer of 0 to 1; d + e = 3;
$R^{15}$ is an aliphatic hydrocarbon group having 1 to 6 carbon atoms and optionally has an unsaturated bond; a plurality of $R^{15}$ are each optionally different or the same; and
$R^{16}$ is a hydrocarbon group having 1 to 20 carbon atoms that is optionally substituted with an organic group including Si, O, or N and having no active hydrogen, and optionally has an unsaturated bond;

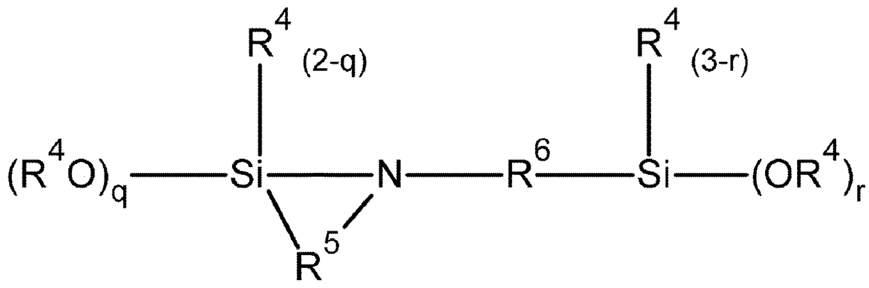

( 2 )

wherein $R^4$ is an alkyl group having 1 to 20 carbon atoms or an aryl group having 6 to 20 carbon atoms; a plurality of $R^4$ are each optionally different or the same; $R^5$ represents an alkylene group having 1 to 10 carbon atoms, and $R^6$ represents an alkylene group having 1 to 20 carbon atoms; and q represents an integer of 1 or 2, r represents an integer of 2 or 3, and the sum of q and r is an integer of 4 or more.

[11] The block copolymer (P) according to any one of [1] to [10], wherein when 4 parts by mass of the block copolymer (P) and 96 parts by mass of an asphalt in which in composition analysis of the asphalt according to a TLC-FID JPI method (JPI-5S-70), based on 100% by mass in total of a saturate, an aromatic, a resin, and an asphaltene, a total amount of the resin and the asphaltene is 30% by mass or more, are mixed, a separability according to ASTM D5976 is 5°C or less.
[12] The block copolymer (P) according to any one of [1] to [11], wherein a hydrogenation rate of a double bond in the conjugated diene monomer unit is 95 mol% or less.
[13] The block copolymer (P) according to any one of [1] to [12], wherein a hydrogenation rate of a double bond in the conjugated diene monomer unit is 10 mol% or more.
[14] The block copolymer (P) according to any one of [1] to [13], wherein

a nitrogen content is 20 ppm or more and 1000 ppm or less,
a silicon content is 50 ppm or more and 300 ppm or less,
a mass proportion (TS) of the vinyl aromatic monomer unit is 30% by mass or more and 60% by mass or less,
a hydrogenation rate of a double bond in the conjugated diene monomer unit is 10 mol% or more and 80 mol% or less,
the polymer block (B) is a polymer block (C) comprising a vinyl aromatic monomer unit and a conjugated diene monomer unit, and
a mass proportion (RS) of the vinyl aromatic monomer unit in the polymer block (C) calculated by the following expression (II):

$$RS = (TS - BS)/(100 - BS) \times 100 \quad (II)$$

is 15% by mass or more and 45% by mass or less.

[15] The block copolymer (P) according to any one of [1] to [14], wherein

a nitrogen content is 20 ppm or more and 1000 ppm or less,
a mass proportion (TS) of the vinyl aromatic monomer unit is 30% by mass or more and 60% by mass or less,
a hydrogenation rate of a double bond in the conjugated diene monomer unit is 10 mol% or more and 40 mol% or less,
the polymer block (B) is a polymer block (C) comprising a vinyl aromatic monomer unit and a conjugated diene monomer unit, and
a mass proportion (RS) of the vinyl aromatic monomer unit in the polymer block (C) calculated by the following expression (II):

$$RS = (TS - BS)/(100 - BS) \times 100 \quad (II)$$

is 15% by mass or more and 45% by mass or less.

[16] An asphalt composition comprising:

100 parts by mass of an asphalt; and
0.5 parts by mass or more and 30 parts by mass or less of the block copolymer (P) according to any one of [1] to [15] .

[17] An asphalt composition comprising:

100 parts by mass of an asphalt; and
0.5 parts by mass or more and 30 parts by mass or less of the block copolymer (P) according to any one of [1] to [15], wherein
in composition analysis of the asphalt according to a TLC-FID JPI method (JPI-5S-70), based on 100% by mass in total of a saturate, an aromatic, a resin, and an asphaltene, a total amount of the resin and the asphaltene is 30% by mass or more.

[18] The asphalt composition according to [16] or [17], wherein

the asphalt composition comprises 0.01 to 10 parts by mass of a crosslinking agent
based on 100 parts by mass of the asphalt.

[19] The asphalt composition according to any one of [16] to [18], wherein the asphalt composition comprises 0.05 to 10 parts by mass of an additive comprising sulfur and silicon based on 100 parts by mass of the asphalt.
[20] A modified asphalt mixture comprising:

3 parts by mass or more and 15 parts by mass or less of the asphalt composition according to any one of [16] to [19]; and
100 parts by mass of an aggregate.

Advantages of Invention

According to the present invention, it is possible to provide a block copolymer that, when added to an asphalt, can yield an asphalt composition excellent in high softening point properties, low melt viscosity, and heat resistance stability, to provide an asphalt composition excellent in high softening point properties, low melt viscosity, and heat resistance stability, and further to provide a modified asphalt mixture that uses the asphalt composition and is excellent in dynamic stability and water resistance.

Mode for Carrying Out Invention

Hereinafter, an embodiment for carrying out the present invention (hereinafter, referred to as "the present embodiment") will be described in detail.
The present invention is not limited to the following embodiment, and can be carried out by being modified in various ways within the scope of the gist thereof.
As used herein, the "monomer unit" refers to a constitutional unit constituting a block copolymer, and the "monomer" refers to a material constituting a block copolymer.
In addition, as used herein, "mainly composed of" means that the content of a predetermined monomer unit in the polymer block (A) or the polymer block (B) is 50% by mass or more.
The polymer block (A) mainly composed of a vinyl aromatic monomer unit may have a vinyl aromatic monomer unit content of 50% by mass or more, preferably 70% by mass or more, more preferably 90% by mass or more, and further preferably 100% by mass.
The polymer block (B) mainly composed of a conjugated diene monomer unit may have a conjugated diene monomer unit content of 50% by mass or more, preferably 70% by mass or more, more preferably 90% by mass or more, and further preferably 100% by mass.
As used herein, "high softening point properties" refers to the nature of the softening point of the asphalt composition being high.

"Heat resistance stability" refers to the nature of the properties of the asphalt composition being high, for example when stored under high temperature conditions
(for example, 160 to 180°C) for a long period of time (for example, about one week).

"Elongation recovery" refers to the nature of the asphalt composition returning to the shape before stretching after stretched.
"Low melt viscosity" refers to the nature of the melt viscosity of the asphalt composition being low.
"Low temperature elongation properties" refers to the nature of the elongation of the asphalt composition at a low temperature (for example, 0 to 15°C) being high. It is considered that when a road is paved with an asphalt mixture in which the asphalt composition has the performance property of being easily elongated at a low temperature, the asphalt mixture is effective in suppressing a crack.
"Dynamic stability" refers to the nature of deformation being unlikely to occur when a stress is applied to a modified asphalt mixture obtained by mixing an asphalt composition with an aggregate.
"Water resistance" refers to the nature of stripping being unlikely to occur when a stress is applied in water to a modified asphalt mixture obtained by mixing an asphalt composition with an aggregate.
"Compatibility" refers to compatibility between an asphalt and the block copolymer (P) of the present embodiment.

[Block copolymer (P)]

The block copolymer (P) of the present embodiment is a hydrogenated product of a block copolymer containing a polymer block (A) mainly composed of a vinyl aromatic monomer unit and a polymer block (B) mainly composed of a conjugated diene monomer unit and satisfies the following conditions (1) and (2).

Condition (1): a 5% by mass toluene solution viscosity at 25°C is 5 mPa·s or more and 45 mPa·s or less.
Condition (2): the block copolymer (P) contains a functional group.

By using the block copolymer (P) having the above constitution, an asphalt composition excellent in high softening point properties, low melt viscosity, heat resistance stability, and compatibility can be obtained.
The block copolymer of the present embodiment is preferably for asphalt modification.

(Polymer block (A))

The polymer block (A) contained in the block copolymer (P) of the present embodiment is a polymer block mainly composed of a vinyl aromatic monomer unit.
Examples of the vinyl aromatic monomer used to form a vinyl aromatic monomer unit include, but are not limited to, a vinyl aromatic monomer such as styrene, α-methylstyrene, p-methylstyrene, divinylbenzene, 1,1-diphenylethylene, N,N-dimethyl-p-aminoethylstyrene, or N,N-diethyl-p-aminoethylstyrene. Among these, styrene is preferable from the viewpoint of easy production. The vinyl aromatic monomer can be used singly or in combinations of two or more thereof.
The mass proportion (BS) of the polymer block (A) in the block copolymer (P) of the present embodiment is preferably 10% by mass or more and 40% by mass or less based on the total amount of the block copolymer (P).
The mass proportion (BS) of the polymer block (A) is preferably 10% by mass or more, more preferably 13% by mass or more, further preferably 15% by mass or more, and further more preferably 18% by mass or more, from the viewpoint of far superior elongation recovery and compatibility of the asphalt composition. On the other hand, the mass proportion (BS) of the polymer block (A) is preferably 40% by mass or less, more preferably 35% by mass or less, further preferably 30% by mass or less, and further more preferably 25% by mass or less, from the viewpoint of excellent low temperature elongation properties of the asphalt composition.
In addition, when the mass proportion (BS) of the polymer block (A) mainly composed of a vinyl aromatic monomer unit having a high glass transition point is high, the deformation of the block copolymer (P) at a high temperature tends to be small, and the softening point of the asphalt composition tends to improve. On the other hand, the block copolymer (P) having a high mass proportion of the polymer block (A) has a high glass transition point and low flexibility at a low temperature, and thus it is considered that the asphalt composition tends to have poor low temperature elongation properties. Accordingly, from the viewpoint of property balance, the mass proportion (BS) is preferably 10% by mass or more and 40% by mass or less based on the total amount of the block copolymer (P).
The mass proportion (BS) of the polymer block (A) in the block copolymer (P) of the present embodiment can be determined by the following expression (I), using the mass of the vinyl aromatic polymer block component (provide that the vinyl aromatic polymer block component having an average degree of polymerization of about 30 or less is excluded) determined, for example, by a method for oxidatively degrading a polymer with tertiary butyl hydroperoxide using osmium tetroxide as a catalyst (the method disclosed in I.M. KOLTHOFF, et. al, J. Polym. Sci. 1, p.429 (1946)).

$$\text{Mass proportion (BS)(\% by mass) of polymer block (A)} = (\text{mass of polymer block (A) component} / \text{mass of block copolymer(P)}) \times 100 \quad \text{(I)}$$

The mass proportion (BS) of the polymer block (A) can be controlled in the above numerical range by adjusting the amount of the vinyl aromatic monomer added, the addition timing thereof, and the polymerization time in the polymerization step of the block copolymer (P).

(Polymer block (B))

The block copolymer (P) of the present embodiment includes a polymer block (B) mainly composed of a conjugated diene monomer unit.

Examples of the conjugated diene monomer used to form a conjugated diene monomer unit include, but are not limited to, a conjugated diene monomer such as 1,3-butadiene, 2-methyl-1,3-butadiene (isoprene), 2,3-dimethyl-1,3-butadiene, 1,3-pentadiene, 2-methyl-1,3-pentadiene, 1,3-hexadiene, or 1,3-cyclohexadiene. Among these, 1,3-butadiene and isoprene are preferable, and 1,3-butadiene is more preferable, from the viewpoints of being able to yield a block copolymer excellent in mechanical strength and being low in cost.

The conjugated diene monomers can be used singly or in combinations of two or more thereof.

The conjugated diene monomer unit in the block copolymer (P) of the present embodiment consists of, for example, a conjugated diene monomer unit derived from a 1,2-bond and/or a 3,4-bond, and a conjugated diene monomer unit derived from a 1,4-bond.

As used herein, the "conjugated diene monomer unit derived from a 1,2-bond and/or a 3,4-bond" refers to a unit per conjugated diene monomer produced as a result of polymerization of the conjugated diene monomer in a 1,2-bond and/or a 3,4-bond. In addition, the "conjugated diene monomer unit derived from a 1,4-bond" refers to a unit per conjugated diene monomer produced as a result of polymerization of the conjugated diene monomer in a 1,4-bond.

The content of the conjugated diene monomer unit derived from a 1,2-bond and/or a 3,4-bond relative to the total content of the conjugated diene monomer unit in the block copolymer (P) of the present embodiment, that is, the vinyl bond content derived from the conjugated diene monomer (hereinafter, also referred to as the "vinyl bond content") is preferably 9% by mass or more and 50% by mass or less.

The vinyl bond content of the block copolymer (P) of the present embodiment is preferably 50% by mass or less, more preferably 45% by mass or less, further preferably 40% by mass or less, and further more preferably 35% by mass or less, from the viewpoint of making the elongation recovery of the asphalt composition far superior.

On the other hand, the vinyl bond content of the block copolymer (P) of the present embodiment is preferably 9% by mass or more, more preferably 10% by mass or more, further preferably 11% by mass or more, and further more preferably 12% by mass or more, from the viewpoint of being able to easily produce the same by a general polymerization method and from the viewpoint of superior low temperature elongation properties of the asphalt composition. The vinyl bond content of the block copolymer (P) can be measured by NMR, and can specifically be measured by the method described in Examples described later.

A conjugated diene monomer unit derived from a 1,2-bond and/or a 3,4-bond tends to be more easily crosslinked and degraded by heat than a vinyl aromatic monomer unit and a conjugated diene monomer unit derived from a 1,4-bond. Because of this, by appropriately setting the upper limit of the vinyl bond content, a block copolymer (P) having better heat resistance stability tends to be able to be obtained.

That is, from the viewpoint of the heat resistance stability of the block copolymer (P), it is preferable to set the hydrogenation rate higher than the vinyl bond content. A vinyl bond is more likely to undergo a hydrogenation reaction than an ethylene chain derived from a 1,4-bond, and thus the vinyl bond portion preferentially turns into a single bond during the hydrogenation reaction. Because of this, when the hydrogenation rate is set to exceed the vinyl bond content, more of the ethylene chain portions remains as double bonds, and less of the vinyl bonds remain, which tends to increase the thermal stability of the block copolymer (P).

The vinyl bond content can be controlled in the above numerical range by adjusting the temperature during the polymerization of the block copolymer (P) and the amount of a polar additive added. Specifically, when the temperature during polymerization is high, the vinyl bond content tends to be low, and when the temperature during polymerization is low, the vinyl bond content tends to be high, whereas when the amount of a polar additive added is large, the vinyl bond content tends to be high, and when the amount of a polar additive added is small or no polar additive is added, the vinyl bond content tends to be low.

In addition, when the vinyl bond content is higher than the hydrogenation rate, the difference therebetween is preferably 10 mol% or less.

In the block copolymer (P) of the present embodiment, when the polymer block (B) is a polymer block (C) containing the vinyl aromatic monomer unit and the conjugated diene monomer unit, the mass proportion (RS) of the vinyl aromatic monomer unit in the polymer block (C) calculated by the following expression (II) is preferably 3% by mass or more and less than 50% by mass.

In the following expression (II), TS is the mass proportion of the vinyl aromatic monomer unit in the block copolymer (P), and BS is the mass proportion of the polymer block (A) in the block copolymer (P).

$$RS = (TS - BS)/(100 - BS) \times 100 \ldots (II)$$

The mass proportion (RS) of the vinyl aromatic monomer unit is preferably 3% by mass or more, more preferably 6% by mass or more, further preferably 10% by mass or more, and further more preferably 15% by mass or more, from the viewpoint of excellent compatibility with the asphalt.

In addition, the mass proportion (RS) of the vinyl aromatic monomer unit is less than 50% by mass, preferably less than 45% by mass, more preferably less than 40% by mass, and further preferably less than 35% by mass, from the viewpoint of far superior low temperature elongation properties of the asphalt composition.

When the mass proportion (RS) of the vinyl aromatic monomer unit in the polymer block (C) is high, the content of a vinyl aromatic monomer unit having a high glass transition point in the block copolymer (P) increases, and thus the deformation at a high temperature tends to be small, and the softening point tends to improve. In addition, the interaction with the aromatic component and the polar component of the asphalt tends to increase, and the compatibility with the asphalt tends to improve.

That is, when the (RS) is high, the compatibility with the asphalt tends to improve, but the low temperature flexibility tends to worsen. On the other hand, the glass transition point tends to be high, and thus by appropriately setting the upper limit of the mass proportion (RS), the asphalt composition of the present embodiment can be designed to exhibit a certain degree of flexibility at a low temperature and the required low temperature elongation properties.

The mass proportion (RS) of the vinyl aromatic monomer unit in the polymer block (C) can be determined by subtracting the mass proportion (BS) of the polymer block (A) from the mass proportion (TS) of the vinyl aromatic monomer unit in the block copolymer (P) and dividing the resulting value (TS - BS) by the mass proportion (100 - BS) of the polymer block (C) to the block copolymer (P) as shown in the above expression (II) .

The mass proportion (RS) of the vinyl aromatic monomer unit in the polymer block (C) can be controlled in the above numerical range by adjusting the amount of the vinyl aromatic monomer added, the addition timing thereof, and the polymerization time in the polymerization step of the block copolymer (P).

The polymer block (B) is preferably a random block. Here, "random" refers to a state in which the number of consecutive vinyl aromatic monomer units in the polymer block (B) is 10 or less.

The lower limit value of the content of the short-chain vinyl aromatic monomer polymerized portion in the polymer block (B) in the block copolymer (P) of the present embodiment is not particularly limited, and is preferably 50% by mass or more, more preferably 60% by mass or more, further preferably 70% by mass or more, and further more preferably 80% by mass or more, based on a total content of the vinyl aromatic monomer unit in the polymer block (B) of 100% by mass. In addition, the upper limit value of the content of the short-chain vinyl aromatic monomer polymerized portion in the polymer block (B) is not particularly limited, and is preferably 100% by mass or less, and more preferably 99% by mass or less, based on a total content of the vinyl aromatic monomer unit in the polymer block (B) of 100% by mass. When the content of the short-chain vinyl aromatic monomer polymerized portion in the polymer block (B) is within the above range, the low temperature elongation properties of the asphalt composition of the present embodiment tend to even further improve.

Here, the "short-chain vinyl aromatic monomer polymerized portion" refers to a component composed of 1 to 6 vinyl aromatic monomer units in the polymer block (B). The content of the short-chain vinyl aromatic monomer polymerized portion is determined as the content of 1 to 6 vinyl aromatic monomer units connected in the polymer block (B), based on a total content of the vinyl aromatic monomer units in the polymer block (B) of 100% by mass.

The content of a component composed of two connected vinyl aromatic monomer units is preferably 10% by mass or more and 45% by mass or less, more preferably 13% by mass or more and 42% by mass or less, and further preferably 19% by mass or more and 36% by mass or less, based on a total content of the vinyl aromatic monomer units in the polymer block (B) of 100% by mass. When the content of the component composed of two connected vinyl aromatic monomer units is within the above range, the low temperature elongation properties of the asphalt composition of the present embodiment tend to even further improve.

Further, the content of a component composed of three connected vinyl aromatic monomer units is preferably 45% by mass or more and 80% by mass or less, more preferably 45% by mass or more and 75% by mass or less, and further preferably 45% by mass or more and 65% by mass or less, based on a total content of the vinyl aromatic monomer units in the polymer block (B) of 100% by mass. When the content of the component composed of three connected vinyl aromatic monomer units is within the above range, the low temperature elongation properties of the asphalt composition of the present embodiment tend to even further improve.

In the polymer block (B) mainly composed of a conjugated diene monomer unit and the polymer block (C) containing the conjugated diene monomer unit and the vinyl aromatic monomer unit as one form thereof, when the first region to the sixth region are set so as to have the same mass in order from the polymerization initiation terminal side, and the vinyl content (vinyl bond content) before hydrogenation of the first region to the sixth region is V1 to V6, respectively, the distribution of the vinyl content (vinyl bond content) is not particularly limited and may be constant, or may be

tapered, convex, or concave.

By adding a polar compound during the polymerization or controlling the polymerization temperature, the vinyl distribution can be controlled to be tapered, convex, or concave.

The tapered distribution refers to a distribution that satisfies V6 > V5 > V4 > V3 > V2 > V1 or V6 < V5 < V4 < V3 < V2 < V1. The convex distribution means a distribution in which V6 and V1 are smaller than V5 and V2, and V5 and V2 are smaller than V4 and V3. The concave distribution means a distribution in which V6 and V1 are larger than V5 and V2, and V5 and V2 are larger than V4 and V3.

(Content of vinyl aromatic monomer unit in block copolymer (P))

The mass proportion (TS) of the vinyl aromatic monomer unit in the block copolymer (P) of the present embodiment is preferably 20% by mass or more and 60% by mass or less based on the total amount of the block copolymer (P).

The mass proportion (TS) of the vinyl aromatic monomer unit in the block copolymer (P) of the present embodiment is preferably 20% by mass or more, more preferably 24% by mass or more, further preferably 26% by mass or more, and further more preferably 28% by mass or more, from the viewpoint of far superior compatibility with the asphalt. On the other hand, the mass proportion (TS) of the vinyl aromatic monomer unit in the block copolymer (P) of the present embodiment is preferably 60% by mass or less, more preferably 56% by mass or less, further preferably 52% by mass or less, and further more preferably 48% by mass or less, from the viewpoint of the asphalt composition that uses the block copolymer (P) of the present embodiment having excellent low melt viscosity, low temperature elongation properties, and elongation recovery.

The mass proportion (TS) of the vinyl aromatic monomer unit can be measured by the method described in Examples described later.

The mass proportion (TS) of the vinyl aromatic monomer unit in the block copolymer (P) can be controlled in the above numerical range by adjusting the amount of the vinyl aromatic monomer added and the polymerization time in the polymerization step of the block copolymer (P) .

The distributions of the vinyl aromatic monomer unit in the polymer block (A) mainly composed of a vinyl aromatic monomer unit, in the polymer block (B) mainly composed of a conjugated diene monomer unit, and in the polymer block (C) containing the vinyl aromatic monomer unit and the conjugated diene monomer unit are not particularly limited, and may be uniform, or may be tapered, stepped, convex, or concave.

A crystal portion may be present in the polymer blocks (A), (B), and (C). A plurality of segments different in content of the vinyl aromatic monomer unit may coexist in the polymer block (A) mainly composed of a vinyl aromatic monomer unit.

(Structure of block copolymer (P))

The block copolymer (P) of the present embodiment preferably contains at least one block copolymer selected from the group consisting of the following expressions (i) to (xiv).

A-B ... (i)

$(A\text{-}B)_{n+1}$ ... (ii)

$B\text{-}(A\text{-}B)_{n+1}$ ... (iii)

$A\text{-}(B\text{-}A)_n$ ... (iv)

$A\text{-}(B\text{-}A)_n\text{-}X$ ... (v)

$[(A\text{-}B)_k]_m\text{-}X$ ... (vi)

$[(A\text{-}B)_k\text{-}A]_m\text{-}X$ ... (vii)

A-C ... (viii)

$(A\text{-}C)_{n+1}$ ... (ix)

$C\text{-}(A\text{-}C)_{n+1}$ ... (x)

$A-(C-A)_n$ ... (xi)

$A-(C-A)_n-X$ ... (xii)

$[(A-C)_k]_m-X$ ... (xiii)

$[(A-C)_k-A]_m-X$ ... (xiv)

In the above expressions (i) to (xiv), A represents the polymer block (A), B represents the polymer block (B), and C represents the polymer block (C). X represents a residue of a coupling agent or a residue of a polymerization initiator such as a polyfunctional organolithium. m is an integer of 2 to 6, and n and k are each independently an integer of 1 to 4.

The values of m, n, and k in expressions (i) to (xiv) are optionally the same or different.

When a plurality of A, B, and C are present in the block copolymer, structures such as the molecular weight and the composition of each are optionally the same or different.

In the above expressions (v) to (vii) and (xii) to (xiv), X represents a residue of a coupling agent or a residue of a polymerization initiator such as a polyfunctional organolithium. X is preferably a residue of a coupling agent from the viewpoint of controlling the molecular weight of the copolymer block.

The block copolymer (P) of the present embodiment preferably contains a block copolymer (D) having a structure containing two or more polymer blocks (A) in a mass proportion of 50% by mass or more and 100% by mass or less.

The mass proportion of the block copolymer (D) in the block copolymer (P) of the present embodiment is preferably 50% by mass or more, more preferably 55% by mass or more, further preferably 60% by mass or more, more further preferably 65% by mass or more, and further more preferably 70% by mass or more, from the viewpoints of excellent low temperature elongation properties of the asphalt composition of the present embodiment and far superior dynamic stability of the modified asphalt mixture. When two polymer blocks (A) are contained, the number of crosslinking points in the entire block copolymer (D) tends to increase, and the entire block copolymer (P) including the block copolymer (D) tends to exhibit rubber elasticity. It is considered that as a result, the low temperature elongation properties related to expansion and contraction and the dynamic stability related to repeated deformation recovery of a tire are improved.

The mass proportion of the block copolymer (D) having a structure containing two or more polymer blocks (A) can be determined by the method described in Examples described later.

The content of the block copolymer (D) having a structure containing two or more polymer blocks (A) can be controlled in the above numerical range by adjusting the method for adding a monomer in the polymerization step of the block copolymer (P) of the present embodiment depending on the structure of the block copolymer, specifically, the structures shown in the above (i) to (xiv), and in addition thereto, adjusting the amount of a coupling agent added, and appropriately selectively using a polymerization initiator such as a polyfunctional organolithium or adjusting the amount thereof added.

Examples of the coupling agent include the coupling agents exemplified in the section of Method for producing block copolymer described later.

The boundaries and the utmost ends of the polymer blocks (A), (B), and (C) do not necessarily need to be clearly distinguished.

Examples of the polymerization initiator and the terminator include the polymerization initiators and the terminators exemplified in the section of Method for producing block copolymer described later.

(Hydrogenation rate)

In the block copolymer (P) of the present embodiment, the hydrogenation rate of the double bond included in the conjugated diene monomer is preferably 10 mol% or more, more preferably 20 mol% or more, and further preferably 30 mol% or more, from the viewpoint of the high softening point properties, the heat resistance stability, and the compatibility of the asphalt composition.

In addition, in the block copolymer (P) of the present embodiment, the hydrogenation rate of the double bond included in the conjugated diene monomer is preferably 95 mol% or less, more preferably 90 mol% or less, further preferably 85 mol% or less, and further more preferably 80 mol%, from the viewpoint of the low temperature elongation properties, the low melt viscosity, and the economic efficiency of the asphalt composition.

Examples of the hydrogenation method include the method described later.

The hydrogenation rate of the double bond included in the conjugated diene monomer of the block copolymer (P) can be controlled in the above numerical range by adjusting a condition such as the amount of hydrogen supplied, the temperature, or the pressure in the hydrogenation step.

After hydrogenation, the proportion of the total mass of conjugated diene monomer units incorporated via a

non-hydrogenated 1,2-bond, a hydrogenated 1,2-bond, a non-hydrogenated 3,4-bond, and a hydrogenated 3,4-bond to the total mass of conjugated diene monomer units incorporated in bonding modes of a non-hydrogenated 1,2-bond, a hydrogenated 1,2-bond, a non-hydrogenated 3,4-bond, a hydrogenated 3,4-bond, a non-hydrogenated 1,4-bond, and a hydrogenated 1,4-bond is equal to the vinyl bond content of the conjugated diene monomer units before hydrogenation. Therefore, the vinyl bond content of the conjugated diene monomer units before hydrogenation can be measured by nuclear magnetic resonance spectroscopy (NMR) using the block copolymer after hydrogenation, and can specifically be measured by the method described in Examples described later.

(Constitution of block copolymer (P))

The block copolymer (P) of the present embodiment preferably includes the following block copolymer (a) (component (a)) and block copolymer (b) (component (b)) from the viewpoints of the dynamic stability of the block copolymer in the modified asphalt mixture and the water resistance of the modified asphalt mixture.
Block copolymer (a): A block copolymer that consists of the polymer block (A), the polymer block (B) (excluding the structure of the polymer block (C)), and the polymer block (C) and has a peak molecular weight of 50,000 or more and less than 160,000.
Block copolymer (b): A block copolymer that is a component which consists of the polymer block (A), the polymer block (B) (excluding the structure of the polymer block (C)), and the polymer block (C) and in which the ratio of the peak molecular weight thereof to the peak molecular weight of the component (a) has at least one or more peaks in the range of 1.5 or more and less than 4.3.
The block copolymer (a) is a low molecular weight component, and the block copolymer (b) is a high molecular weight component.
In addition, in the block copolymer (P) of the present embodiment, the mass ratio ((a)/(b)) between component (a) and component (b) is preferably 10/90 to 50/50, more preferably 10/90 to 40/60, and further preferably 15/85 to 40/60.
By increasing the mass ratio of the block copolymer (a), which is a low molecular weight component, the low melt viscosity of the asphalt composition is improved, but the high softening point properties and the dynamic stability tend to be decreased. On the other hand, by increasing the mass ratio of the block copolymer (b), which is a high molecular weight component, the low melt viscosity of the asphalt composition is decreased, but the high softening point properties and the dynamic stability tend to be improved.
The peak molecular weight of the block copolymer of the component (a) is 50,000 or more and less than 160,000, and from the viewpoints of the low temperature elongation properties of the asphalt composition and the dynamic stability of the modified asphalt mixture, the peak molecular weight is 50,000 or more, preferably 60,000 or more, more preferably 80,000 or more, and further preferably 90,000 or more. The peak molecular weight of the block copolymer of the component (a) is less than 160,000, preferably 150,000 or less, more preferably 140,000 or less, and further preferably 130,000 or less, from the viewpoints of the processability when producing the block copolymer and the processability when producing the modified asphalt mixture.
The block copolymer (b) (component (b)) preferably contains the following component (b-1) and/or component (b-2) .
Component (b-1): A block copolymer that is a component in which the ratio of the peak molecular weight thereof to the peak molecular weight of the component (a) has at least one or more peaks in the range of 1.5 or more and less than 2.5.
Component (b-2): A block copolymer that is a component in which the ratio of the peak molecular weight thereof to the peak molecular weight of the component (a) has at least one or more peaks in the range of 2.5 or more and less than 4.3.
The block copolymer (b) preferably includes the block copolymer (b-1) described above. The ratio of the peak molecular weight of the block copolymer (b-1) to the peak molecular weight of the block copolymer (a) is 1.5 or more and less than 2.5, preferably 1.6 or more and less than 2.4, more preferably 1.7 or more and less than 2.3, and further preferably 1.8 or more and less than 2.2.
The ratio of the component (b-1) to the total amount of the component (a) and the component (b) is preferably 0% or more and 40% or less. The lower limit of the ratio of component (b-1) is preferably 0% or more, more preferably 2% or more, further preferably 4% or more, and further more preferably 6% or more, from the viewpoint of the dynamic stability of the modified asphalt mixture. The upper limit of the ratio of component (b-1) is preferably 40% or less, more preferably 35% or less, further preferably 30% or less, and further more preferably 25% or less, from the viewpoint of the low melt viscosity of the asphalt composition.
The ratio of the component (b-1) can be calculated as the ratio of the area of component (b-1) to the total area of a polymer composition consisting of the block copolymer (a) and the block copolymer (b) in an elution curve of gel permeation chromatography (hereinafter also referred to as "GPC") of the block copolymer.
The block copolymer (b) preferably includes the block copolymer (b-2). The ratio of the peak molecular weight

of the block copolymer (b-2) to the peak molecular weight of the block copolymer (a) is 2.5 or more and less than 4.3, preferably 2.5 or more and less than 4.1, more preferably 2.6 or more and less than 3.9, and further preferably 2.6 or more and less than 3.6.

The ratio of the component (b-2) to the total amount of the component (a) and the component (b) is preferably 20% or more and 90% or less. The lower limit of the ratio of component (b-2) is preferably 20% or more, more preferably 25% or more, further preferably 30% or more, and further more preferably 35% or more, from the viewpoint of the dynamic stability of the modified asphalt mixture. The upper limit of the ratio of component (b-2) is preferably 90% or less, more preferably 85% or less, further preferably 80% or less, and further more preferably 75% or less, from the viewpoint of the processability of the asphalt composition.

The ratio of the component (b-2) can be calculated as the ratio of the area of component (b-2) to the total area of a polymer composition consisting of the block copolymer (a) and the block copolymer (b) in an elution curve of GPC of the block copolymer.

The peak molecular weight ratios of component (b-1) and component (b-2) to component (a), and the area ratios of component (b-1) and component (b-2) in the GPC elution curve can be controlled within the above ranges by adjusting the conditions of the coupling reaction described later, specifically, the type of coupling agent, the amount thereof added, the temperature, and the time.

The ratios and the peak molecular weights of component (a), component (b-1), and component (b-2) included in the block copolymer (P) of the present embodiment can be measured by the method described in Examples described later.

The block copolymer (P) of the present embodiment contains a functional group as in condition (2) from the viewpoints of excellent compatibility with the asphalt and excellent dynamic stability and water resistance of the modified asphalt mixture, and preferably contains a functional group containing a nitrogen atom (hereinafter sometimes referred to as a nitrogen-containing group).

Examples of the nitrogen-containing group include, but are not limited to, at least one functional group selected from the group consisting of an amino group, an amide group, an imino group, an imide group, a urea group, a urethane group, an isocyanate group, an amidine group, a guanidine group, and a carbodiimide group.

Any of these functional groups is preferably added to the block copolymer (P) of the present embodiment, and examples of the addition method include, but are not limited to, a method involving using a monomer having any of these functional group as a monomer constituting the block copolymer (P), and a method involving bonding a monomer unit constituting the block copolymer, and a residue of a polymerization initiator, coupling agent, or terminator having any of these functional groups.

The nitrogen content of the block copolymer (P) of the present embodiment is preferably 20 ppm or more and 1000 ppm or less. The nitrogen content is preferably 20 ppm or more, more preferably 40 ppm or more, further preferably 60 ppm or more, further more preferably 80 ppm or more, and more further preferably 100 ppm or more, from the viewpoint of superior dynamic stability and water resistance of the modified asphalt mixture of the present embodiment. On the other hand, from the viewpoint of economic efficiency, the nitrogen content is preferably 1000 ppm or less, more preferably 800 ppm or less, further preferably 700 ppm or less, and further more preferably 600 ppm or less.

The nitrogen content of the block copolymer (P) of the present embodiment can be determined by the method described in Examples described later.

The nitrogen content of the block copolymer (P) of the present embodiment can be controlled in the above numerical range by adjusting the amounts of the polymerization initiator, monomer, coupling agent, and polymerization terminator having a nitrogen-containing group added in the polymerization step. The polymerization initiator, monomer, coupling agent, and polymerization terminator having a nitrogen-containing group are not particularly limited, and examples thereof include a polymerization initiator, a monomer, a coupling agent, and a polymerization terminator described later.

When the block copolymer (P) of the present embodiment contains a nitrogen-containing group, the compatibility with the asphalt tends to improve, and the dynamic stability and water resistance of the modified asphalt mixture tend to improve.

It is considered that the interaction such as a hydrogen bond between the nitrogen-containing group contained in the block copolymer (P) of the present embodiment and a polar group in a component contained in the asphalt contributes to the improvement of compatibility. In addition, it is considered that the dynamic stability and water resistance of the modified asphalt mixture are improved by the interaction such as a hydrogen bond between the nitrogen-containing group contained in the block copolymer (P) and a silanol group on the surface of the aggregate contained in the modified asphalt mixture.

The block copolymer (P) of the present embodiment preferably contains a functional group containing a silicon atom from the viewpoints of excellent compatibility with the asphalt and excellent dynamic stability and water resistance of the modified asphalt mixture. Examples of the functional group containing a silicon atom include, but are not limited to, at least one functional group selected from the group consisting of a silanol group, an alkoxysilyl group, a carbylsilyl

group, and a siloxane group.

Any of these functional groups is preferably added to the block copolymer (P) of the present embodiment, and examples of the addition method include, but are not limited to, a method involving using a monomer having any of these functional group as a monomer constituting the block copolymer, and a method involving bonding a monomer unit constituting the block copolymer, and a residue of a polymerization initiator, coupling agent, or terminator having any of these functional groups.

The block copolymer (P) of the present embodiment preferably has a silicon content of 50 ppm or more and 300 ppm or less. From the viewpoint of superior compatibility with the asphalt and superior dynamic stability and water resistance of the modified asphalt mixture, the silicon content is preferably 50 ppm or more, more preferably 60 ppm or more, further preferably 80 ppm or more, and further more preferably 100 ppm or more. On the other hand, from the viewpoint of economic efficiency, the silicon content is preferably 300 ppm or less, more preferably 270 ppm or less, further more preferably 240 ppm or less, and more further preferably 200 ppm or less.

The silicon content of the block copolymer (P) can be determined by the method described in Examples described later.

The silicon content of the block copolymer (P) of the present embodiment can be controlled in the above numerical range by adjusting the amount of the coupling agent having a silicon-containing group added in the polymerization step. The coupling agent having a silicon-containing group is not particularly limited, and examples thereof include a coupling agent described later.

The block copolymer (P) of the present embodiment more preferably contains a functional group containing a silicon atom (hereinafter sometimes referred to as a silicon-containing group). When the block copolymer (P) of the present embodiment contains the nitrogen-containing group and the silicon-containing group, the dynamic stability and the water resistance of the modified asphalt mixture tend to further improve. It is considered that when a silanol group on the surface of the aggregate included in the modified asphalt mixture and the silicon-containing group of the block copolymer (P) form a covalent bond, the dynamic stability and the water resistance improve.

As the silicon-containing group, one in which only carbon is attached to silicon and one in which only nitrogen is attached to silicon cannot react with the silanol group on the surface of the aggregate at the silicon moiety. From this viewpoint, a substituent that functions as a leaving group in reaction with the silanol group on the surface of the aggregate is preferably bonded to silicon, and examples of a preferable substituent include a halogen group, an alkoxyl group, an aryl group, and a hydroxyl group.

Examples of the functional group containing a silicon atom include, but are not limited to, those having structures represented by the following (Formula 1) to (Formula 12).

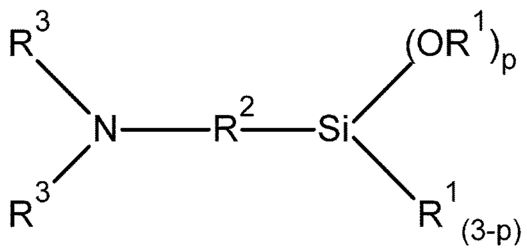

(Formula 1)

In the (Formula 1), $R^1$ is an alkyl group having 1 to 10 carbon atoms. A plurality of $R^1$ are present and are each optionally the same or different. $R^2$ is an alkylene group having 3 to 5 carbon atoms, and $R^3$ is an alkyl group having 1 to 4 carbon atoms. A plurality of $R^3$ are present and are each optionally the same or different. p represents an integer of 1 to 3.

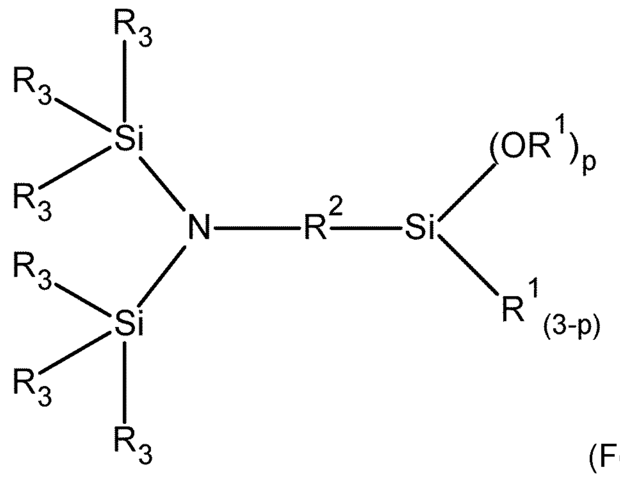

(Formula 2)

In the (Formula 2), $R^1$ is an alkyl group having 1 to 3 carbon atoms. A plurality of $R^1$ are present and are each optionally the same or different. $R^2$ is an alkyl group having 3 to 5 carbon atoms, and $R^3$ is an alkyl group having 1 to 4 carbon atoms. A plurality of $R^3$ are present and are each optionally the same or different. p represents an integer of 1 to 3.

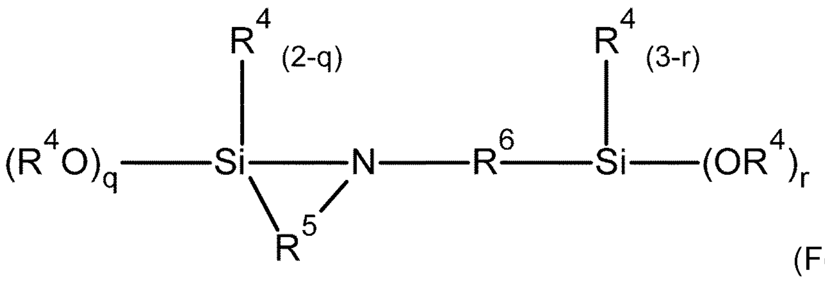

(Formula 3)

In the (Formula 3), $R^4$ is an alkyl group having 1 to 20 carbon atoms or an aryl group having 6 to 20 carbon atoms. A plurality of $R^4$ are present and are each optionally the same or different. $R^5$ represents an alkylene group having 1 to 10 carbon atoms, $R^6$ represents an alkylene group having 1 to 20 carbon atoms, q represents an integer of 1 or 2, r represents an integer of 2 or 3, and the sum of q and r is an integer of 4 or more.

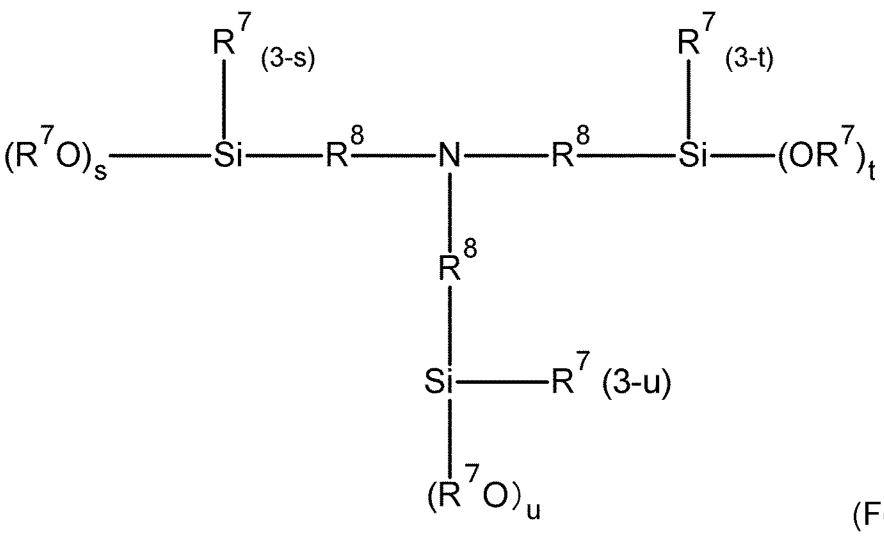

(Formula 4)

In the (Formula 4), $R^7$ is an alkyl group having 1 to 20 carbon atoms or an aryl group having 6 to 20 carbon atoms. A plurality of $R^7$ are present and are each optionally the same or different. $R^8$ is an alkylene group having 1 to 20 carbon atoms. A plurality of $R^8$ are present and are each optionally the same or different. s, t, and u each independently represent an integer of 1 to 3, and the sum of s, t, and u is an integer of 4 or more.

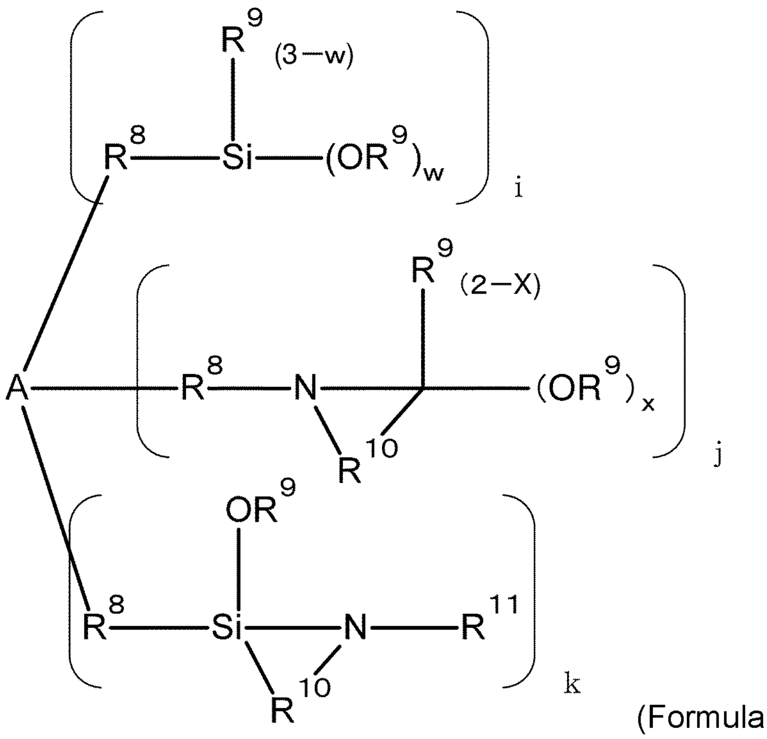

(Formula 5)

In the (Formula 5), A represents a hydrocarbon group having 1 to 20 carbon atoms, or an organic group having at least one atom selected from the group consisting of an oxygen atom, a nitrogen atom, a silicon atom, a sulfur atom, and a phosphorus atom and having no active hydrogen. $R^8$ represents a single bond or an alkylene group having 1 to 20 carbon atoms. A plurality of $R^8$ are present and are each optionally the same or different. $R^9$ represents an alkyl group having 1 to 20 carbon atoms. A plurality of $R^9$ are present and are each optionally the same or different. $R^{10}$ represents an alkylene group having 1 to 20 carbon atoms. A plurality of $R^{10}$ are present and are each optionally the same or different. Each $R^{11}$ independently represents an alkyl group having 1 to 20 carbon atoms or a trialkylsilyl group. Each w independently represents an integer of 1 to 3, each x independently represents 1 or 2, i represents an integer of 0 to 6, j represents an integer of 0 to 6, k represents an integer of 0 to 6, and the sum of i, j, and k is an integer of 4 to 10.

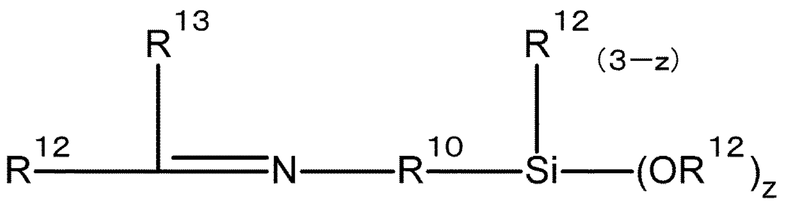

(Formula 6)

In the (Formula 6), $R^{10}$ represents an alkylene group having 1 to 20 carbon atoms. $R^{12}$ represents an alkyl group having 1 to 20 carbon atoms or an aryl group having 6 to 20 carbon atoms. A plurality of $R^{12}$ are present and are each optionally the same or different. $R^{13}$ represents a hydrogen atom or a hydrocarbon group having 1 to 20 carbon atoms. z represents an integer of 1 to 3.

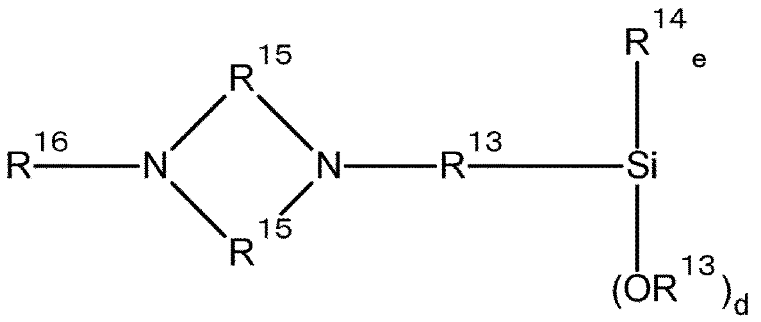

(Formula 7)

In the (Formula 7), $R^{13}$ is a hydrocarbon group having 1 to 12 carbon atoms and optionally has an unsaturated bond, and a plurality of $R^{13}$ are present and are each optionally the same or different. $R^{14}$ is a hydrocarbon group having 1 to 20 carbon atoms that is optionally substituted with an organic group including Si, O, or N and having no active hydrogen, and optionally has an unsaturated bond.

d is an integer of 2 to 3, and e is an integer of 0 to 1. d + e = 3.
$R^{15}$ is an aliphatic hydrocarbon group having 1 to 6 carbon atoms and optionally has an unsaturated bond, and a plurality of $R^{15}$ are present and are each optionally the same or different. $R^{16}$ has a hydrocarbon group and is a hydrocarbon group having 1 to 20 carbon atoms that is optionally substituted with an organic group including Si, O, or N and having no active hydrogen, and optionally has an unsaturated bond.

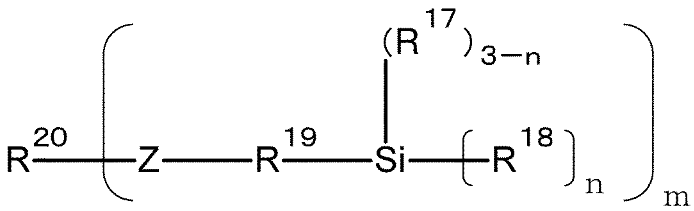

(Formula 8)

In the (Formula 8), $R^{17}$ is a hydrocarbyl group having 1 to 20 carbon atoms. $R^{18}$ is a hydrocarbyloxy group having 1 to 20 carbon atoms, or a modified or unmodified branched conjugated diene polymer. $R^{19}$ is an alkanediyl group having 1 to 20 carbon atoms. Z is a group represented by the following formula (C) or formula (D).

$*\text{-C}(R^{31})\text{=N-}$ Formula (C)

$*\text{-N=C}(R^{31})\text{-}$ Formula (D)

In Formulas (C) and (D), * indicates a point of attachment to $R^{20}$.
$R^{20}$ is an m-valent hydrocarbyl group having 1 to 20 carbon atoms, or an m-valent group having 1 to 20 carbon atoms that has at least one atom selected from the group consisting of a nitrogen atom, an oxygen atom, and a sulfur atom and has no active hydrogen. n is an integer of 1 to 3, and m is an integer of 2 to 10.

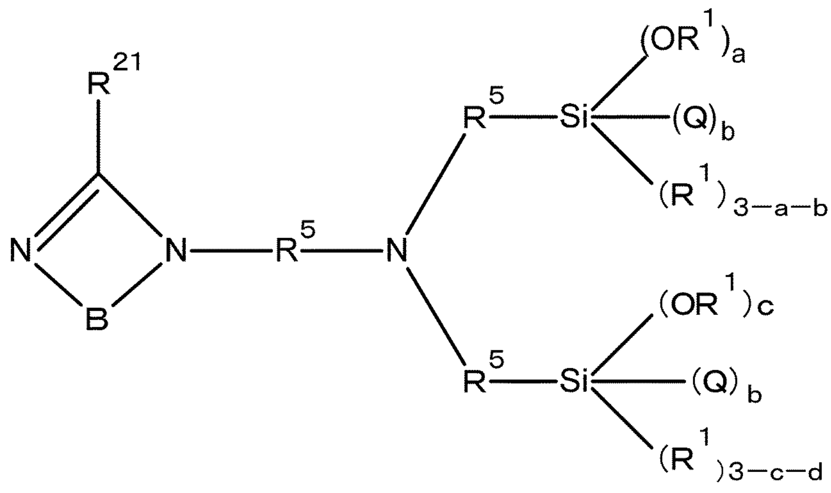

(Formula 9)

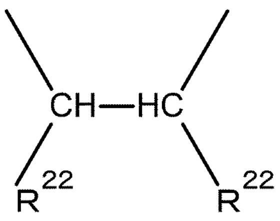

[Formula a]

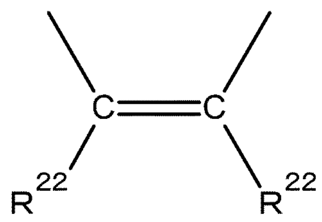

[Formula b]

In the (Formula 9), each $R^5$ is independently an alkylene group having 1 to 10 carbon atoms. $R^1$ is an alkyl group having 1 to 10 carbon atoms. A plurality of $R^1$ are present and are each optionally the same or different. $R^{21}$ is hydrogen or each independently an alkyl group having 1 to 10 carbon atoms. Q is a conjugated diene polymer chain, and a and c are each independently 0, 1, or 2. b and d are each independently 1, 2, or 3, and a + b and c + d are each independently 1, 2, or 3. B is [Formula a] or [Formula b]. Each $R^{22}$ is independently hydrogen or an alkyl group having 1 to 10 carbon atoms. A plurality of $R^{22}$ are present and are each optionally the same or different.

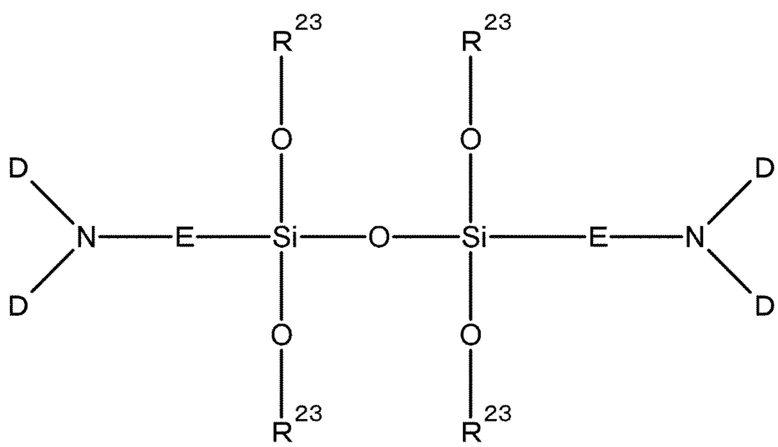

(Formula 10)

In the (Formula 10), E is a divalent hydrocarbon group having 1 to 20 carbon atoms including or not including an oxygen atom. A plurality of E are present and are each optionally the same or different. Each D is independently a monovalent hydrocarbon group having 1 to 20 carbon atoms. A plurality of D are present and are each optionally the same or different. $R^{23}$ is a divalent, trivalent, or tetravalent alkylsilyl group substituted with an alkyl group having 1 to 10 carbon atoms, or a monovalent hydrocarbon group having 1 to 20 carbon atoms, a plurality of $R^{23}$ are optionally linked to each other to form a ring having 1 to 5 carbon atoms, and when these are linked to form a ring, the formed ring optionally includes 1 to 3 heteroatoms of one or more types of selected from the group consisting of N, O, and S. A

plurality of $R^{23}$ are present and are each optionally the same or different.

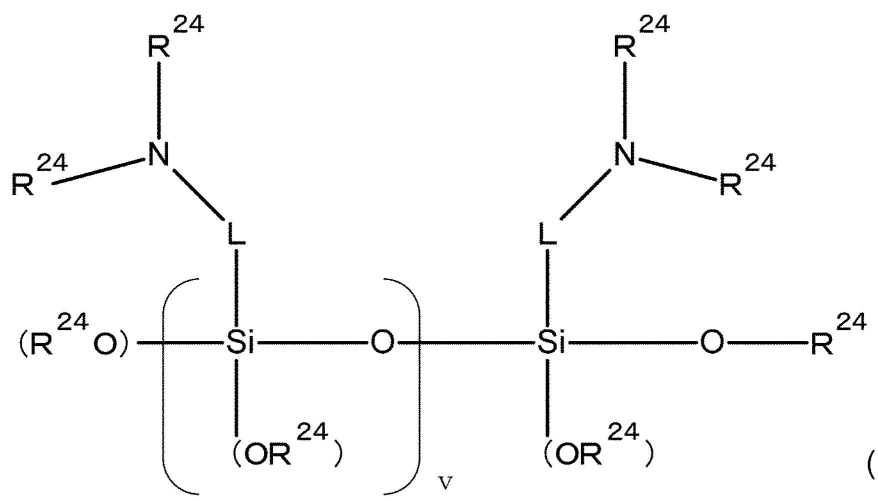

(Formula 11)

In the (Formula 11), each $R^{24}$ is independently an alkyl group having 1 to 20 carbon atoms. A plurality of $R^{24}$ are present and are each optionally the same or different. L is an alkylene group having 1 to 20 carbon atoms. v is an integer of 2 to 4. A plurality of L are present and are each optionally the same or different.

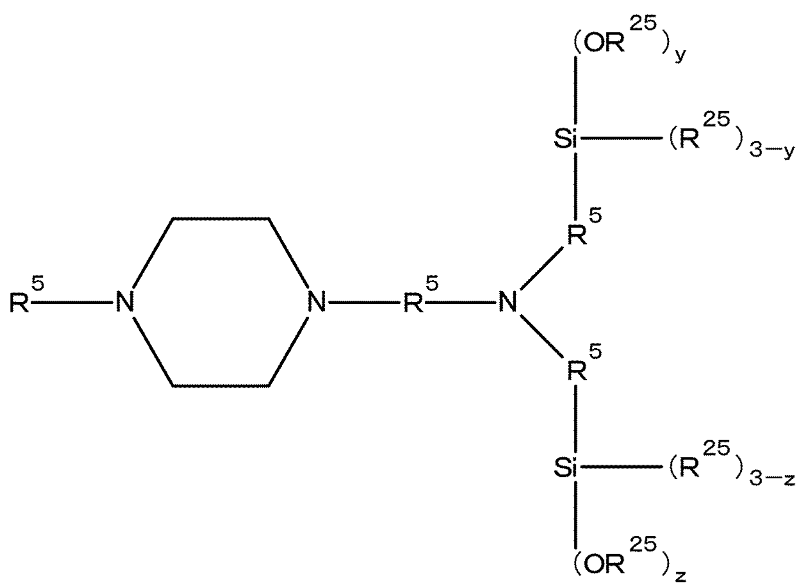

(Formula 12)

In the (Formula 12), $R^5$ represents an alkylene group having 1 to 20 carbon atoms. A plurality of $R^5$ are present and are each optionally the same or different.

$R^{25}$ represents an alkyl group having 1 to 20 carbon atoms or an aryl group having 6 to 20 carbon atoms, y and z are each independently an integer of 1 to 3. A plurality of $R^{25}$ are present and are each optionally the same or different.

The number of nitrogen atoms in the functional group of the block copolymer (P) of the present embodiment is preferably 1 or more, more preferably 2 or more, and further preferably 3 or more, from the viewpoints of the compatibility with the asphalt and the dynamic stability and the water resistance of the modified asphalt mixture.

The type of an alkoxysilyl group in the functional group of the block copolymer (P) of the present embodiment is not particularly limited, and a methoxy group and an ethoxy group are preferable from the viewpoint of the reactivity with the block copolymer.

(Physical properties of block copolymer)

<Loss tangent peak top and peak temperature>

The block copolymer (P) of the present embodiment has a peak top (peak height) of loss tangent (tanδ) in the range of -90°C or more and -20°C or less in a spectrum of dynamic viscoelasticity, and the value of the peak top (peak height) is preferably 0.6 or more and 2.0 or less. When the peak top (peak height) is within the above range, the compatibility with an asphalt tends to be excellent, and the low temperature elongation properties of the asphalt composition tend to be excellent.

From the viewpoints of making the compatibility with the asphalt excellent and improving the high softening point properties and the low temperature elongation properties of the asphalt composition in an even more balanced manner, the value of the peak top (peak height) of the block copolymer (P) of the present embodiment is more preferably 0.65 or more and 1.6 or less, further preferably 0.7 or more and 1.5 or less, and further more preferably 0.75 or more and 1.4 or less.

The value of the peak top (peak height) can be controlled in the above range by adjusting the distribution of the vinyl bond content of the polymer block (B) (excluding the form of the polymer block (C); hereinafter, the same applies) and the polymer block (C) in the block copolymer (P) of the present embodiment and the content of the short-chain vinyl aromatic monomer polymerized portion in the polymer block (B) and the polymer block (C).

For example, if the distribution of the vinyl bond content of the polymer block (B) and the polymer block (C) is constant, the peak top (peak height) tends to be high, and if the distribution of the vinyl bond content of the polymer block (B) and the polymer block (C) is tapered, convex, or concave, the peak top (peak height) tends to be low, whereas if the content of the short-chain vinyl aromatic monomer polymerized portion is high, the peak top (peak height) tends to be high and if the content of the short-chain vinyl aromatic monomer polymerized portion is low, the peak top (peak height) tends to be low.

In addition, from the viewpoint of excellent low temperature elongation properties of the asphalt composition, the block copolymer (P) of the present embodiment has a range of the peak temperature of the loss tangent (tanδ) of preferably -90°C or more and -5°C or less, more preferably -87°C or more and -8°C or less, further preferably -85°C or more and -12°C or less, and further more preferably -83°C or more and -15°C or less.

The peak height and the peak temperature of the loss tangent (tanδ) can be determined by the method described in Examples described later.

The peak temperature of the loss tangent (tanδ) can be adjusted in such a way as to have a peak top (peak height) of the loss tangent (tanδ) in the range of -90°C or more and -5°C or less, for example by controlling the ratio of the content of the vinyl aromatic monomer unit and the content of the conjugated diene monomer unit in the polymer block (B) and the polymer block (C), the microstructure of the conjugated diene monomer unit, and the like.

For example, when the ratio of the vinyl aromatic monomer unit in the polymer block (B) and the polymer block (C) is increased, the peak top of the loss tangent (tanδ) tends to be on the high temperature side, and when the ratio of the vinyl aromatic monomer unit is decreased, the peak top of the loss tangent (tanδ) tends to be on the low temperature side, whereas when the vinyl bond content of the polymer block (B) and (C) is increased, the peak top of the loss tangent (tanδ) tends to be on the high temperature side, and when the vinyl bond content is decreased, the peak top of the loss tangent (tanδ) tends to be on the low temperature side.

<5% by mass toluene solution viscosity>

The block copolymer (P) of the present embodiment has a 5% by mass toluene solution viscosity at 25°C of 5 mPa·s or more and 45 mPa·s or less (condition (1)).

The 5% by mass toluene solution viscosity at 25°C of the block copolymer (P) of the present embodiment is 5 mPa·s or more, preferably 6 mPa·s or more, more preferably 7 mPa·s or more, and further preferably 8 mPa·s or more, from the viewpoint of far superior high softening point properties and low temperature elongation properties of the asphalt composition. On the other hand, the 5% by mass toluene solution viscosity at 25°C of the block copolymer (P) of the present embodiment is 45 mPa·s or less, preferably 40 mPa·s or less, more preferably 35 mPa·s or less, further preferably 30 mPa·s or less, and further more preferably 25 mPa·s or less, from the viewpoint of excellent low melt viscosity of the asphalt composition.

In the present embodiment, the 5% by mass toluene solution viscosity can be determined by the method described in Examples described later.

The 5% by mass toluene solution viscosity at 25°C of the block copolymer (P) of the present embodiment can be controlled in the above numerical range by adjusting the molecular weight and the molecular weight distribution of the block copolymer (P). For example, when the weight average molecular weight of the block copolymer (P) is 200,000, the mass proportion (TS) of the vinyl aromatic monomer unit is 30% by mass, the mass proportion (BS) of the polymer

block (A) is 30% by mass, and the hydrogenation rate is 20%, a 5% by mass toluene solution viscosity at 25°C is about 10 to 20 mPa·s. By setting the weight average molecular weight to 250,000 with the same structure, the 5% by mass toluene solution viscosity at 25°C is about 18 to 28 mPa·s. In addition, the toluene solution viscosity can also be controlled by adjusting the hydrogenation rate of the block copolymer (P). For example, by increasing the hydrogenation rate of the block copolymer (P), the 5% by mass toluene solution viscosity tends to be increased. The weight average molecular weight of the block copolymer (P) can be controlled by adjusting the amounts of the monomer and the polymerization initiator added in the polymerization step, the molecular weight distribution of the block copolymer (P) can be controlled by appropriately selectively using a coupling agent and a polymerization initiator such as a polyfunctional organolithium or adjusting the amounts thereof added, and the hydrogenation rate can be controlled by adjusting the amount of the hydrogenation catalyst and the amount of hydrogen supplied.

<Weight average molecular weight>

The weight average molecular weight of the block copolymer (P) of the present embodiment is preferably 50,000 or more and 500,000 or less.

The weight average molecular weight is preferably 50,000 or more, more preferably 80,000 or more, further preferably 100,000 or more, and further more preferably 120,000 or more, from the viewpoints of the high softening point properties of the asphalt composition and the dynamic stability of the modified asphalt mixture. In addition, the weight average molecular weight is preferably 500,000 or less, more preferably 460,000 or less, further preferably 420,000 or less, and further more preferably 380,000 or less, from the viewpoint of the low melt viscosity of the asphalt composition.

The weight average molecular weight of the block copolymer (P) can be controlled in the above numerical range by adjusting a polymerization condition.

<Molecular weight distribution>

The lower limit value of the molecular weight distribution (Mw/Mn) (the ratio of the weight average molecular weight (Mw) to the number average molecular weight (Mn)) of the block copolymer (P) of the present embodiment is preferably 1.03 or more, more preferably 1.05 or more, further preferably 1.11 or more, and further more preferably 1.20 or more, from the viewpoints of reducing the amount of the block copolymer (P) added to the asphalt and making the processability of the asphalt composition far superior.

In addition, the upper limit value of the molecular weight distribution (Mw/Mn) of the block copolymer (P) is preferably 2.0 or less, more preferably 1.7 or less, further preferably 1.5 or less, and further more preferably 1.4 or less, from the viewpoints of making the asphalt composition excellent in producibility and reducing the amount of the block copolymer (P) added to the asphalt.

The weight average molecular weight (Mw), number average molecular weight (Mn), and molecular weight distribution (Mw/Mn) of the block copolymer (P) of the present embodiment can be determined by the methods described in Examples described later.

<Separability according to ASTM D5976>

In the block copolymer (P) of the present embodiment, when 4 parts by mass of the block copolymer (P) and 96 parts by mass of an asphalt in which in composition analysis of the asphalt according to a TLC-FID JPI method (JPI-5S-70), based on 100% by mass in total of a saturate, an aromatic, a resin, and an asphaltene, a total amount of the resin and the asphaltene is 30% by mass or more, are mixed, the separability according to ASTM D5976 is preferably 5°C or less.

By having the above property, the effect of improving the high temperature storage stability and the elongation recovery of the asphalt composition can be obtained.

The separability according to ASTM D5976 is more preferably 4°C or less, and further preferably 3°C or less.

The separability according to ASTM D5976 can be controlled to 5°C or less by controlling the hydrogenation rate, TS, BS, RS and the molecular weight of the block copolymer (P).

[Asphalt composition]

A first aspect of the asphalt composition of the present embodiment includes the block copolymer (P) of the present embodiment described above and an asphalt.

The asphalt composition of the present embodiment preferably contains 0.5 parts by mass or more and 30 parts by mass or less of the block copolymer (P) based on 100 parts by mass of the asphalt, from the viewpoints of high softening point properties, excellent dynamic stability, high elongation recovery, low melt viscosity, and compatibility.

The asphalt composition contains more preferably 1 part by mass or more and 20 parts by mass or less, further preferably 1.5 parts by mass or more and 16 parts by mass or less, and further more preferably 2 parts by mass or more and 12 parts by mass or less of the block copolymer (P).

A second aspect of the asphalt composition of the present embodiment includes the block copolymer (P) of the present embodiment described above and an asphalt, and further, in the asphalt, in composition analysis of the asphalt according to a TLC-FID JPI method (JPI-5S-70), based on 100% by mass in total of a saturate, an aromatic, a resin, and an asphaltene, the total amount of the resin and the asphaltene is 30% by mass or more.

The asphalt composition of the present embodiment preferably contains 0.5 parts by mass or more and 30 parts by mass or less of the block copolymer (P) based on 100 parts by mass of the asphalt, from the viewpoints of high softening point properties, excellent dynamic stability, high elongation recovery, low melt viscosity, and compatibility. The asphalt composition contains more preferably 1 part by mass or more and 24 parts by mass or less, further preferably 1.5 parts by mass or more and 20 parts by mass or less, and further more preferably 2 parts by mass or more and 16 parts by mass or less of the block copolymer (P).

(Asphalt)

The asphalt composition of the present embodiment contains an asphalt.

Examples of the asphalt include, but are not limited to, a by-product of petroleum refining (petroleum asphalt), an asphalt obtained as a natural product (natural asphalt), or a mixture obtained by mixing any of these asphalts and a petroleum.

The asphalt contains bitumen as the main component.

Examples of the asphalt include, but are not limited to, straight asphalt, semi-blown asphalt, blown asphalt, solvent deasphalt asphalt, tar, pitch, cutback asphalt to which an oil is added, and asphalt emulsion.

Among these, the asphalt is preferably straight asphalt from the viewpoint of availability.

These may be used singly or as a mixture of two or more thereof.

In addition, a petroleum solvent extracted oil, an aroma hydrocarbon process oil, or an aromatic heavy mineral oil such as extract may be added to various asphalts.

The asphalt has a penetration (measured according to JIS-K2207) of preferably 30 or more and 300 or less, more preferably 50 or more and 250 or less, and further preferably 60 or more and 200 or less.

When the penetration of asphalt is within the above range, the asphalt composition of the present embodiment tends to be excellent in balance of high softening point properties, low melt viscosity, low temperature elongation properties, dynamic stability, compatibility, and heat resistance stability.

In addition, as the asphalt, one in which when the total amount of a saturate, an aromatic, a resin, and an asphaltene in analysis by a measurement method according to a TLC-FID JPI method (JPI-5S-70) of the Japan Petroleum Institute Standard and Manuals Testing Method for Petroleum Products is 100% by mass, the total amount of the resin and the asphaltene is 30% by mass or more is preferably used. It is considered that it is difficult for the asphalt in the above range to be compatible by use of a styrene elastomer, which is a conventionally known asphalt modifier, and the asphalt in the above range can be made compatible by using the block copolymer (P) of the present embodiment, and an excellent asphalt modifying effect can be exerted.

Here, the saturate is a paraffinic or naphthenic oil having a molecular weight of 300 to 2000, the aromatic is an aromatic oil having a molecular weight of 500 to 2000, the resin is a condensed polycyclic aromatic resin having a molecular weight of 500 to 50,000 and containing a heteroatom, and the asphaltene is a condensed polycyclic aromatic having a molecular weight of 1000 to 100,000, having a layered structure, and containing a heteroatom.

It is considered that as the content of the resin and the asphaltene in the asphalt increases, with a styrene elastomer, which is a conventionally known asphalt modifier, the solubility parameter deviates, resulting in poor compatibility with the asphalt. On the other hand, it is considered that by introducing a functional group into the styrene elastomer, the interaction with the heteroatoms of the resin and the asphaltene works to improve the compatibility with the asphalt.

Then, in view of the large amount of nitrogen and oxygen as heteroatoms included in the resin and the asphaltene, it is considered that as functional group, a functional group containing nitrogen and/or silicon is preferably introduced into the styrene elastomer.

Conventionally, a colloidal index has been used as an index representing the composition of an asphalt. The colloidal index is a value obtained by dividing the total amount of the asphaltene and the saturate by the total amount of the aromatic and the resin, and the present inventors have considered that from the viewpoint of focusing on the function as a compatibilizer in a modified asphalt mixture of the block copolymer (P) of the present embodiment, it is preferable to focus on the proportion of the asphaltene and the resin rather than the asphaltene and the saturate represented by the colloidal index for design. That is, when the block copolymer (P) is set such that the 5% by mass toluene solution viscosity at 25°C is 5 mPa·s or more and 45 mP·s or less to ensure the ease of mixing during processing

and is then provided with a structure having a functional group in such a way as to satisfy a nitrogen concentration of 20 ppm or more and 1000 ppm or less and/or a silicon concentration of 50 ppm or more and 300 ppm or less, even if the content of the resin and the asphaltene in the asphalt is high, the effect of improving the affinity between the heteroatom or the aggregate in the modified asphalt mixture and the block copolymer (P) to facilitate the exertion of a compatibilizing action can be obtained.

The toluene solution viscosity of the block copolymer (P) reflects the structure of the block copolymer (P), and the higher the molecular weight, the hydrogenation rate, and the amount of the aromatic vinyl monomer unit of the block copolymer (P) and the lower the vinyl bond content, the higher the toluene solution viscosity tends to be. By adjusting the structure of the block copolymer (P) such that the 5% by mass toluene solution viscosity is in the range of 5 mPa·s or more and 45 mPa·s or less and also setting the concentration of nitrogen and/or silicon in a preferable range, the block copolymer (P) tends to be easily highly compatible even with an asphalt having a relatively high content of the resin and/or the asphaltene.

The block copolymer (P) can be expected to obtain superior compatibility by controlling the interaction with the saturate and the aromatic of the asphalt. Specific examples of the control include increasing the hydrogenation rate of the conjugated diene in the block copolymer (P) of the present embodiment, and adjusting the amount of the vinyl aromatic monomer unit according to the ratio of the aromatic of the asphalt, when the saturate of the asphalt is high. In particular, it is considered that it is important to set the mass proportion (RS) of the vinyl aromatic monomer unit in the polymer block (C) in the most suitable range. When the amount of the aromatic, the resin, and the asphaltene in the asphalt is large, it is preferable to increase RS. Thereby, the compatibility between the block copolymer (P) and the asphalt can be enhanced.

A first aspect of the block copolymer (P) having high compatibility with an asphalt having a high content of the resin and the asphaltene has, for example, the following constitution. That is, examples thereof include a block copolymer (P) wherein the nitrogen content is 20 ppm or more and 1000 ppm or less, the silicon content is 50 ppm or more and 300 ppm or less, the mass proportion (TS) of the vinyl aromatic monomer unit is 30% by mass or more and 60% by mass or less, the hydrogenation rate of the double bond in the conjugated diene monomer unit is 10 mol% or more and 80 mol% or less, the polymer block (B) is a polymer block (C) containing the vinyl aromatic monomer unit and the conjugated diene monomer unit, and the mass proportion (RS) of the vinyl aromatic monomer unit in the polymer block (C) calculated by the following expression (II) :

$$RS = (TS - BS)/(100 - BS) \times 100 \quad (II)$$

is 15% by mass or more and 45% by mass or less.

When the functional group introduced into the block copolymer (P) controls the structure in such a way as to satisfy a nitrogen concentration of 20 ppm or more and 1000 ppm or less and/or a silicon concentration of 50 ppm or more and 300 ppm or less in the block copolymer (P), the effect of increasing the interaction with the resin and the asphaltene of the asphalt having a heteroatom and improving the compatibility can be obtained. Further, it is effective to hydrogenate the block copolymer (P) in order to interact with the saturate; when the hydrogenation rate is 80 mol% or less, a certain amount of a double bond derived from the conjugated diene in the block copolymer (P) is present, and vulcanization between the asphalt portion and the conjugated diene moiety in the block copolymer (P) due to sulfur included in the asphalt occurs, and this tends to be able to ensure good compatibility.

In addition, when the mass proportion (RS) of the vinyl aromatic monomer unit in the polymer block (C) is 15% by mass or more and 45% by mass or less, a wide range of interaction with the saturate having low polarity to the resin and the asphaltene having high polarity tends to occur.

The block copolymer (P) of the first aspect described above is particularly excellent in compatibility with an asphalt in which the total content of the resin and the asphaltene is 30% by mass or more, and when the compatibility (separability) of the asphalt composition is measured according to ASTM-D5976 (a sample filling a tube is left in an oven at 163°C for 48 hours, then left in a freezer overnight, and taken out from the tube and divided into three equal parts, and the softening point difference between the upper part and the lower part of the sample is measured), the difference between the measured softening point values of the upper part and the lower part tends to be 3°C or less. Further, a modified asphalt mixture obtained by mixing an asphalt composition including the block copolymer (P) of the present embodiment and an aggregate tends to be excellent in rutting resistance and water resistance.

The silanol group on the surface of the aggregate and the functional group introduced into the block copolymer (P) interact with each other to provide a strong adhesive force, and the modified asphalt mixture tends to exhibit high physical properties.

A second aspect of the block copolymer (P) having high compatibility with an asphalt having a high content of the resin and the asphaltene has, for example, the following constitution.

That is, examples thereof include a block copolymer (P) wherein the nitrogen content is 20 ppm or more and

1000 ppm or less, the mass proportion (TS) of the vinyl aromatic monomer unit is 30% by mass or more and 60% by mass or less, the hydrogenation rate of the double bond in the conjugated diene monomer unit is 10 mol% or more and 40 mol% or less, the polymer block (B) is a polymer block (C) containing the vinyl aromatic monomer unit and the conjugated diene monomer unit, and the mass proportion (RS) of the vinyl aromatic monomer unit in the polymer block (C) calculated by the following expression (II) :

$$RS = (TS - BS)/(100 - BS) \times 100 \quad (II)$$

is 15% by mass or more and 45% by mass or less.

The block copolymer (P) of the second aspect has a lower effect of improving the compatibility with the resin and the asphaltene by the functional group than that of the first aspect, in that the silicon content is not a requirement. Because of this, the hydrogenation rate is set in a range that further enhances the interaction with an asphalt component.

When the hydrogenation rate of the block copolymer (P) is high, most of the double bonds in the conjugated diene portion are converted to single bonds, and thus the polarity is lowered, and the interaction with the resin and the asphaltene is weakened. Because of this, the hydrogenation rate is set to 40 mol% or less, which is lower than that in the first aspect described above.

The block copolymer (P) of the second aspect is also particularly excellent in compatibility with an asphalt having a total content of the resin and the asphaltene of 30% by mass or more, and when the compatibility (separability) of the asphalt composition is measured according to ASTM-D5976, the difference between the measured softening point values of the upper part and the lower part tends to be 3°C or less.

As described above, the asphalt composition of the present embodiment contains preferably 0.5 parts by mass or more and 30 parts by mass or less of the block copolymer (P) based on 100 parts by mass of the asphalt from the viewpoint of high softening point properties, excellent dynamic stability, high elongation recovery, low melt viscosity, and compatibility, and more preferably 2 parts by mass or more, further preferably 3 parts by mass or more, and further more preferably 3.5 parts by mass or more from the viewpoint of providing the asphalt composition with far superior high softening point properties. On the other hand, in the asphalt composition of the present embodiment, the content of the block copolymer (P) is more preferably 20 parts by mass or less, further preferably 16 parts by mass or less, and further more preferably 14 parts by mass or less based on 100 parts by mass of the asphalt, from the viewpoint of providing the asphalt composition with far superior low melt viscosity.

(Tackifier)

The asphalt composition of the present embodiment preferably includes a tackifier from the viewpoints of shortening the production time of the asphalt composition and making the compatibility and the aggregate stripping resistance performance of the asphalt composition far superior.

Examples of the tackifier include, but are not limited to, a rosin resin, a hydrogenated rosin resin, a terpene resin, a coumarone resin, a phenol resin, a terpene-phenol resin, an aromatic hydrocarbon resin, and an aliphatic hydrocarbon resin.

These tackifiers may be used singly or in combinations of two or more thereof.

As a more specific tackifier, the tackifier disclosed in "Compounding Ingredients for Rubber and Plastics" (edited by Rubber Digest) can be used. An aromatic hydrocarbon resin is preferable as the tackifier from the viewpoint of making the compatibility and the aggregate stripping resistance performance of the asphalt composition far superior.

The content of the tackifier in the asphalt composition of the present embodiment is preferably more than 0 parts by mass and 200 parts by mass or less, and more preferably 3 parts by mass or more and 100 parts by mass or less, based on 100 parts by mass of the above block copolymer (P). By setting the content in the above range, the compatibility and the aggregate stripping resistance performance of the asphalt composition tend to be far superior.

(Oil)

The asphalt composition of the present embodiment preferably includes an oil from the viewpoint of far superior low melt viscosity.

Examples of the oil include, but are not limited to, a mineral oil softener and a synthetic resin softener.

Examples of the mineral oil softener include, but are not limited to, a paraffin oil, a naphthene oil, and an aromatic oil. In general, an oil in which the carbon atoms of a paraffin hydrocarbon accounts for 50% or more of all carbon atoms included in the oil is referred to as a "paraffin oil," an oil in which the carbon atoms of a naphthene hydrocarbon accounts for 30% or more and 45% or less of all carbon atoms included in the oil is referred to as a "naphthene oil," and an oil in which an aromatic hydrocarbon accounts for 35% or more of all carbon atoms included in the oil is referred to as an

"aromatic oil."

When the asphalt composition of the present embodiment contains a mineral oil softener, the processability of the asphalt composition tends to even further improve. As the mineral oil softener, a paraffin oil is preferable from the viewpoint of far superior low melt viscosity and low-temperature performance of the asphalt composition, and a naphthene oil is preferable from the viewpoint of far superior low melt viscosity and compatibility of the asphalt composition.

In addition, examples of the synthetic resin softener include, but are not limited to, polybutene and low molecular weight polybutadiene, and polybutene and low molecular weight polybutadiene are preferable.

The content of the oil in the asphalt composition of the present embodiment is preferably 10 parts by mass or more and 50 parts by mass or less, more preferably 15 parts by mass or more and 40 parts by mass or less, and further preferably 20 parts by mass or more and 30 parts by mass or less based on 100 parts by mass of the above block copolymer (P), from the viewpoint of suppressing oil bleeding and being able to ensure sufficient mechanical strength in practical use of the asphalt composition.

(Foaming agent)

The asphalt composition of the present embodiment may contain a foaming agent from the viewpoints of far superior low melt viscosity and being able to further shorten the production time of the asphalt composition.

Examples of the foaming agent include, but are not limited to, sodium hydrogen carbonate, ammonium carbonate, diazoaminobenzene, N,N'-dinitrosopentamethylenetetramine, and 2,2'-azobis(isobutyronitrile).

These foaming agents may be used singly or in combinations of two or more thereof.

Among the above foaming agents, diazoaminobenzene, N,N'-dinitrosopentamethylenetetramine, and 2,2'-azobis(isobutyronitrile) are preferable from the viewpoint of superior compatibility.

The content of the foaming agent in the asphalt composition of the present embodiment is preferably 0.1% by mass or more, and more preferably 0.3% by mass or more, from the viewpoints of making the low melt viscosity of the asphalt composition far superior and being able to further shorten the production time of the asphalt composition. In addition, the proportion of the foaming agent to the whole asphalt composition of the present embodiment is preferably 3% by mass or less, more preferably 2% by mass or less, and further preferably 1% by mass or less from the viewpoint of excellent economic efficiency.

(Additive)

The asphalt composition of the present embodiment may include another additive generally used as a blending material for a thermoplastic resin or a rubbery polymer.

Examples of the another additive include an inorganic filler, a lubricant, a mold release agent, a plasticizer, a stabilizer such as an antioxidant, a flame retardant, an antistatic agent, a reinforcing agent such as an organic fiber, a glass fiber, a carbon fiber, or a metal whisker, a colorant, a pigment, a viscosity modifier, an antistripping agent, and a pigment dispersant.

The content of the another additive is not particularly limited, can be selected according to the type of the additive, and is usually 50 parts by mass or less based on 100 parts by mass of the asphalt.

Examples of the inorganic filler include, but are not limited to, calcium carbonate, magnesium carbonate, magnesium hydroxide, calcium sulfate, barium sulfate, silica, clay, talc, mica, wollastonite, montmorillonite, zeolite, alumina, titanium oxide, magnesium oxide, zinc oxide, slug wool, and glass fiber.

Examples of the lubricant and the mold release agent include, but are not limited to, a pigment such as carbon black or iron oxide, stearic acid, behenic acid, zinc stearate, calcium stearate, magnesium stearate, and ethylene bisstearamide.

Examples of the stabilizer include, but are not limited to, various stabilizers such as an antioxidant or a light stabilizer.

Examples of the antioxidant include, but are not limited to, a phenol antioxidant such as a radical scavenger, a phosphorus antioxidant such as a peroxide decomposer, and a sulfur antioxidant. In addition, an antioxidant having both the functions of the radical scavenger and the peroxide decomposer may be used.

These antioxidants may be used singly or in combinations of two or more thereof.

Among these antioxidants, a phenol antioxidant is preferable from the viewpoints of making the heat resistance stability (heat aging resistance) of the asphalt composition far superior and also being able to suppress gelation.

Examples of the antioxidant include, but are not limited to, a hindered phenol antioxidant such as 2,6-dit-butyl-4-methylphenol, n-octadecyl-3-(4'-hydroxy-3',5'-di-t-butylphenyl)propionate, 2,2'-methylenebis(4-methyl-6-t-butylphenol), 2,2'-methylenebis(4-ethyl-6-t-butylphenol), 2,4-bis[(octylthio)methyl]-o-cresol, 2-t-butyl-6-(3-t-butyl-2-hydroxy-5-methylbenzyl)-4-methylphenylacrylate, 2,4-di-t-amyl-6-[1-(3,5-di-t-amyl-2-hydroxyphenyl)ethyl]phenylacrylate, or 2-[1-(2-hydroxy-3,5-di-tert-pentylphenyl)]acrylate; a sulfur antioxidant such as dilaurylthiodipropionate, lauryl stearyl thiodipropionate, or pentaerythritol-tetrakis(β-laurylthiopropionate); and a phosphorus antioxidant such as tris(nonylphenyl)phosphite or tris(2,4-di-t-butylphenyl)phosphite.

Examples of the light stabilizer include, but are not limited to, a benzotriazole ultraviolet absorber such as 2-(2'-hydroxy-5'-methylphenyl)benzotriazole, 2-(2'-hydroxy-3',5'-t-butylphenyl)benzotriazole, or 2-(2'-hydroxy-3',5'-di-t-butylphenyl)-5-chlorobenzotriazole; a benzophenone ultraviolet absorber such as 2-hydroxy-4-methoxybenzophenone; and a hindered amine light stabilizer.

By including an antistripping agent in the asphalt composition of the present embodiment, when a modified asphalt mixture in which the asphalt composition and an aggregate are mixed is produced, stripping of the asphalt composition from the aggregate tends to be able to be even further prevented.

Examples of the antistripping agent include a resin acid, and a specific example thereof is a polycyclic diterpene having a carboxyl group and having 20 carbon atoms, and suitable examples thereof include a rosin containing at least one selected from the group consisting of abietic acid, dehydroabietic acid, neoabietic acid, pimaric acid, isopimaric acid, and palustric acid. In addition, a fatty acid or a fatty acid amide functions as an antistripping agent and a lubricant, and thus the fatty acid or fatty acid amide can be applied as an antistripping agent.

Further examples of the antistripping agent include a polyamide resin, a polyester resin; an amine compound such as tallow alkylpropylenediamine or tallow alkylpropylenetriamine; a quaternary ammonium salt such as monoalkylammonium chloride, dialkylammonium chloride, or ethylene oxide addition type ammonium chloride; tall oil fatty acid, stearyl phosphate; a general-purpose silane coupling agent such as vinyltrichlorosilane, vinyl-tris silane, vinyltriethoxysilane, vinyltrimethoxysilane, γ-(methacryloxypropyl)trimethoxysilane, γ-glycidoxypropyltrimethoxysilane, γ-aminopropyltriethoxysilane, or γ-mercaptopropyltrimethoxysilane; and an imidazoline compound.

(Silane coupling agent)

By including a silane coupling agent in the asphalt composition of the present embodiment, when the asphalt composition and an aggregate are mixed, stripping of the asphalt composition from the aggregate tends to be able to be even further prevented.

Examples of the silane coupling agent include, but are not limited to, one represented by the following formula.

$$((R^{26})_{n1}(X)_{n2})\text{-Si-}R^{27}\text{-S-}R^{28} \qquad \text{(Formula 13)}$$

In the (Formula 13), $R^{26}$ is a hydrocarbon group and optionally contains a heteroatom. X represents $-OR_2$ (wherein $R_2$ is a hydrocarbon) or a halogen atom. $R^{27}$ is a hydrocarbon group. S represents sulfur. $R^{28}$ represents hydrogen, a hydrocarbon group, or $Si\text{-}(R_5)(R_6)(R_7)$ (wherein $R_5$ to $R_7$ are each a hydrocarbon group). n1 is an integer of 0 to 2, n2 is an integer of 1 to 3, and n1 + n2 = 3.

From the viewpoint of the high softening point properties and the economic efficiency of the asphalt composition, $R^{27}$ is preferably $-(CH_2)_3-$, $R^{28}$ is preferably $(Me)_3$, and $((R^{26})_{n1}(X)_{n2})$ is preferably $((MeO)_3)$ or $((EtO)_3)$.

Me represents a methyl group, and Et represents an ethyl group.

$$((R^{29})_{n3}(X)_{n4})\text{-Si-}R^{30}\text{-}S_{n5}\text{-}R^{30}\text{-Si-}(((R^{29})_{n6}(X_{n7}) \qquad \text{(Formula 14)}$$

In the (Formula 14), $R^{29}$ is a hydrocarbon group and optionally contains a heteroatom. A plurality of $R^{29}$ are present and are each optionally the same or different. X represents $-OR_2$ (wherein $R_2$ is a hydrocarbon group) or a halogen atom. $R^{30}$ is a hydrocarbon group. A plurality of $R^{30}$ are present and are each optionally the same or different. S is sulfur. n3 and n4 are each independently an integer of 0 to 3, and n3 + n4 = 3. n5 is an integer of 1 or more, n6 and n7 are each independently an integer of 0 to 3, and n6 + n7 = 3. n4 + n7 is an integer of 1 or more.)

From the viewpoint of the high softening point properties and the economic efficiency of the asphalt composition, $R^{30}$ is preferably $-(CH_2)_3-$, $R^{29}$ is preferably $(Me)_3$, $((R^{29})_{n3}(X)_{n4})$ is preferably $((MeO)_3)$ or $((EtO)_3)$, and n5 is preferably an integer of 2 to 4.

Me represents a methyl group, and Et represents an ethyl group.

(Crosslinking agent)

The asphalt composition of the present embodiment can contain a crosslinking agent.

Examples of the crosslinking agent include, but are not limited to, sulfur, a sulfur compound, an inorganic vulcanizing agent other than sulfur, an oxime, a nitroso compound, polyamine, an organic peroxide, a resin crosslinking agent, an isocyanate compound, polyphosphoric acid, and a crosslinking coagent.

Sulfur, a sulfur compound, and polyphosphoric acid are preferable as the crosslinking agent from the viewpoint of far superior high softening point properties, compatibility, and heat resistance stability of the asphalt composition.

The asphalt composition of the present embodiment preferably contains 0.01 to 10 parts by mass of a crosslinking agent based on 100 parts by mass of the asphalt from the viewpoint of high softening point properties and excellent compatibility. The asphalt composition contains more preferably 0.05 to 8 parts by mass and further preferably 0.1 to 6 parts by mass of a crosslinking agent.

(Additive including sulfur and silicon)

The asphalt composition of the present embodiment preferably contains 0.05 to 10 parts by mass of an additive described above, particularly an additive including sulfur and silicon, based on 100 parts by mass of the asphalt, from the viewpoint of high softening point properties and compatibility. Examples of the additive including sulfur and silicon include bis(triethoxysilylpropyl)tetrasulfide (TESPT), bis(triethoxysilylpropyl)disulfide (TESPD), 3-thiocyanatopropyl triethoxy silane, 3-mercaptopropyldi(tridedcan-1-oxy-13-penta(ethylene-epoxide))ethoxy silane, and 3-triethoxysilyl-1-propyl thiooctanoate.

The content of such an additive is more preferably 0.1 to 9 parts by mass, and further preferably 0.2 to 8 parts by mass based on 100 parts by mass of the asphalt.

(Rubber component)

The asphalt composition of the present embodiment may contain a rubber component other than the block copolymer (P) of the present embodiment described above (hereinafter, also simply referred to as a "rubber component").

Examples of the rubber component other than the above block copolymer (P) include, but are not limited to, a natural rubber and a synthetic rubber.

The synthetic rubber is not particularly limited, and examples thereof include an olefin elastomer such as polyisoprene rubber, polybutadiene rubber (BR), styrene butadiene rubber (SBR), modified styrene butadiene rubber (modified SBR), styrene-butadiene-styrene block copolymer (SBS), styrene-ethylene-butylene-styrene block copolymer (SEES), styrene-butylene-butadiene-styrene copolymer (SBBS), or ethylene propylene copolymer (EPDM); chloroprene rubber, acrylic rubber, ethylene vinyl acetate copolymer (EVA), ethylene-ethyl acrylate copolymer (EEA), and nitrile butadiene rubber (NBR).

As the rubber component other than the block copolymer (P), from the viewpoint of far superior compatibility and aggregate stripping resistance performance of the asphalt composition, polyisoprene rubber, polybutadiene rubber, styrene butadiene rubber, a styrene-butadiene-styrene block copolymer, a styrene-ethylene-butylene-styrene block copolymer, a styrene-butylene-butadiene-styrene copolymer, and an ethylene vinyl acetate copolymer are preferable, and polybutadiene rubber and a styrene-butadiene-styrene block copolymer are more preferable.

The rubber component other than the block copolymer (P) may have a functional group. As the rubber component other than the block copolymer (P), an olefin elastomer and an olefin elastomer having a functional group are preferable from the viewpoint of far superior flow resistance of the asphalt composition of the present embodiment.

When the rubber component other than the block copolymer (P) contains a functional group, examples of the functional group include a hydroxyl group, an acid anhydride group, an epoxy group, an amino group, an amide group, an imino group, an imide group, a urea group, a urethane group, an isocyanate group, an amidine group, a guanidine group, a carbodiimide group, a carboxyl group, a carbonyl group, a silanol group, and an alkoxysilyl group, and the rubber component preferably contains at least one functional group selected from the group consisting of these. Such rubber components other than the block copolymer (P) can be used singly or in combinations of two or more thereof.

The content of the rubber component other than the block copolymer (P) in the asphalt composition of the present embodiment is preferably 0.5 parts by mass or more and 400 parts by mass or less, more preferably 0.5 parts by mass or more and 300 parts by mass or less, further preferably 1 part by mass or more and 200 parts by mass or less, and further more preferably 5 parts by mass or more and 150 parts by mass or less, based on 100 parts by mass of the block copolymer (P). When the content of the rubber component other than the block copolymer (P) is in the above range, the compatibility and the aggregate stripping resistance performance of the asphalt composition tend to be far superior.

(Resin component other than block copolymer (P))

The asphalt composition of the present embodiment may contain a resin component other than the block copolymer (P) of the present embodiment.

Examples of the resin component other than the block copolymer (P) of the present embodiment include, but are not limited to, a thermoplastic resin such as polyethylene (PE), low density polyethylene (low density PE), polypropylene (PP), polyvinyl chloride (PVC), polyamide (PA), polystyrene (PS), acrylic resin, polycarbonate (PC), polyethylene terephthalate (PET), polybutylene terephthalate (PBT), polyvinylidene fluoride (PVDF), Teflon (registered trademark)

(PTFE), polyether ether ketone (PEEK), polyphenylene ether (PPE), polyphenylene sulfide (PPS), polyimide (PI), or polyamideimide (PAI).

As the resin component other than the block copolymer (P) of the present embodiment, polyethylene (PE), low density polyethylene (low density PE), polyvinyl chloride (PVC), polyamide (PA), and polyethylene terephthalate (PET) are more preferable from the viewpoint of far superior compatibility and aggregate stripping resistance performance of the asphalt composition.

The resin component other than the block copolymer (P) of the present embodiment may have a functional group.

When the resin component other than the block copolymer of the present embodiment contains a functional group, preferable examples of the functional group include at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a carboxyl group, a carbonyl group, a silanol group, and an alkoxysilyl group.

Such resin components other than the block copolymer (P) may be used singly or in combinations of two or more thereof.

The content of the resin component other than the block copolymer (P) in the asphalt composition of the present embodiment is preferably 0.5 parts by mass or more and 400 parts by mass or less, more preferably 0.5 parts by mass or more and 300 parts by mass or less, further preferably 1 part by mass or more and 200 parts by mass or less, and further more preferably 5 parts by mass or more and 150 parts by mass or less, based on 100 parts by mass of the block copolymer (P).

When the content of the resin component other than the block copolymer (P) is in the above range, the compatibility and the aggregate stripping resistance performance of the asphalt composition of the present embodiment tend to even further improve.

The asphalt composition of the present embodiment may contain a polymer mainly composed of a vinyl aromatic monomer unit having a weight average molecular weight (Mw) of 5,000 or more and 30,000 or less (hereinafter, also referred to as a "low molecular weight vinyl aromatic polymer") as a resin component other than the block copolymer (P).

The low molecular weight vinyl aromatic polymer is preferably mainly composed of the vinyl aromatic monomer unit contained in the polymer block (A) constituting the block copolymer (P), and is more preferably mainly composed of a monomer unit derived from polystyrene.

The lower limit of the content of the low molecular weight vinyl aromatic polymer is preferably 0.5 parts by mass or more, more preferably 1.0 part by mass or more, further preferably 2.0 parts by mass or more, and further more preferably 3.0 parts by mass or more based on 100 parts by mass of the block copolymer (P) from the viewpoint of far superior low melt viscosity of the asphalt composition. In addition, the upper limit of the content of the low molecular weight vinyl aromatic polymer is preferably 5.0 parts by mass or less, more preferably 4.0 parts by mass or less, further preferably 3.0 parts by mass or less, and further more preferably 2.0 parts by mass or less based on 100 parts by mass of the block copolymer (P) from the viewpoint of far superior high softening point properties of the asphalt composition.

A commercially available low molecular weight vinyl aromatic polymer may be mixed with the block copolymer (P) of the present embodiment.

(Warm mix additive)

The asphalt composition of the present embodiment may contain a warm mix additive for the purpose of mixing, paving, and compacting the modified asphalt mixture described later at a temperature lower than usual.

Examples of the warm mix additive include, but are not limited to, beeswax, Japan wax, ozokerite, paraffin wax, microcrystalline wax, carnauba wax, beeswax, Montan (registered trademark) wax from coal, Fischer-Tropsch wax derived from coal, petroleum, or gas, B2Last (registered trademark), Sasobit (registered trademark), SANWAX (registered trademark), EPOLENE (registered trademark), Allied Wax (registered trademark), amide wax, polyethylene wax, a fatty acid, a fatty acid amide, a soap, an aliphatic alcohol, a hydrogenated fat, an aliphatic ester, and a mixture thereof.

[Method for producing block copolymer]

Examples of the method for producing the block copolymer (P) of the present embodiment include, but are not limited to, a production method including carrying out a polymerization step of polymerizing at least a conjugated diene monomer and a vinyl aromatic monomer in a hydrocarbon solvent using a lithium compound as a polymerization initiator to obtain a block copolymer containing a polymer block (A) mainly composed of a vinyl aromatic monomer unit and a polymer block (B) mainly composed of a conjugated diene monomer unit, then carrying out a hydrogenation step, and carrying out a desolventization step of desolventizing a solution including the block copolymer (P) obtained.

The polymer block (B) is preferably a polymer block (C) containing the vinyl aromatic monomer unit and the conjugated diene monomer unit.

In the polymerization step, a block copolymer can be obtained, for example by polymerizing a monomer containing at least a conjugated diene monomer and a vinyl aromatic monomer in a hydrocarbon solvent using a lithium compound as a polymerization initiator.

Examples of the hydrocarbon solvent used in the polymerization step include, but are not limited to, an aliphatic hydrocarbon such as butane, pentane, hexane, isopentane, heptane, or octane; an alicyclic hydrocarbon such as cyclopentane, methylcyclopentane, cyclohexane, methylcyclohexane, or ethylcyclohexane; and an aromatic hydrocarbon such as benzene, toluene, ethylbenzene, or xylene.

These hydrocarbon solvents may be used singly or in combinations of two or more thereof.

Examples of the lithium compound used as a polymerization initiator in the polymerization step include, but are not limited to, a compound in which one or more lithium atoms are bonded in a molecule such as an organomonolithium compound, an organodilithium compound, or an organopolylithium compound. Examples of such an organolithium compound include, but are not limited to, ethyllithium, n-propyllithium, isopropyllithium, n-butyllithium, sec-butyllithium, tert-butyllithium, hexamethylenedilithium, butadienyldilithium, and isoprenyldilithium.

These lithium compounds may be used singly or in combinations of two or more thereof.

Examples of the conjugated diene monomer include, but are not limited to, a diolefin having a pair of conjugated double bonds such as 1,3-butadiene, 2-methyl-1,3-butadiene (isoprene), 2,3-dimethyl-1,3-butadiene, 1,3-pentadiene, 2-methyl-1,3-pentadiene, or 1,3-hexadiene.

Among these, 1,3-butadiene and isoprene are preferable. In addition, 1,3-butadiene is more preferable from the viewpoint of further improving the mechanical strength of the asphalt composition. The conjugated diene monomers can be used singly or in combinations of two or more thereof.

Examples of the vinyl aromatic monomer include, but are not limited to, a vinyl aromatic compound such as styrene, $\alpha$-methylstyrene, p-methylstyrene, divinylbenzene, 1,1-diphenylethylene, N,N-dimethyl-p-aminoethylstyrene, or N,N-diethyl-p-aminoethylstyrene. Among these, styrene is preferable from the viewpoint of excellent economic efficiency. These vinyl aromatic monomers may be used singly or in combinations of two or more thereof.

In the polymerization step, a further monomer other than the conjugated diene monomer and the vinyl aromatic monomer may be used together. As such a further monomer, a monomer copolymerizable with the conjugated diene monomer and/or the vinyl aromatic monomer can be used, and can be used in a predetermined amount added.

In the polymerization step, a polar compound and/or a randomizing agent may be used, for example in order to adjust the polymerization rate, adjust the microstructure (ratio of cis, trans, and vinyl bond content) of the polymerized conjugated diene monomer unit, or adjust the ratio of reaction between the conjugated diene monomer and the vinyl aromatic monomer.

Examples of the polar compound or the randomizing agent include, but are not limited to, an ether such as tetrahydrofuran, diethylene glycol dimethyl ether, or diethylene glycol dibutyl ether; an amine such as triethylamine, N,N,N',N'-tetramethylethylenediamine (hereinafter, also referred to as "TMEDA"); a thioether, a phosphine, a phosphoramide, an alkylbenzene sulfonate, and an alkoxide of potassium or sodium.

The polymerization method to be carried out in the polymerization step of the block copolymer is not particularly limited, and a known method can be applied, and examples thereof include methods disclosed in Japanese Patent Publication No. 36-19286, Japanese Patent Publication No. 43-17979, Japanese Patent Publication No. 46-32415, Japanese Patent Publication No. 49-36957, Japanese Patent Publication No. 48-2423, Japanese Patent Publication No. 48-4106, Japanese Patent Publication No. 56-28925, Japanese Patent Laid-Open No. 59-166518, Japanese Patent Laid-Open No. 60-186577, and the like.

The method for producing the block copolymer (P) of the present embodiment may include, for example, a polymerization step of copolymerizing a vinyl aromatic hydrocarbon compound such as styrene and a conjugated diene compound such as butadiene using an organic lithium compound as a polymerization initiator in an inert hydrocarbon solvent to obtain a block copolymer, and a modification step (coupling step) of reacting the obtained block copolymer and a modifying agent (this compound is collectively referred to as a modifying agent when bonded to one or more polymers, and also referred to as a coupling agent when the modifying agent is bonded to two or more polymers).

The coupling agent is not particularly limited, and any bifunctional or higher functional coupling agent can be used.

Examples of the bifunctional coupling agent include, but are not limited to, a bifunctional halogenated silane such as dichlorosilane, monomethyldichlorosilane, or dimethyldichlorosilane; a bifunctional alkoxysilane such as diphenyldimethoxysilane, diphenyldiethoxysilane, dimethyldimethoxysilane, or dimethyldiethoxysilane; a bifunctional halogenated alkane such as dichloroethane, dibromoethane, methylene chloride, or dibromomethane; a bifunctional halogenated tin such as dichlorotin, monomethyldichlorotin, dimethyldichlorotin, monoethyldichlorotin, diethyldichlorotin, monobutyldichlorotin, or dibutyldichlorotin; dibromobenzene, benzoic acid, CO, and 2-chloropropene.

Examples of the trifunctional coupling agent include, but are not limited to, a trifunctional halogenated alkane such as trichloroethane or trichloropropane; a trifunctional halogenated silane such as methyltrichlorosilane or ethyltrichlorosilane; and a trifunctional alkoxysilane such as methyltrimethoxysilane, phenyltrimethoxysilane, or phenyltriethoxysilane.

Examples of the tetrafunctional coupling agent include, but are not limited to, a tetrafunctional halogenated alkane such as carbon tetrachloride, carbon tetrabromide, or tetrachloroethane; a tetrafunctional halogenated silane such as tetrachlorosilane or tetrabromosilane; a tetrafunctional alkoxysilane such as tetramethoxysilane or tetraethoxysilane; and a tetrafunctional halogenated tin such as tetrachlorotin or tetrabromotin.

Examples of the pentafunctional or higher functional coupling agent include, but are not limited to, a polyhalogenated hydrocarbon compound such as 1,1,1,2,2-pentachloroethane, perchloroethane, pentachlorobenzene, perchlorobenzene, octabromodiphenyl ether, or decabromodiphenyl ether. In addition thereto, epoxidized soybean oil, a bi- to hexafunctional epoxy group-containing compound, a carboxylic acid ester, and a polyvinyl compound such as divinylbenzene can also be used.

These coupling agents may be used singly or in combinations of two or more thereof.

In the production step of the block copolymer (P) of the present embodiment, a deactivation step of deactivating an active end of the block copolymer (P) after the polymerization step is preferably carried out.

By reacting a compound having active hydrogen with the active end of the block copolymer (P), the active end of the block copolymer can be deactivated. The compound having active hydrogen is not particularly limited, and is preferably an alcohol or water from the viewpoint of excellent economic efficiency.

It is possible to add at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group to a block copolymer (including a partially hydrogenated block copolymer) obtained by using a polymerization initiator, a monomer, and a compound having at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group as a coupling agent or a polymerization terminator.

As the polymerization initiator having a functional group, a polymerization initiator containing a nitrogen-containing group is preferable.

Examples of the polymerization initiator containing a nitrogen-containing group include, but are not limited to, dioctylaminolithium, di-2-ethylhexylaminolithium, ethylbenzylaminolithium, (3-(dibutylamino)-propyl)lithium, and piperidinolithium.

As the monomer having a functional group, a monomer containing a nitrogen-containing group is more preferable. Examples of the monomer having a nitrogen-containing group include, but are not limited to, N,N-dimethylvinylbenzylamine, N,N-diethylvinylbenzylamine, N,N-dipropylvinylbenzylamine, N,N-dibutylvinylbenzylamine, N,N-diphenylvinylbenzylamine, 2-dimethylaminoethylstyrene, 2-diethylaminoethylstyrene, 2-bis(trimethylsilyl)aminoethylstyrene, 1-(4-N,N-dimethylaminophenyl)-1-phenylethylene, N,N-dimethyl-2-(4-vinylbenzyloxy)ethylamine, 4-(2-pyrrolidinoethyl)styrene, 4-(2-piperidinoethyl)styrene, 4-(2-hexamethyleneiminoethyl)styrene, 4-(2-morpholinoethyl)styrene, 4-(2-thiazinoethyl)styrene, 4-(2-N-methylpiperazinoethyl)styrene, 1-((4-vinylphenoxy)methyl)pyrrolidine, and 1-(4-vinylbenzyloxymethyl)pyrrolidine.

Examples of the coupling agent and the polymerization terminator having a functional group include a coupling agent and a polymerization terminator having at least one functional group selected from the group consisting of a hydroxyl group, an acid anhydride group, an epoxy group, an amino group, an amide group, an imino group, an imide group, a urea group, a urethane group, an isocyanate group, an amidine group, a guanidine group, a carbodiimide group, a silanol group, and an alkoxysilyl group, among the coupling agents and the polymerization terminators described above.

These coupling agents and polymerization terminators having a functional group may be used singly or in combinations of two or more thereof.

Among these, a coupling agent and a polymerization terminator having a nitrogen-containing group or an oxygen-containing group are preferable from the viewpoint of good dynamic stability and water resistance of the modified asphalt mixture described later.

Examples of the coupling agent and polymerization terminator having a nitrogen-containing group or an oxygen-containing group include, but are not limited to, N,N,N',N'-tetraglycidylmetaxylenediamine, tetraglycidyl-1,3-bisaminomethylcyclohexane, tetraglycidyl-p-phenylenediamine, tetraglycidyldiaminodiphenylmethane, diglycidylaniline, γ-caprolactone, γ-glycidoxyethyltrimethoxysilane, γ-glycidoxypropyltrimethoxysilane, γ-glycidoxypropyltriphenoxysilane, γ-glycidoxypropylmethyldimethoxysilane, γ-glycidoxypropyldiethylethoxysilane, 1,3-dimethyl-2-imidazolidinone, 1,3-diethyl-2-imidazolidinone, N,N'-dimethylpropyleneurea, N-methylpyrrolidone, 2,2-dimethoxy-1-(3-trimethoxysilylpropyl)-1-aza-2-silacyclopentane, and 3-(4-methylpiperazin-1-yl)propyltriethoxysilane.

In addition, the block copolymer (P) of the present embodiment may have a main chain branching structure. The main chain branching structure refers to a structure in which a polymer chain forms a branch point in a moiety derived from a vinyl monomer including an alkoxysilyl group or a halosilyl group, and a polymer chain extends from the branch point.

The main chain branching structure of the block copolymer (P) contains 2 or more branches, preferably 3 or more branches, and more preferably 4 or more branches at a branch point in a moiety derived from a vinyl monomer including an alkoxysilyl group or a halosilyl group from the viewpoint of the high softening point properties and the low melt viscosity of the asphalt composition.

The main chain branching structure can be formed by reacting a branching agent after the polymerization step.

Examples of the branching agent that forms the main chain branching structure include, but are not limited to, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, trimethoxy(2-vinylphenyl)silane, triethoxy(2-vinylphenyl)silane, tripropoxy(2-vinylphenyl)silane, tributoxy(2-vinylphenyl)silane, and triisopropoxy(2-vinylphenyl)silane.

Further examples thereof include dimethoxymethyl(4-vinylphenyl)silane, diethoxymethyl(4-vinylphenyl)silane, dipropoxymethyl(4-vinylphenyl)silane, dibutoxymethyl(4-vinylphenyl)silane, diisopropoxymethyl(4-vinylphenyl)silane, dimethoxymethyl(3-vinylphenyl)silane, diethoxymethyl(3-vinylphenyl)silane, dipropoxymethyl(3-vinylphenyl)silane, dibutoxymethyl(3-vinylphenyl)silane, diisopropoxymethyl (3-vinylphenyl) silane, dimethoxymethyl(2-vinylphenyl)silane, diethoxymethyl(2-vinylphenyl)silane, dipropoxymethyl(2-vinylphenyl)silane, dibutoxymethyl(2-vinylphenyl)silane, and diisopropoxymethyl (2-vinylphenyl)silane.

Further examples thereof include dimethylmethoxy(4-vinylphenyl)silane, dimethylethoxy(4-vinylphenyl)silane, dimethylpropoxy(4-vinylphenyl)silane, dimethylbutoxy(4-vinylphenyl)silane, dimethylisopropoxy(4-vinylphenyl)silane, dimethylmethoxy(3-vinylphenyl)silane, dimethylethoxy(3-vinylphenyl)silane, dimethylpropoxy(3-vinylphenyl)silane, dimethylbutoxy(3-vinylphenyl)silane, dimethylisopropoxy(3-vinyl phenyl)silane, dimethylmethoxy(2-vinylphenyl)silane, dimethylethoxy(2-vinylphenyl)silane, dimethylpropoxy(2-vinylphenyl)silane, dimethylbutoxy(2-vinylphenyl)silane, and dimethylisopropoxy(2-vinylphenyl)silane.

Further examples thereof include trimethoxy(4-isopropenylphenyl)silane, triethoxy(4-isopropenylphenyl)silane, tripropoxy(4-isopropenylphenyl)silane, tributoxy(4-isopropenylphenyl)silane, triisopropoxy(4-isopropenylphenyl)silane, trimethoxy(3-isopropenylphenyl)silane, triethoxy(3-isopropenylphenyl)silane, tripropoxy(3-isopropenylphenyl)silane, tributoxy(3-isopropenylphenyl)silane, triisopropoxy(3-isopropenylphenyl)silane, trimethoxy(2-isopropenylphenyl)silane, triethoxy(2-isopropenylphenyl)silane, tripropoxy(2-isopropenylphenyl)silane, tributoxy(2-isopropenylphenyl)silane, and triisopropoxy(2-isopropenylphenyl)silane.

Further examples thereof include dimethoxymethyl(4-isopropenylphenyl)silane, diethoxymethyl(4-isopropenylphenyl)silane, dipropoxymethyl(4-isopropenylphenyl)silane, dibutoxymethyl(4-isopropenylphenyl)silane, diisopropoxymethyl(4-isopropenylphenyl)silane, dimethoxymethyl(3-isopropenylphenyl)silane, diethoxymethyl(3-isopropenylphenyl)silane, dipropoxymethyl(3-isopropenylphenyl)silane, dibutoxymethyl(3-isopropenylphenyl)silane, diisopropoxymethyl(3-isopropenylphenyl)silane, dimethoxymethyl(2-isopropenylphenyl)silane, diethoxymethyl(2-isopropenylphenyl)silane, dipropoxymethyl(2-isopropenylphenyl)silane, dibutoxymethyl(2-isopropenylphenyl)silane, and diisopropoxymethyl(2-isopropenylphenyl)silane.

Further examples thereof include dimethylmethoxy(4-isopropenylphenyl)silane, dimethylethoxy(4-isopropenylphenyl)silane, dimethylpropoxy(4-isopropenylphenyl)silane, dimethylbutoxy(4-isopropenylphenyl)silane, dimethylisopropoxy(4-isopropenylphenyl)silane, dimethylmethoxy(3-isopropenylphenyl)silane, dimethylethoxy(3-isopropenylphenyl)silane, dimethylpropoxy(3-isopropenylphenyl)silane, dimethylbutoxy(3-isopropenylphenyl)silane, dimethylisopropoxy(3-isopropenylphenyl)silane, dimethylmethoxy(2-isopropenylphenyl)silane, dimethylethoxy(2-isopropenylphenyl)silane, dimethylpropoxy(2-isopropenylphenyl)silane, dimethylbutoxy(2-isopropenylphenyl)silane, and dimethylisopropoxy(2-isopropenylphenyl)silane.

Further examples thereof include trichloro(4-vinylphenyl)silane, trichloro(3-vinylphenyl)silane, trichloro(2-vinylphenyl)silane, tribromo(4-vinylphenyl)silane, tribromo(3-vinylphenyl)silane, tribromo(2-vinylphenyl)silane, dichloromethyl(4-vinylphenyl)silane, dichloromethyl(3-vinylphenyl)silane, dichloromethyl(2-vinylphenyl)silane, dibromomethyl(4-vinylphenyl)silane, dibromomethyl(3-vinylphenyl)silane, dibromomethyl(2-vinylphenyl)silane, dimethylchloro(4-vinylphenyl)silane, dimethylchloro(3-vinylphenyl)silane, dimethylchloro(2-vinylphenyl)silane, dimethylbromo(4-vinylphenyl)silane, dimethylbromo(3-vinylphenyl)silane, and dimethylbromo(2-vinylphenyl)silane.

The block copolymer (P) of the present embodiment is a hydrogenated product of a block copolymer containing a polymer block (A) and a polymer block (B). The hydrogenation method is not particularly limited, and can be carried out using a known technique that uses a hydrogenation catalyst.

The hydrogenation catalyst is not particularly limited, a known catalyst can be used, and examples thereof include a supported heterogeneous hydrogenation catalyst in which a metal such as Ni, Pt, Pd, or Ru is supported on carbon, silica, alumina, diatomaceous earth, or the like; a so-called Ziegler-type hydrogenation catalyst that uses an organic acid salt of Ni, Co, Fe, Cr, or the like or a transition metal salt such as an acetylacetone salt and a reducing agent such as organic aluminum; and a homogeneous hydrogenation catalyst such as a so-called organometallic complex such as an organometallic compound of Ti, Ru, Rh, Zr, or the like.

Examples of the hydrogenation catalyst include hydrogenation catalysts disclosed in Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, and Japanese Patent Publication No. 2-9041.

Among these, suitable hydrogenation catalysts include a titanocene compound, a reducing organometallic compound, and a mixture thereof.

The titanocene compound is not particularly limited, and examples thereof include compounds disclosed in Japanese Patent Laid-Open No. 8-109219. Specific examples thereof include a compound having at least one or more ligands having a (substituted) cyclopentadienyl skeleton, indenyl skeleton, or fluorenyl skeleton such as biscyclopentadienyltitanium dichloride or monopentamethylcyclopentadienyltitanium trichloride.

The reducing organometallic compound is not particularly limited, and examples thereof include an organoalkali metal compound such as organolithium, an organomagnesium compound, an organoaluminum compound, an organoboron compound, and an organozinc compound.

The hydrogenation reaction temperature is preferably 0 to 200°C, and more preferably 30 to 150°C. In addition, the pressure of hydrogen used in the hydrogenation reaction is preferably 0.1 to 15 MPa, more preferably 0.2 to 10 MPa, and further preferably 0.3 to 5 MPa. Further, the hydrogenation reaction time is preferably 3 minutes to 10 hours, and more preferably 10 minutes to 5 hours.

The hydrogenation reaction may be any of a batch process, a continuous process, or a combination thereof.

The block copolymer (P) can be obtained by carrying out a desolventization step of optionally removing the catalyst residue from a solution of the block copolymer (P) obtained through the hydrogenation reaction and separating the solution. The method for separating the solution is not particularly limited, and examples thereof include a method involving precipitating and collecting the block copolymer (P) by adding a polar solvent, such as acetone or an alcohol, which is a poor solvent for the block copolymer (P), to the reaction solution after hydrogenation, a method involving collecting the block copolymer (P) by pouring the reaction solution after hydrogenation into boiling water with stirring and removing the solvent by steam stripping (steam stripping method); and a method involving collecting the block copolymer (P) by heating the reaction solution after hydrogenation to distill off the solvent (direct solvent removal method).

As described above, in the desolventization step, the polymer solution including the block copolymer (P) is desolventized. Examples of a preferable desolventization method include a steam stripping method and a direct solvent removal method.

The amount of the residual solvent in the block copolymer (P) obtained by the desolventization step may be as small as possible, and is preferably 2% by mass or less, more preferably 0.5% by mass or less, further preferably 0.2% by mass or less, further more preferably 0.05% by mass or less, even further preferably 0.01% by mass or less, and particularly preferably 0% by mass. Usually, the amount of the residual solvent in the block copolymer (P) is preferably 0.01% by mass or more and 0.1% by mass or less from the viewpoint of excellent economic efficiency.

An antioxidant exemplified in the section of the asphalt composition is preferably added to the block copolymer (P) from the viewpoints of making the heat resistance stability of the block copolymer (P) far superior and suppressing gelation.

The block copolymer (P) of the present embodiment also includes a case in which a further additive such as an antioxidant is added as long as the effects of the present invention are not impaired to form a composition.

From the viewpoints of preventing coloring of the block copolymer (P) and improving the mechanical strength of the block copolymer, before the desolventization step, a decalcification step of removing a metal in the solution including the block copolymer (P), or a neutralization step of adjusting the pH of the solution including the block copolymer (P) may be carried out, and for example, an acid and/or carbon dioxide gas may be added.

[Method for producing asphalt composition]

The asphalt composition of the present embodiment can be produced by mixing an asphalt and 0.5 parts by mass or more and 30 parts by mass or less of the block copolymer (P) based on 100 parts by mass of the asphalt.

In the method for producing the asphalt composition of the present embodiment, a crosslinking agent is preferably added.

From the viewpoint of sufficiently reacting the block copolymer (P) with the crosslinking agent, the mixing time after adding the crosslinking agent to the asphalt composition is preferably 20 minutes or more, more preferably 40 minutes or more, further preferably 60 minutes or more, and further more preferably 90 minutes or more. In addition, from the viewpoint of suppressing thermal degradation of the block copolymer (P), the mixing time after adding the crosslinking agent to the asphalt composition is preferably 5 hours or less, and more preferably 3 hours or less.

The mixing method in the method for producing the asphalt composition is not particularly limited, and any mixing machine can be used.

The mixing machine is not particularly limited, and examples thereof include a melt kneading machine such as an extruder, a kneader, or a Banbury mixer, a stirring machine such as a vertical impeller and a side arm type impeller,

a homogenizer including an emulsifying machine, and a pump.

In the method for producing the asphalt composition of the present embodiment, an asphalt, the block copolymer (P), optionally a crosslinking agent, any additive, and the like are preferably mixed in the range of 140°C to 220°C using a stirring tank or the like.

[Modified asphalt mixture]

The modified asphalt mixture of the present embodiment contains 3 parts by mass or more and 15 parts by mass or less of the asphalt composition described above, and 100 parts by mass of an aggregate.

The aggregate is not particularly limited, and for example, any aggregate for a pavement material described in the "Outline of Asphalt Pavement" issued by the Japan Road Association can be used.

The aggregate is not particularly limited, and examples thereof include crushed stone, a boulder, gravel, and steel slag.

In addition, an asphalt-coated aggregate obtained by coating any of the above aggregates with an asphalt, a recycled aggregate, and the like can also be used.

In addition thereto, as an aggregate, a granular material similar to the various aggregates described above, an artificial fired aggregate, a fired foam aggregate, an artificial lightweight aggregate, a pottery particle, Luxovite, an aluminum particle, a plastic particle, a ceramic, emery, a construction waste, a fiber, and the like can also be used.

In general, aggregates are roughly classified into a coarse aggregate, a fine aggregate, and a filler, and the aggregate used in the modified asphalt mixture of the present embodiment may be any of a coarse aggregate, a fine aggregate, and a filler.

The coarse aggregate refers to an aggregate that is retained on a 2.36-mm sieve, and examples of the type of the coarse aggregate generally include No. 7 crushed stone having a particle size range of 2.5 mm or more and 5 mm or less, and No. 6 crushed stone having a particle size range of 5 mm or more and 13 mm or less, No. 5 crushed stone having a particle size range of 13 mm or more and 20 mm or less, and No. 4 crushed stone having a particle size range of 20 mm or more and 30 mm or less.

In the modified asphalt mixture of the present embodiment, an aggregate obtained by mixing one or two or more of these coarse aggregates having various particle size ranges, a synthesized aggregate, or the like can be used.

These coarse aggregates may be coarse aggregates coated with about 0.3% by mass or more and 1% by mass or less of straight asphalt.

The fine aggregate refers to an aggregate that passes through a 2.36-mm sieve and stops (stays) on a 0.075-mm sieve. The fine aggregate is not particularly limited, and examples thereof include river sand, hill sand, mountain sand, sea sand, screenings, crushed stone dust, silica sand, artificial sand, glass cullet, casting sand, a recycled aggregate, and crushed sand.

The filler is preferably an aggregate that passes through a 0.075-mm sieve. Such a filler is not particularly limited, and examples thereof include a filler component of screenings, stone powder, slaked lime, cement, incinerator ash, clay, talc, fly ash, and carbon black. In addition thereto, as the filler, a rubber powder particle, a cork powder particle, a wood powder particle, a resin powder particle, a fiber powder particle, pulp, an artificial aggregate, and the like that pass through a 0.075-mm sieve can also be used.

These aggregates may be used singly or in combinations of two or more thereof.

The modified asphalt mixture of the present embodiment can be produced by mixing the asphalt composition and an aggregate described above, and the mixing method is not particularly limited.

The temperature at which the asphalt composition and an aggregate described above are mixed can be usually in the range of 120°C or more and 200°C or less.

The content of the asphalt composition based on the whole modified asphalt mixture of the present embodiment is 3 parts by mass or more and 15 parts by mass or less, preferably 4 parts by mass or more and 12 parts by mass or less, and more preferably 4 parts by mass or more and 9 parts by mass or less based on 100 parts by mass of the aggregate, from the viewpoint of excellent mass loss resistance and excellent strength reduction resistance at the time of oil attachment.

As a method for producing the modified asphalt mixture of the present embodiment, for example, a so-called plant mix method in which when an asphalt composition and an aggregate are mixed, the block copolymer (P) of the present embodiment is directly mixed to modify the asphalt can be used.

[Uses of asphalt composition and modified asphalt mixture]

The asphalt composition and the modified asphalt mixture of the present embodiment can be used in various uses disclosed in The Shell Bitumen Handbook edited by D. Whiteoak and published by Shell Bitumen U.K. in the United Kingdom in 1990.

In addition, other uses include a material for a waterproofing sheet, a material for roof coating, a primer adhesive for a waterproofing sheet, a sealing binder for pavement, an adhesive for recycled asphalt pavement, a binder for cold prepared asphaltic concrete, a fiberglass mat binder, a material for a slip coat for concrete, a material for a protective coat for concrete, and a sealing material for a crack in a pipeline and an iron part.

Examples of the pavement form using the modified asphalt mixture of the present embodiment include, but are not limited to, a dense-graded pavement form, a drainage pavement form, a permeable pavement form, a dense-graded gap asphalt pavement form, a crushed stone mastic asphalt pavement form, a colored pavement form, a semi-flexible pavement form, a water-retaining pavement form, and a thin-layer pavement form.

In addition, the method for obtaining each pavement form is not particularly limited, and examples thereof include a hot method, a warm method, and a cold method.

The modified asphalt mixture used in the dense-grained pavement form preferably contains 40% by mass or more and 55% by mass or less of a coarse aggregate, 40% by mass or more and 55% by mass or less of a fine aggregate, and 3% by mass or more and 10% by mass or less of a filler when the total amount of the aggregate is 100% by mass, from the viewpoint of even further improving the flow resistance and the skid resistance.

In the modified asphalt mixture used in the dense-grained pavement form, the asphalt composition is preferably 5 parts by mass or more and 7 parts by mass or less based on 100 parts by mass in total of the aggregate, and in the above modified asphalt mixture, the block copolymer (P) of the present embodiment is preferably 3 parts by mass or more and 5.5 parts by mass or less based on 100 parts by mass of the asphalt.

The modified asphalt mixture used in the drainage pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoint of even further improving the drainage, the visibility, and the noise properties.

In the modified asphalt mixture used in the drainage pavement form, the asphalt composition is preferably 4 parts by mass or more and 6 parts by mass or less based on 100 parts by mass in total of the aggregate, and in the above modified asphalt mixture, the block copolymer (P) of the present embodiment is preferably 5 parts by mass or more and 10 parts by mass or less based on 100 parts by mass of the asphalt.

The modified asphalt mixture used in the permeable pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoint of even further improving the permeability.

In the modified asphalt mixture used in the permeable pavement form, the above asphalt composition is preferably 4 parts by mass or more and 6 parts by mass or less based on 100 parts by mass of the aggregate, and in the modified asphalt mixture, the block copolymer (P) of the present embodiment is preferably more than 0 parts by mass and 6 parts by mass or less based on 100 parts by mass of the asphalt.

The modified asphalt mixture used in the dense-grained gap pavement form preferably contains 50% by mass or more and 60% by mass or less of a coarse aggregate, 30% by mass or more and 40% by mass or less of a fine aggregate, and 3% by mass or more and 10% by mass or less of a filler when the total amount of the aggregate is 100% by mass, from the viewpoint of even further improving the wearability, the flow resistance, the durability, and the skid resistance.

In the modified asphalt mixture used in the dense-grained gap pavement form, the asphalt composition is preferably 4.5 parts by mass or more and 6 parts by mass or less based on 100 parts by mass of the aggregate, and in the modified asphalt mixture, the block copolymer (P) of the present embodiment is preferably 5 parts by mass or more and 12 parts by mass or less based on 100 parts by mass of the asphalt.

The modified asphalt mixture used in the crushed stone mastic asphalt pavement form preferably contains 55% by mass or more and 70% by mass or less of a coarse aggregate, 15% by mass or more and 30% by mass or less of a fine aggregate, and 5% by mass or more and 15% by mass or less of a filler when the total amount of the aggregate is 100% by mass, from the viewpoint of even further improving the wear resistance, non-permeability, the stress relaxation, the flow resistance, and the noise properties.

In the modified asphalt mixture used in the crushed stone mastic asphalt pavement form, the asphalt composition is preferably 5.5 parts by mass or more and 8 parts by mass or less based on 100 parts by mass of the aggregate, and in the modified asphalt mixture, the block copolymer (P) of the present embodiment is preferably 4 parts by mass or more and 10 parts by mass or less based on 100 parts by mass of the asphalt.

The modified asphalt mixture used in the water-retaining pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoints of even further suppressing increase in pavement temperature and even further improving the water retention.

In the modified asphalt mixture used in the water-retaining pavement form, the asphalt composition is preferably

4 parts by mass or more and 6 parts by mass or less based on 100 parts by mass of the aggregate, and in the modified asphalt mixture, the block copolymer (P) of the present embodiment is preferably 4 parts by mass or more and 10 parts by mass or less based on 100 parts by mass of the asphalt. The modified asphalt mixture used in the water-retaining pavement form preferably has a voidage of about 15% or more and 20% or less, and a void is preferably filled with a water-retaining material such as a cement or a gypsum.

The modified asphalt mixture used in the thin-layer pavement form preferably contains 60% by mass or more and 85% by mass or less of a coarse aggregate, 5% by mass or more and 20% by mass or less of a fine aggregate, and 3% by mass or more and 20% by mass or less of a filler when the total amount of the aggregate is 100% by mass, from the viewpoint of even further improving the economic efficiency, the shortening of the construction period, and the processability.

In the modified asphalt mixture used in the thin-layer pavement form, the asphalt composition is preferably 4 parts by mass or more and 6.5 parts by mass or less based on 100 parts by mass of the aggregate, and in the modified asphalt mixture, the block copolymer (P) of the present embodiment is preferably 4 parts by mass or more and 8 parts by mass or less based on 100 parts by mass of the asphalt.

In the modified asphalt mixture used in the thin-layer pavement form, the coarse aggregate is preferably No. 7 crushed stone having a grain size range of 2.5 mm or more and 5 mm or less.

The asphalt composition and the modified asphalt mixture according to the present embodiment can also be suitably used as a material for an asphalt waterproofing sheet. When the asphalt composition and the modified asphalt mixture of the present embodiment is used, the softening point of the asphalt waterproofing sheet can be increased, and the low temperature bendability can be improved.

In addition, the production method for obtaining each pavement form is not particularly limited, and examples thereof include a hot method, a warm method, and a cold method.

Examples

Hereinafter, the present invention will be described in detail with reference to specific Examples and Comparative Examples, but the present invention is not limited at all by the following Examples and Comparative Examples.

[Methods for measuring physical properties of block copolymer]

The methods for measuring physical properties of the block copolymer are shown below.

(Measurement of vinyl bond content derived from conjugated diene monomer in block copolymer)

The vinyl bond content derived from the conjugated diene monomer in the block copolymer was measured by nuclear magnetic resonance spectrum analysis (NMR) under the following conditions.

By adding a large amount of methanol to a reaction solution containing the block copolymer, the block copolymer was precipitated and collected. This block copolymer was then extracted with acetone and the block copolymer was vacuum dried. Using this block copolymer as a sample for $^1$H-NMR measurement, the vinyl bond content derived from the conjugated diene monomer in the block copolymer was measured.

The conditions for $^1$H-NMR measurement are described below.

<Measurement conditions>

Measuring instrument: JNM-LA400 (manufactured by JEOL)
Solvent: Deuterated chloroform
Measurement sample: The dried block copolymer described above
Sample concentration: 50 mg/mL
Observation frequency: 400 MHz
Chemical shift standard: TMS (tetramethylsilane)
Pulse delay: 2.904 seconds
Number of scans: 64 times
Pulse width: 45°
Measurement temperature: 26°C

(Measurement of hydrogenation rate of double bond in conjugated diene monomer unit in block copolymer)

The hydrogenation rate of the double bond in the conjugated diene monomer unit in the block copolymer was measured using a nuclear magnetic resonance spectrometer (NMR) under the following conditions.
First, by adding a large amount of methanol to a reaction solution after hydrogenation reaction, the block copolymer was precipitated and collected. Next, the block copolymer was extracted with acetone, and the extract was vacuum dried to obtain a block copolymer. The obtained block copolymer was used as a sample for $^1$H-NMR measurement.
The conditions for $^1$H-NMR measurement are described below.

<Measurement conditions>

Measuring instrument: JNM-LA400 (manufactured by JEOL)
Solvent: Deuterated chloroform
Measurement sample: Polymers sampled before and after hydrogenation
Sample concentration: 50 mg/mL
Observation frequency: 400 MHz
Chemical shift standard: TMS (tetramethylsilane)
Pulse delay: 2.904 seconds
Number of scans: 64 times
Pulse width: 45°
Measurement temperature: 26°C

(Measurement of mass proportion (hereinafter also referred to as "TS") of vinyl aromatic monomer unit (styrene) in block copolymer)

A certain amount of the block copolymer was dissolved in chloroform, and the peak intensity at an absorption wavelength (262 nm) due to the vinyl aromatic compound component (styrene) in the solution was measured using an ultraviolet spectrophotometer (UV-2450, manufactured by Shimadzu Corporation).
From the resulting peak intensity, the mass proportion (TS) of the vinyl aromatic monomer unit (styrene) in the block copolymer was calculated using a calibration curve.

(Measurement of mass proportion (hereinafter also referred to as "BS") of polymer block (A) mainly composed of vinyl aromatic monomer unit in block copolymer)

A large amount of methanol was added to a reaction solution containing the block copolymer to precipitate an undegraded component, followed by filtration using a glass filter and drying. This block copolymer was used as a measurement sample.
The mass proportion (BS) of the polymer block (A) mainly composed of the vinyl aromatic monomer unit in the block copolymer was measured using the following solution for polymer decomposition by the osmium tetroxide decomposition method disclosed in I. M. Kolthoff, et al., J. Polym. Sci., 1946, Vol.1, p.429.

Measurement sample: The dried block copolymer described above
Solution for polymer decomposition: A solution of 0.1 g of osmium tetroxide in 125 mL of tertiary butanol

(Mass proportion of vinyl aromatic monomer unit in polymer blocks (B) and (C) (hereinafter also referred to as "RS"))

In the block copolymer, the mass proportion (RS) of the vinyl aromatic monomer unit in the polymer blocks (B) and (C) was calculated by the following expression (II).

$$RS = (TS - BS)/(100 - BS) \times 100 \quad (II)$$

(Method for measuring peak molecular weight (BSPMw) of polymer block (A))

The sample for measuring the mass proportion (BS) of the polymer block (A) was analyzed by GPC.

The measurement was carried out with the same analysis conditions as those described in (Measurement of weight average molecular weight (Mw) and molecular weight distribution (Mw/Mn) of block copolymer) below.
The peak molecular weight (BSPMw) of the polymer block (A) was determined from the obtained molecular weight distribution. When the molecular weight distribution is multimodal, BSPMw is the number average molecular weight instead of the peak molecular weight.

(Measurement of number average molecular weight (Mn), weight average molecular weight (Mw), polystyrene-equivalent peak molecular weight (PMwA), and molecular weight distribution (Mw/Mn) of block copolymer)

The number average molecular weight (Mn), the weight average molecular weight (Mw), and the polystyrene-equivalent peak molecular weight (PMwA) of the block copolymer were determined based on the peak molecular weight on a chromatogram by using the calibration curve (prepared using the peak molecular weight of standard polystyrene) obtained from GPC measurement of a commercially available standard polystyrene. The polystyrene-equivalent peak molecular weight (PMwA) is a value of the peak top molecular weight.
The measurement software used was HLC-8320 EcoSEC collection, and the analysis software used was HLC-8320 analysis. In addition, the molecular weight distribution (Mw/Mn) of the block copolymer was determined from the ratio of the polystyrene-equivalent weight average molecular weight (Mw) and the number average molecular weight (Mn). The measurement conditions are shown below.

<Measurement conditions>

GPC: HLC-8320GPC (manufactured by Tosoh Corporation)
Detector: RI (differential refractive index) detector
Detection sensitivity: 3 mV/min
Sampling pitch: 600 msec
Column: 4 pieces of TSKgel superHZM-N (6 mm ID × 15 cm) (manufactured by Tosoh Corporation)
Solvent: THF (tetrahydrofuran)
Flow rate: 0.6 mm/min
Concentration: 0.5 mg/mL
Column temperature: 40°C
Injection volume: 20 μL

(Measurement of ratios and peak molecular weights of (a), (b-1), and (b-2) components included in block copolymer)

The block copolymer was analyzed by GPC as follows to determine the ratios (%) and the peak molecular weights of the following components (a), (b-1), and (b-2).
Block copolymer (a): A block copolymer that consists of the polymer block (A), the polymer block (B) (excluding the structure of the polymer block (C)), and the polymer block (C) and has a peak molecular weight of 50,000 or more and less than 160,000.
Component (b-1): A block copolymer that is a component in which the ratio of the peak molecular weight thereof to the peak molecular weight of the component (a) has at least one or more peaks in the range of 1.5 or more and less than 2.5.
Component (b-2): A block copolymer that is a component in which the ratio of the peak molecular weight thereof to the peak molecular weight of the component (a) has at least one or more peaks in the range of 2.5 or more and less than 4.3.
The analysis conditions were the same as in (Measurement of weight average molecular weight (Mw) and molecular weight distribution (Mw/Mn) of block copolymer) above.
The inflection point of each peak-to-peak curve obtained from the above GPC was vertically divided, and the ratio of each divided area to the total area was defined as the area ratio of each of block copolymer components (a), (b-1), and (b-2), and the ratio (%) of each of block copolymer components (a), (b-1), and (b-2) was determined. In addition, the peak molecular weight of each of block copolymer components (a), (b-1), and (b-2) ((PMwA) of (a), (b-1), and (b-2)) was determined.
For each inflection point between peaks, peak division was carried out by fitting processing by Gaussian approximation using HLC-8320 waveform separation software, and the intersection of each peak was set as the inflection point.

(Calculation of micro-converted peak molecular weight (PMwB))

The peak molecular weight (PMwA) of the block copolymer on the GPC chromatogram measured by the above method is in terms of polystyrene. The micro-converted peak molecular weight (PMwB) of the block copolymer was determined by the following expression using the molecular weight correction value (DMw) of the conjugated diene monomer unit. When the conjugated diene monomer unit was butadiene, PMwB was calculated with DMw = 0.6. When the GPC chromatogram had a plurality of peaks, the micro-converted peak molecular weight (PMwB) was calculated for each peak.

Micro-converted peak molecular weight (PMwB) = PMwA $\times$ ((TS/100) + (1 - (TS/100)) $\times$ DMw)

In addition, the micro-converted peak molecular weight of each of the block copolymer components (a), (b-1), and (b-2) ((PMwB) of (a), (b-1), and (b-2)) was determined.

(Calculation of mass proportion of block copolymer (D) having a structure containing two or more polymer blocks (A))

The number N of the polymer blocks (A) mainly composed of the vinyl aromatic monomer unit contained in the block copolymer was calculated for each of the peak-divided peaks on the GPC chromatogram described in (Measurement of ratios and peak molecular weights of (a), (b-1), and (b-2) components included in block copolymer) above, based on the following expression.

Number N of polymer blocks (A) contained in the block copolymer = PMwB $\times$ (BS/100)/BSPMw

A peak having a value of this number N of 1.6 or more was assumed to contain two or more polymer blocks (A), and the sum of the area proportions of peaks having a value of this number N of 1.6 or more was defined as the mass proportion of the block copolymer (D) having a structure containing two or more polymer blocks (A).

(Measurement of 5% by mass toluene solution viscosity)

The 5% by mass toluene solution viscosity of the block copolymer was measured using a Cannon-Fenske viscosity tube in a constant temperature bath controlled at a temperature of 25°C.

(Measurement of nitrogen content)

The nitrogen content is the proportion of the mass of a nitrogen atom to the mass of a block copolymer.
The nitrogen content was calculated using TN-2100H manufactured by Mitsubishi Chemical Analytech Co., Ltd. according to the method described in 4. Chemiluminescence method of JIS K 2609: 1998, Crude petroleum and petroleum products-Determination of nitrogen content.

(Measurement of silicon content)

The silicon content is the proportion of the mass of a silicon atom to the mass of a block copolymer.
The silicon content was calculated using a calibration curve from a peak intensity obtained by measurement using Supermini 200 manufactured by Rigaku Corporation.

(Peak temperature and peak height of loss tangent (tanδ) of block copolymer)

A dynamic viscoelastic spectrum of the block copolymer was measured by the following method, and the peak temperature and peak height of the loss tangent (tanδ) were determined.
A block copolymer sheet formed to a thickness of 2 mm was punched out to a length of 20 mm and a width of 10 mm with the longitudinal side of the sheet as the MD direction to obtain a sample, and the sample was measured using a torsion type geometry of the apparatus ARES (manufactured by TA Instruments, Inc., trade name), under conditions of a strain (initial strain) of 0.5%, a frequency of 1 Hz, a measurement range of -100°C to 100°C, and a heating rate of 3°C/min.

[Preparation of block copolymer]

<Preparation of hydrogenation catalyst>

In Examples and Comparative Examples described later, a hydrogenation catalyst used in preparing a block copolymer was prepared by the following method.

A reaction vessel equipped with a stirring apparatus was purged with nitrogen, and 1 L of dried and purified cyclohexane was placed therein.

Next, 100 mmol of bis(η5-cyclopentadienyl)titanium dichloride were added.

While sufficiently stirring this, a n-hexane solution containing 200 mmol of trimethylaluminum was added and reacted at room temperature for about 3 days to obtain a hydrogenation catalyst.

<(Comparative Example 1) block copolymer 1>

Polymerization was carried out by the following method using a stirring apparatus having an internal volume of 100 L and a tank reactor equipped with a jacket.

(First stage)

The reactor was washed, dried, and purged with nitrogen, then 45 kg of cyclohexane was placed in the reactor, the temperature was adjusted to 50°C, then 1200 g of styrene was added as a monomer over 3 minutes, and then a n-butyllithium (hereinafter and in the table, indicated as nBL) cyclohexane solution was added in a pure amount of 4.0 g to start the reaction.

(Second stage)

Next, 5 minutes after the temperature in the reactor reached the maximum value, 5600 g of 1,3-butadiene (indicated as butadiene in the table) was continuously supplied to the reactor at a constant rate over 20 minutes to react.

(Third stage)

Next, 5 minutes after the temperature in the reactor reached the maximum value, 1200 g of styrene was continuously supplied to the reactor at a constant rate over 3 minutes to react.

(Termination reaction)

After that, 5 minutes after the temperature in the reactor reached the maximum value, 1,3-dimethyl-2-imidazolidinone (indicated as modifying agent A in the table) was added as a terminator to react for 20 minutes. The amount added was added batchwise such that the molar ratio to nBL (mol/Li) was 1.0. Further, after completion of the reaction, methanol was added batchwise such that the molar ratio to nBL (mol/Li) was 1.0.

(Desolventization step)

After completion of the polymerization step, 0.25 parts by mass of a stabilizer (octadecyl-3-(3,5-di-t-butyl-4-hydroxyphenyl)propionate) was added based on 100 parts by mass of the resulting block copolymer to obtain a polymer solution.

The solvent was removed by heating from the obtained polymer solution to obtain block copolymer 1 (hereinafter also referred to as "polymer 1").

The physical properties, structure, and composition of block copolymer 1 were as shown in Table 7.

<(Examples 1 and 2) block copolymers 2 and 3>

A block copolymer was produced in the same manner as block copolymer 1 in (First stage) to (Termination reaction) to obtain a polymer solution.

After that, the hydrogenation catalyst prepared as described above was added to the obtained block copolymer solution, and hydrogen was continuously supplied for 120 minutes while maintaining the temperature at 95°C to carry out a hydrogenation reaction. The amount of the hydrogenation catalyst added was added such that the mass ratio of Ti to the block copolymer was 100 ppm, and the hydrogen pressure in the polymerization reactor for the hydrogenation

reaction was 0.95 MPa. In addition, the hydrogenation reaction was carried out with the total amounts of hydrogen suppled being 62 g and 124 g, respectively, and block copolymers 2 and 3 were obtained from the resulting block copolymer solutions, respectively, through the same (Desolventization step) as in Comparative Example 1.

The physical properties, structures, and compositions of block copolymers 2 and 3 were as shown in Table 7.

<(Example 3) block copolymer 4>

Block copolymer 4 was obtained in the same manner as in Examples 1 and 2, except that after the temperature was adjusted to 50°C in (First stage), 0.55 mol of TMEDA (tetramethylethylenediamine) was added per mol of nBL, and the amount of hydrogen supplied during the hydrogenation reaction was changed to 176 g.

The physical properties, structure, and composition of block copolymer 4 were as shown in Table 7.

<(Comparative Example 2) block copolymer 5>

Polymerization was carried out by the following method using a stirring apparatus having an internal volume of 100 L and a tank reactor equipped with a jacket.

(First stage)

The reactor was washed, dried, and purged with nitrogen, then 45 kg of cyclohexane was placed in the reactor, the temperature was adjusted to 50°C, then 2400 g of styrene was added as a monomer over 3 minutes, and then a n-butyllithium (indicated as nBL in the table) cyclohexane solution was added in a pure amount of 8.0 g to start the reaction.

(Second stage)

Next, 5 minutes after the temperature in the reactor reached the maximum value, 5600 g of 1,3-butadiene (indicated as butadiene in the table) was continuously supplied to the reactor at a constant rate over 20 minutes to react.

(Termination reaction)

After that, 5 minutes after the temperature in the reactor reached the maximum value, ZX-1059 (manufactured by NIPPON STEEL Chemical & Material Co., Ltd., indicated as modifying agent B in the table) was added as a terminator to react for 20 minutes. The amount added was added batchwise such that the molar ratio to nBL (mol/Li) was 0.35. Further, after completion of the reaction, methanol was added batchwise such that the molar ratio to nBL (mol/Li) was 0.3.

(Desolventization step)

After completion of the polymerization step, 0.25 parts by mass of a stabilizer (octadecyl-3-(3,5-di-t-butyl-4-hydroxyphenyl)propionate) was added based on 100 parts by mass of the resulting block copolymer to obtain a polymer solution.

The solvent was removed by heating from the obtained polymer solution to obtain block copolymer 5.

The physical properties, structure, and composition of block copolymer 5 were as shown in Table 7.

<(Comparative Example 3) block copolymer 6>

Block copolymer 6 was obtained in the same manner in Comparative Example 2, except that the type of the terminator was changed from ZX-1059 (manufactured by NIPPON STEEL Chemical & Material Co., Ltd.) to 3-(4-methylpiperazin-1-yl)propyltriethoxysilane (indicated as modifying agent C in the table).

The physical properties, structure, and composition of block copolymer 6 were as shown in Table 7.

<(Examples 4 and 5) block copolymers 7 and 8>

A block copolymer was produced in the same manner as in Comparative Example 3 in (First stage) to (Termination reaction) to obtain a polymer solution. After that, the hydrogenation catalyst prepared as described above was added to the obtained polymer solution, and hydrogen was continuously supplied for 120 minutes while maintaining the temperature at 95°C to carry out a hydrogenation reaction. The amount of the hydrogenation catalyst added was added such that the mass ratio of Ti to the block copolymer was 100 ppm, and the hydrogen pressure in the polymerization reactor for the hydrogenation reaction was 0.95 MPa. In addition, the hydrogenation reaction was carried out with the

total amounts of hydrogen suppled being 62 g and 124 g, respectively, and block copolymers 7 and 8 were obtained from the resulting block copolymer solutions, respectively, through the same (Desolventization step) as in Comparative Example 1.

The physical properties, structures, and compositions of block copolymers 7 and 8 were as shown in Table 7.

<(Examples 6 and 7) block copolymers 9 and 10>

Block copolymers 9 and 10 were obtained in the same manner as in Examples 4 and 5, except that after the temperature was adjusted to 50°C in (First stage), 0.55 mol of TMEDA was added per mol of nBL, and the amount of hydrogen supplied during the hydrogenation reaction was changed to 176 g and 203 g, respectively.

The physical properties, structures, and compositions of block copolymers 9 and 10 were as shown in Table 7.

<(Comparative Example 4) block copolymer 11>

Block-shaped polymer 11 was obtained in the same manner as in Comparative Example 2, except that the type of the terminator was changed from ZX-1059 (manufactured by NIPPON STEEL Chemical & Material Co., Ltd.) to tetraglycidyl-1,3-bisaminomethylcyclohexane (indicated as modifying agent D in the table), and the amount added was added batchwise such that the molar ratio to nBL (mol/Li) was 0.175.

The physical properties, structure, and composition of block copolymer 11 were as shown in Table 8.

<(Example 8) block copolymer 12>

A block copolymer was produced in the same manner as in Comparative Example 4 in (First stage) to (Termination reaction) to obtain a polymer solution. After that, the hydrogenation catalyst prepared as described above was added to the obtained polymer solution, and hydrogen was continuously supplied for 120 minutes while maintaining the temperature at 95°C to carry out a hydrogenation reaction. The amount of the hydrogenation catalyst added was added such that the mass ratio of Ti to the block copolymer was 100 ppm, and the hydrogen pressure in the polymerization reactor for the hydrogenation reaction was 0.95 MPa. In addition, the hydrogenation reaction was carried out with the total amount of hydrogen suppled being 62 g, and block copolymer 12 was obtained from the resulting block copolymer solution through the same (Desolventization step) as in Comparative Example 1.

The physical properties, structure, and composition of block copolymer 12 were as shown in Table 8.

<(Example 9) block copolymer 13>

Polymerization was carried out by the following method using a stirring apparatus having an internal volume of 100 L and a tank reactor equipped with a jacket.

(First stage)

The reactor was washed, dried, and purged with nitrogen, then 45 kg of cyclohexane was placed in the reactor, the temperature was adjusted to 50°C, and then 0.55 mol of TMEDA was added per mol of nBL. 1600 g of styrene was added as a monomer thereto over 3 minutes, and then an nBL cyclohexane solution was added in a pure amount of 8.0 g to start the reaction.

(Second stage)

Next, 5 minutes after the temperature in the reactor reached the maximum value, 4800 g of 1,3-butadiene (indicated as butadiene in the table) and 1600 g of styrene were simultaneously continuously supplied to the reactor at a constant rate over 20 minutes to react.

(Termination reaction)

After that, 5 minutes after the temperature in the reactor reached the maximum value, tetraglycidyl-1,3-bisaminomethylcyclohexane (indicated as modifying agent D in the table) was added as a terminator and reacted for 20 minutes. The amount added was added batchwise such that the molar ratio to nBL (mol/Li) was 0.175. Further, after completion of the reaction, methanol was added batchwise such that the molar ratio to nBL (mol/Li) was 0.3.

(Hydrogenation reaction step)

The hydrogenation catalyst prepared as described above was added to the resulting polymer solution, and hydrogen was continuously supplied for 120 minutes while maintaining the temperature at 95°C to carry out a hydrogenation reaction. The amount of the hydrogenation catalyst added was added such that the mass ratio of Ti to the block copolymer was 100 ppm, and the hydrogen pressure in the polymerization reactor for the hydrogenation reaction was 0.95 MPa. In addition, the total amount of hydrogen supplied was 62 g.

(Desolventization step)

After completion of the hydrogenation step, 0.25 parts by mass of a stabilizer (octadecyl-3-(3,5-di-t-butyl-4-hydroxyphenyl)propionate) was added based on 100 parts by mass of the resulting block copolymer to obtain a block copolymer solution.

The solvent was removed by heating from the obtained block copolymer solution to obtain block copolymer 13.

The physical properties, structure, and composition of block copolymer 13 were as shown in Table 8.

<(Comparative Example 5, Example 10, and Example 11) block copolymers 14 to 16>

Block-shaped polymers 14 to 16 were obtained in the same manner as in Comparative Example 4, Example 8, and Example 9, respectively, except that the type of the terminator was changed from tetraglycidyl-1,3-bisaminomethylcyclohexane to 2,2-dimethoxy-1-(3-trimethoxysilylpropyl)-1-aza-2-silacyclopentane (indicated as modifying agent E in the table).

The physical properties, structures, and compositions of block copolymers 14 to 16 were as shown in Table 8.

<(Comparative Examples 6 and 7) block copolymers 17 and 18>

Polymerization was carried out by the following method using a stirring apparatus having an internal volume of 100 L and a tank reactor equipped with a jacket.

(First stage)

The reactor was washed, dried, and purged with nitrogen, then 45 kg of cyclohexane was placed in the reactor, the temperature was adjusted to 50°C, then 1200 g of styrene was added as a monomer over 3 minutes, and then an nBL cyclohexane solution was added in a pure amount of 4.0 g to start the reaction.

(Second stage)

Next, 5 minutes after the temperature in the reactor reached the maximum value, 5600 g of 1,3-butadiene (indicated as butadiene in the table) was continuously supplied to the reactor at a constant rate over 20 minutes to react.

(Third stage)

Next, 5 minutes after the temperature in the reactor reached the maximum value, 1200 g of styrene was continuously supplied to the reactor at a constant rate over 3 minutes to react.

(Termination reaction)

After that, 5 minutes after the temperature in the reactor reached the maximum value, methanol was added as a terminator batchwise such that the molar ratio to nBL (mol/Li) was 0.2.

(Hydrogenation reaction step)

The hydrogenation catalyst prepared as described above was added to the resulting block copolymer solution, and hydrogen was continuously supplied for 120 minutes while maintaining the temperature at 95°C to carry out a hydrogenation reaction. The amount of the hydrogenation catalyst added was added such that the mass ratio of Ti to the block copolymer was 100 ppm, and the hydrogen pressure in the polymerization reactor for the hydrogenation reaction was 0.95 MPa. In addition, the total amounts of hydrogen supplied was 62 g and 124 g, respectively.

(Desolventization step)

After completion of the hydrogenation step, 0.25 parts by mass of a stabilizer (octadecyl-3-(3,5-di-t-butyl-4-hydroxyphenyl)propionate) was added based on 100 parts by mass of the resulting block copolymer to obtain block copolymer solutions.

The solvent was removed by heating from the obtained block copolymer solutions to obtain block copolymers 17 and 18.

The physical properties, structures, and compositions of block copolymers 17 and 18 were as shown in Table 8.

<(Comparative Examples 8 and 9) block copolymers 19 and 20>

Block-shaped polymers 19 and 20 were obtained in the same manner as in Comparative Examples 6 and 7, respectively, except that after the temperature was adjusted to 50°C in (First stage), 0.55 mol of TMEDA was added per mol of nBL, and the amount of hydrogen supplied during the hydrogenation reaction was changed to 176 g and 203 g, respectively.

The physical properties, structures, and compositions of block copolymers 19 and 20 were as shown in Table 8.

<(Examples 12 to 21) block copolymers 21 to 30>

Block copolymers 21 to 30 were obtained by changing the types and the amounts of additives according to the formulations shown in Table 3.

The physical properties, structures, and compositions of block copolymers 21 to 30 were as shown in Table 9.

<(Example 22) block copolymer 31>

Block copolymer 31 was obtained in the same manner as in Example 13, except that a mixture of an nBL cyclohexane solution and piperidine prepared previously (50°C × 60 minutes, the amount of piperidine added was 1.0 in terms of the molar ratio to nBL) was used instead of the nBL cyclohexane solution as a polymerization initiator.

The physical properties, structure, and composition of block copolymer 31 were as shown in Table 10.

<(Example 23) block copolymer 32>

Polymerization was carried out by the following method using a stirring apparatus having an internal volume of 100 L and a tank reactor equipped with a jacket.

(First stage)

The reactor was washed, dried, and purged with nitrogen, then 45 kg of cyclohexane was placed in the reactor, the temperature was adjusted to 50°C, and then 0.55 mol of TMEDA was added per mol of nBL. 1600 g of styrene was added as a monomer thereto over 3 minutes, and then an nBL cyclohexane solution was added in a pure amount of 8.0 g to start the reaction.

(Second stage)

Next, 5 minutes after the temperature in the reactor reached the maximum value, 4800 g of 1,3-butadiene (indicated as butadiene in the table) and 1600 g of styrene were simultaneously continuously supplied to the reactor at a constant rate over 20 minutes to react.

(Termination reaction)

After that, 5 minutes after the temperature in the reactor reached the maximum value, trimethoxy(4-vinylphenyl)silane (indicated as branching agent H in the table) was added as a branching agent and reacted for 20 minutes. The amount added was added batchwise such that the molar ratio to nBL (mol/Li) was 0.33.

After that, 3-(4-methylpiperazin-1-yl)propyltriethoxysilane (indicated as modifying agent C in the table) was added as a terminator and reacted for 20 minutes. The amount added was added batchwise such that the molar ratio to nBL (mol/Li) was 0.12. Further, after completion of the reaction, methanol was added batchwise such that the molar ratio to nBL was 0.1.

(Hydrogenation reaction step)

The hydrogenation catalyst prepared as described above was added to the resulting block copolymer solution, and hydrogen was continuously supplied for 120 minutes while maintaining the temperature at 95°C to carry out a hydrogenation reaction. The amount of the hydrogenation catalyst added was added such that the mass ratio of Ti to the block copolymer was 100 ppm, and the hydrogen pressure in the polymerization reactor for the hydrogenation reaction was 0.95 MPa. In addition, the total amount of hydrogen supplied was 107 g.

(Desolventization step)

After completion of the hydrogenation step, 0.25 parts by mass of a stabilizer (octadecyl-3-(3,5-di-t-butyl-4-hydroxyphenyl)propionate) was added based on 100 parts by mass of the resulting block copolymer to obtain a block copolymer solution.

The solvent was removed by heating from the obtained block copolymer solution to obtain block copolymer 32.

The physical properties, structure, and composition of block copolymer 32 were as shown in Table 10.

<(Examples 24 to 32) block copolymers 33 to 41>

Block copolymers 33 to 41 were obtained by changing the types and the amounts of additives according to the formulations shown in Table 4.

The physical properties, structures, and compositions of block copolymers 33 to 41 were as shown in Table 10.

<(Examples 74 to 88) block copolymers 42 to 49 and 52 to 58, and (Comparative Examples 21 and 22) block copolymers 50 and 51>

Block copolymers 42 to 58 were obtained by changing the types and the amounts of additives according to the formulations shown in Table 5 and Table 6.

The physical properties, structures, and compositions of block copolymers 42 to 58 were as shown in Table 11 and Table 12.

The amount of styrene added in the second stage and the third stage shown in Tables 1 to 6 being 0 means that styrene was not added in the second stage and the third stage, respectively.

Modifying agents A, B, C, D, E, F, and G shown in Tables 1 to 6 represent the following compounds, respectively.

A: 1,3-Dimethyl-2-imidazolidinone
B: Zx-1059
C: 3-(4-Methylpiperazin-1-yl)propyltriethoxysilane
D: Tetraglycidyl-1,3-bisaminomethylcyclohexane
E: 2,2-Dimethoxy-1-(3-trimethoxysilylpropyl)-1-aza-2-silacyclopentane
F: N,N-Bis(triethoxysilylpropyl)aminopropyl-1-imidazole
G: N,N-Bis(trimethylsilyl)aminopropylmethyldimethoxysilane

In the tables, "-" means that no modifying agent was added.

In addition, branching agent H shown in Table 4 means trimethoxy(4-vinylphenyl)silane, and "-" means that branching agent H was not added.

[Table 1]

| | | Comparative Example 1 | Example 1 | Example 2 | Example 3 | Comparative Example 2 | Comparative Example 3 | Example 4 | Example 5 | Example 6 | Example 7 |
|---|---|---|---|---|---|---|---|---|---|---|---|
| Block copolymer | | 1 | 2 | 3 | 4 | 5 | 6 | 7 | 8 | 9 | 10 |
| First stage | Styrene (g) | 1200 | 1200 | 1200 | 1200 | 2400 | 2400 | 2400 | 2400 | 2400 | 2400 |
| | TMEDA (mol/Li) | 0 | 0 | 0 | 0.55 | 0 | 0 | 0 | 0 | 0.55 | 0.55 |
| | nBL(g) | 4.0 | 4.0 | 4.0 | 4.0 | 8.0 | 8.0 | 8.0 | 8.0 | 8.0 | 8.0 |
| Second stage | Butadiene (g) | 5600 | 5600 | 5600 | 5600 | 5600 | 5600 | 5600 | 5600 | 5600 | 5600 |
| | Styrene (g) | 0 | 0 | 0 | 0 | 0 | 0 | 0 | 0 | 0 | 0 |
| Third stage | Styrene (g) | 1200 | 1200 | 1200 | 1200 | 0 | 0 | 0 | 0 | 0 | 0 |
| Termination reaction | Modifying agent | A | A | A | A | B | C | C | C | C | C |
| | Amount added (mol/Li) | 10 | 1.0 | 1.0 | 1.0 | 0.35 | 0.35 | 0.35 | 0.35 | 0.35 | 0.35 |
| | Methanol (mol/Li) | 10 | 1.0 | 10 | 1.0 | 0.3 | 0.3 | 0.3 | 0.3 | 0.3 | 0.3 |
| Hydrogenation reaction | Amount of hydrogen added (g) | 0 | 62 | 124 | 176 | 0 | 0 | 62 | 124 | 176 | 203 |

[Table 2]

| | | Comparative Example 4 | Example 8 | Example 9 | Comparative Example 5 | Example 10 | Example 11 | Comparative Example 6 | Comparative Example 7 | Comparative Example 8 | Comparative Example 9 |
|---|---|---|---|---|---|---|---|---|---|---|---|
| Block copolymer | | 11 | 12 | 13 | 14 | 15 | 16 | 17 | 18 | 19 | 20 |
| First stage | Styrene (g) | 2400 | 2400 | 1600 | 2400 | 2400 | 1600 | 1200 | 1200 | 1200 | 1200 |
| | TMEDA (molZLi) | 0 | 0 | 0.55 | 0 | 0 | 0.55 | 0 | 0 | 0.55 | 0.55 |
| | nBL(g) | 8.0 | 8.0 | 8.0 | 8.0 | 8.0 | 8.0 | 4.0 | 4.0 | 4.0 | 4.0 |
| Second stage | Butadiene (g) | 5600 | 5600 | 4800 | 5600 | 5600 | 4800 | 5600 | 5600 | 5600 | 5600 |
| | Styrene (g) | 0 | 0 | 1600 | 0 | 0 | 1600 | 0 | 0 | 0 | 0 |
| Third stage | Styrene (g) | 0 | 0 | 0 | 0 | 0 | 0 | 1200 | 1200 | 1200 | 1200 |
| Termination reaction | Modifying agent | D | D | D | E | E | E | - | - | - | - |
| | Amount added (mol/Li) | 0.175 | 0.175 | 0.175 | 0.175 | 0.175 | 0.175 | 0 | 0 | 0 | 0 |
| | Methanol (mol/Li) | 0.3 | 0.3 | 0.3 | 0.3 | 0.3 | 0.3 | 10 | 10 | 1.0 | 1.0 |
| Hydrogenation reaction | Amount of hydrogen added (q) | 0 | 62 | 107 | 0 | 62 | 107 | 62 | 124 | 176 | 203 |

[Table 3]

| | | Example 12 | Example 13 | Example 14 | Example 15 | Example 16 | Example 17 | Example 18 | Example 19 | Example 20 | Example 21 |
|---|---|---|---|---|---|---|---|---|---|---|---|
| Block copolymer | | 21 | 22 | 23 | 24 | 25 | 26 | 27 | 28 | 29 | 30 |
| First stage | Styrene (g) | 1600 | 1600 | 1600 | 1600 | 1600 | 1200 | 1600 | 1440 | 1600 | 800 |
| | TMEDA(mol/Li) | 0.55 | 0.55 | 0.55 | 0.55 | 0.55 | 0.55 | 0.55 | 0.55 | 0.55 | 0.55 |
| | nBL(g) | 8.0 | 8.0 | 8.0 | 8.0 | 8.0 | 8.0 | 7.0 | 7.0 | 7.0 | 4.0 |
| Second stage | Butadiene (g) | 4800 | 4800 | 4800 | 4800 | 4800 | 5600 | 4800 | 5200 | 4800 | 4800 |
| | Styrene (g) | 1600 | 1600 | 1600 | 1600 | 1600 | 1200 | 1600 | 1360 | 1600 | 1600 |
| Third stage | Styrene (g) | 0 | 0 | 0 | 0 | 0 | 0 | 0 | 0 | 0 | 800 |
| Termination reaction | Modifying agent | C | C | C | C | C | C | C | C | E | A |
| | Amount added (mol/Li) | 0.35 | 0.35 | 0.35 | 0.25 | 0.25 | 0.35 | 0.35 | 0.35 | 0.175 | 1.0 |
| | Methanol (mol/Li) | 0.3 | 0.3 | 0.3 | 0.5 | 0.5 | 0.3 | 0.3 | 0.3 | 0.3 | 1.0 |
| Hydrogenation reaction | Amount of hydrogen added (g) | 53 | 107 | 151 | 107 | 53 | 62 | 107 | 58 | 53 | 107 |

[Table 4]

| | | Example 22 | Example 23 | Example 24 | Example 25 | Example 26 | Example 27 | Example 28 | Example 29 | Example 30 | Example 31 | Example 32 |
|---|---|---|---|---|---|---|---|---|---|---|---|---|
| Block copolymer | | 31 | 32 | 33 | 34 | 35 | 36 | 37 | 38 | 39 | 40 | 41 |
| First stage | Styrene (g) | 1600 | 1600 | 1600 | 1600 | 2000 | 1120 | 640 | 3360 | 1200 | 2400 | 2000 |
| | TMEDA (mol/Li) | 0.55 | 0.55 | 0.55 | 0.55 | 0.55 | 0.55 | 0.55 | 0.55 | 0.55 | 0.55 | 0.55 |
| | nBL(g) | - | 8.0 | 8.0 | 8.0 | 8.0 | 8.0 | 8.0 | 8.0 | 8.0 | 8.0 | 5.5 |
| | Aminolithium (g) | 8.0 | - | - | - | - | - | - | - | - | - | - |
| Second stage | Butadiene (g) | 4800 | 4800 | 4800 | 4800 | 3040 | 6560 | 4800 | 3840 | 4400 | 5600 | 5200 |
| | Styrene (g) | 1600 | 1600 | 1600 | 1600 | 2960 | 320 | 2560 | 800 | 2400 | 0 | 800 |
| Third stage | Styrene (g) | 0 | 0 | 0 | 0 | 0 | 0 | 0 | 0 | 0 | 0 | 0 |
| Termination reaction | Branching agent | - | H | - | - | - | - | - | - | - | - | - |
| | Amount added (mol/Li) | - | 0.33 | - | - | - | - | - | - | - | - | - |
| | Modifying agent | C | C | F | G | C | C | C | C | C | C | C |
| | Amount added (mol/Li) | 0.35 | 0.12 | 0.175 | 0.35 | 0.35 | 0.35 | 0.35 | 0.35 | 0.35 | 0.35 | 0.30 |
| | Methanol (mol/Li) | 0.3 | 0.1 | 0.3 | 0.3 | 0.3 | 0.3 | 0.34 | 0.4 | 0.4 | 0.4 | 0.4 |
| Hydrogenation reaction | Amount of hydrogen added (g) | 107 | 107 | 107 | 107 | 68 | 146 | 107 | 85 | 98 | 124 | 116 |

[Table 5]

| | | Example 74 | Example 75 | Example 76 | Example 77 | Example 78 | Example 79 | Example 80 | Example 81 | Comparative Example 21 | Comparative Example 22 | Example 82 |
|---|---|---|---|---|---|---|---|---|---|---|---|---|
| Block copolymer | | 42 | 43 | 44 | 45 | 46 | 47 | 48 | 49 | 50 | 51 | 52 |
| First stage | Styrene (g) | 800 | 1600 | 2000 | 1120 | 2800 | 1600 | 1600 | 760 | 1200 | 760 | 760 |
| | TMEDA (mol/Li) | 0.55 | 0.55 | 0.55 | 0.55 | 0.55 | 0.55 | 0.55 | 0.55 | 0 | 0 | 0.55 |
| | nBL(g) | 4.0 | 8.0 | 8.0 | 8.0 | 8.0 | 8.0 | 8.0 | 4.0 | 4.0 | 4.0 | 4.0 |
| Second stage | Butadiene (g) | 4720 | 4800 | 5200 | 5760 | 3040 | 4800 | 4800 | 4800 | 4080 | 4560 | 4480 |
| | Styrene (g) | 1680 | 1600 | 800 | 1120 | 2160 | 1600 | 1600 | 1680 | 1520 | 1920 | 2000 |
| Third stage | Styrene (g) | 800 | 0 | 0 | 0 | 0 | 0 | 0 | 760 | 1200 | 760 | 760 |
| Termination reaction | Modifying agent | A | C | C | C | C | C | C | A | - | - | A |
| | Amount added (mol/Li) | 1.00 | 0.35 | 0.35 | 0.35 | 0.35 | 0.35 | 0.35 | 1.00 | 0 | 0 | 1.00 |
| | Methanol (mol/Li) | 1.0 | 0.3 | 0.3 | 0.3 | 0.3 | 0.3 | 0.3 | 1.0 | 1.0 | 1.0 | 1.0 |
| Hydrogenation reaction | Amount of hydrogen added (g) | 17 | 142 | 116 | 73 | 37 | 20 | 9 | 144 | 53 | 62 | 58 |

[Table 6]

| | | Example 83 | Example 84 | Example 85 | Example 86 | Example 87 | Example 88 |
|---|---|---|---|---|---|---|---|
| Block copolymer | | 53 | 54 | 55 | 56 | 57 | 58 |
| First stage | Styrene (g) | 1360 | 2000 | 2000 | 2240 | 1680 | 1520 |
| | TMEDA(mol/Li) | 0.55 | 0.55 | 0.55 | 0.55 | 0.55 | 0.55 |
| | nBL(g) | 4.0 | 8.0 | 8.0 | 8.0 | 8.0 | 8.0 |
| Second stage | Butadiene (g) | 4800 | 3600 | 5200 | 3040 | 3920 | 4000 |
| | Styrene (g) | 480 | 2400 | 800 | 2720 | 2400 | 2480 |
| Third stage | Styrene (g) | 1360 | 0 | 0 | 0 | 0 | 0 |
| Termination reaction | Modifying agent | A | C | C | C | C | C |
| | Amount added (mol/Li) | 1.00 | 0.35 | 0.35 | 0.35 | 0.35 | 0.35 |
| | Methanol (mol/Li) | 1.0 | 0.3 | 0.3 | 0.3 | 0.3 | 0.3 |
| Hydrogenation reaction | Amount of hydrogen added (g) | 59 | 87 | 60 | 36 | 7 | 129 |

[Table 7]

| | Comparative Example 1 | Example 1 | Example 2 | Example 3 | Comparative Example 2 | Comparative Example 3 | Example 4 | Example 5 | Example 6 | Example 7 |
|---|---|---|---|---|---|---|---|---|---|---|
| Block copolymer | 1 | 2 | 3 | 4 | 5 | 6 | 7 | 8 | 9 | 10 |
| TS (% by mass) | 30 | 30 | 30 | 30 | 31 | 31 | 31 | 31 | 31 | 31 |
| BS (% by mass) | 30 | 30 | 30 | 30 | 30 | 30 | 30 | 30 | 30 | 30 |
| 5% by mass toluene solution viscosity (mPa·s) | 12 | 13 | 16 | 20 | 9 | 9 | 14 | 17 | 21 | 25 |
| Nitrogen content (ppm) | 203 | 205 | 210 | 200 | - | 150 | 148 | 144 | 152 | 155 |
| RS (% by mass) | 0.0 | 0.0 | 0.0 | 0.0 | 1.4 | 1.4 | 1.4 | 1.4 | 1.4 | 1.4 |
| Vinyl bond content (% by mass) | 10 | 10 | 10 | 32 | 11 | 12 | 12 | 12 | 31 | 32 |
| Hydrogenation rate (mol%) | 0 | 31 | 60 | 85 | 0 | 0 | 29 | 59 | 86 | 98 |
| Silicon content (ppm) | - | - | - | - | - | 148 | 144 | 150 | 155 | 143 |
| tanδ peak temperature (°C) | -85.0 | -68.0 | -55.0 | -45.0 | -86.0 | -86.0 | -66.0 | -54.0 | -46.0 | -38.0 |
| tanδ peak height | 1.0 | 0.9 | 0.9 | 1.0 | 1.2 | 0.9 | 1.1 | 0.8 | 0.9 | 0.9 |
| Mw (×10,000) | 19.4 | 19.5 | 19.8 | 19.6 | 16.4 | 16.4 | 16.8 | 16.2 | 16.3 | 16.9 |
| Mn (×10,000) | 16.7 | 16.8 | 16.8 | 17.0 | 13.3 | 13.6 | 13.8 | 13.8 | 13.3 | 13.3 |
| Mw/Mn | 1.16 | 1.16 | 1.18 | 1.15 | 1.23 | 1.21 | 1.22 | 1.17 | 1.23 | 1.27 |
| PMwA (×10,000) | 20.0 | 20.0 | 20.0 | 20.0 | - | - | - | - | - | - |
| PMwA (×10,000) of (a) component | - | - | - | - | 9.0 | 9.0 | 9.0 | 9.0 | 9.0 | 9.0 |
| PMwA (×10,000) of (b-1) component | - | - | - | - | 18.0 | 18.0 | 18.0 | 18.0 | 18.0 | 18.0 |
| PMwA (×10,000) of (b-2) component | - | - | - | - | - | - | - | - | - | - |
| BSPMw (×10,000) | 2.2 | 2.2 | 2.2 | 2.2 | 1.9 | 1.9 | 1.9 | 1.9 | 1.9 | 1.9 |

(continued)

| | Comparative Example 1 | Example 1 | Example 2 | Example 3 | Comparative Example 2 | Comparative Example 3 | Example 4 | Example 5 | Example 6 | Example 7 |
|---|---|---|---|---|---|---|---|---|---|---|
| Ratio (%) of (a) component | 0.0 | 0.0 | 0.0 | 0.0 | 30.0 | 30.0 | 30.0 | 30.0 | 30.0 | 30.0 |
| Ratio (%) of (b-1) component | 0.0 | 0.0 | 0.0 | 0.0 | 70.0 | 70.0 | 70.0 | 70.0 | 70.0 | 70.0 |
| Ratio (%) of (b-2) component | 0.0 | 0.0 | 0.0 | 0.0 | 0.0 | 0.0 | 0.0 | 0.0 | 0.0 | 0.0 |
| PMwB (×10,000) | 14.4 | 14.4 | 14.4 | 14.4 | - | - | - | - | - | - |
| PMwB (×10,000) of (a) component | - | - | - | - | 6.5 | 6.5 | 6.5 | 6.5 | 6.5 | 6.5 |
| PMwB (×10,000) of (b-1) component | - | - | - | - | 13.0 | 13.0 | 13.0 | 13.0 | 13.0 | 13.0 |
| PMwB (×10,000) of (b-2) component | - | - | - | - | - | - | - | - | - | - |
| Block copolymer (D) (% bv mass) | 100.0 | 100.0 | 100.0 | 100.0 | 70.0 | 70.0 | 70.0 | 70.0 | 70.0 | 70.0 |
| Amino group-containing | ○ | ○ | ○ | ○ | × | ○ | ○ | ○ | ○ | ○ |
| Alkoxysilyl group-containing | × | × | × | × | × | ○ | ○ | ○ | ○ | ○ |

[Table 8]

| | Comparative Example 4 | Example 8 | Example 9 | Comparative Example 5 | Example 10 | Example 11 | Comparative Example 6 | Comparative Example 7 | Comparative Example 8 | Comparative Example 9 |
|---|---|---|---|---|---|---|---|---|---|---|
| Block copolymer | 11 | 12 | 13 | 14 | 15 | 16 | 17 | 18 | 19 | 20 |
| TS (% by mass) | 29 | 29 | 40 | 31 | 31 | 40 | 30 | 30 | 30 | 30 |
| BS (% by mass) | 29 | 29 | 20 | 30 | 30 | 20 | 29 | 29 | 29 | 29 |
| 5% by mass toluene solution viscosity (mPa·s) | 12 | 15 | 14 | 11 | 15 | 13 | 14 | 17 | 21 | 25 |
| Nitrogen content (ppm) | 74 | 75 | 76 | 35 | 39 | 33 | - | - | - | - |
| RS (% bv mass) | 0.0 | 0.0 | 25.0 | 1.4 | 1.4 | 25.0 | 1.4 | 1.4 | 1.4 | 1.4 |
| Vinyl bond content (% bv mass) | 11 | 11 | 30 | 11 | 12 | 30 | 12 | 12 | 32 | 33 |
| Hydrogenation rate (mol%) | 0 | 28 | 60 | 0 | 32 | 58 | 29 | 58 | 83 | 97 |
| Silicon content (ppm) | - | - | - | 142 | 142 | 153 | - | - | - | - |
| tanδ peak temperature (°C) | -86.0 | -66.0 | -29 | -86.0 | -67.0 | -30 | -69.0 | -55.0 | -46.0 | -37.0 |
| tanδ peak height | 0.9 | 1.1 | 0.8 | 0.9 | 1.0 | 1.0 | 1.0 | 0.9 | 0.9 | 0.9 |
| Mw (×10,000) | 28.2 | 28.8 | 28.5 | 28.1 | 28.3 | 28.4 | 19.6 | 19.6 | 19.5 | 19.5 |
| Mn (×10,000) | 19.1 | 18.8 | 19.3 | 19.3 | 19.4 | 19.2 | 16.6 | 16.8 | 16.2 | 16.3 |
| Mw/Mn | 1.48 | 1.53 | 1.48 | 1.46 | 1.46 | 1.48 | 1.18 | 1.17 | 1.20 | 1.20 |
| PMwA (×10,000) | | | | | - | - | 20.0 | 20.0 | 20.0 | 20.0 |
| PMwA (×10,000) of (a) component | 9.0 | 9.0 | 9.0 | 9.0 | 9.0 | 9.0 | | | | |

(continued)

| | Comparative Example 4 | Example 8 | Example 9 | Comparative Example 5 | Example 10 | Example 11 | Comparative Example 6 | Comparative Example 7 | Comparative Example 8 | Comparative Example 9 |
|---|---|---|---|---|---|---|---|---|---|---|
| PMwA (×10,000) of (b-1) component | - | - | | | | | | | | |
| PMwA (×10,000) of (b-2) component | 36.0 | 36.0 | 36.0 | 36.0 | 36.0 | 36.0 | - | - | - | - |
| BSPMw (×10,000) | 1.9 | 1.9 | 1.3 | 1.9 | 1.9 | 1.3 | 2.1 | 2.1 | 2.1 | 2.1 |
| Ratio (%) of (a) component | 30.0 | 30.0 | 30.0 | 30.0 | 30.0 | 30.0 | - | - | - | - |
| Ratio (%) of (b-1) component | - | - | - | - | - | - | - | - | - | - |
| Ratio (%) of (b-2) component | 70.0 | 70.0 | 70.0 | 70.0 | 70.0 | 70.0 | - | - | - | - |
| PMwB (×10,000) | - | - | - | - | - | - | 14.4 | 14.4 | 14.4 | 14.4 |
| PMwB (×10,000) of (a) component | 6.4 | 6.4 | 6.8 | 6.5 | 6.5 | 6.8 | - | - | - | - |
| PMwB (×10,000) of (b-1) component | - | - | - | - | - | - | - | - | - | - |
| PMwB (×10,000) of (b-2) component | 25.8 | 25.8 | 27.4 | 26.1 | 26.1 | 27.4 | - | - | - | - |
| Block copolymer (D) (% bv mass) | 70.0 | 70.0 | 70.0 | 70.0 | 70.0 | 70.0 | 100.0 | 100.0 | 100.0 | 100.0 |
| Amino group-containing | ○ | ○ | ○ | ○ | ○ | ○ | × | × | × | × |

(continued)

| | Comparative Example 4 | Example 8 | Example 9 | Comparative Example 5 | Example 10 | Example 11 | Comparative Example 6 | Comparative Example 7 | Comparative Example 8 | Comparative Example 9 |
|---|---|---|---|---|---|---|---|---|---|---|
| Alkoxysilyl group-containing | × | × | × | ○ | ○ | ○ | × | × | × | × |

[Table 9]

| | Example 12 | Example 13 | Example 14 | Example 15 | Example 16 | Example 17 | Example 18 | Example 19 | Example 20 | Example 21 |
|---|---|---|---|---|---|---|---|---|---|---|
| Block copolvmer | 21 | 22 | 23 | 24 | 25 | 26 | 27 | 28 | 29 | 30 |
| TS (% by mass) | 40 | 39 | 41 | 40 | 40 | 30 | 40 | 35 | 40 | 40 |
| BS (% by mass) | 20 | 21 | 20 | 19 | 20 | 15 | 20 | 18 | 21 | 21 |
| 5% by mass toluene solution viscosity (mPa·s) | 10 | 13 | 17 | 11 | 8 | 11 | 17 | 13 | 11 | 14 |
| Nitrogen content (ppm) | 153 | 147 | 144 | 98 | 102 | 149 | 133 | 135 | 28 | 204 |
| RS (% by mass) | 25.0 | 22.8 | 26.3 | 25.9 | 25.0 | 17.6 | 25.0 | 20.7 | 24.1 | 24.1 |
| Vinyl bond content (% bv mass) | 30 | 30 | 31 | 30 | 30 | 29 | 30 | 31 | 29 | 31 |
| Hydrogenation rate (mol%) | 30 | 62 | 84 | 61 | 31 | 31 | 61 | 29 | 32 | 62 |
| Silicon content (ppm) | 144 | 146 | 152 | 100 | 99 | 150 | 128 | 122 | 132 | - |
| tanδ peak temperature (°C) | -46 | -32 | -24 | -28 | -44 | -51 | -29 | -47 | -45 | -30 |
| tanδ peak height | 1.1 | 0.9 | 0.9 | 1.0 | 0.9 | 0.9 | 1.0 | 0.8 | 0.9 | 1.0 |
| Mw (×10,000) | 16.2 | 16.3 | 16.4 | 14.4 | 14.7 | 16.4 | 20.3 | 19.9 | 28.2 | 19.4 |
| Mn (×10,000) | 13.7 | 13.9 | 13.8 | 12.0 | 12.0 | 13.8 | 16.8 | 16.5 | 19.0 | 16.8 |
| Mw/Mn | 1.18 | 1.17 | 1.19 | 1.20 | 1.23 | 1.19 | 1.21 | 1.21 | 1.49 | 1.15 |
| PMwA (×10,000) | | | | | | | | | | 20.0 |
| PMwA (×10,000) of (a) component | 9.0 | 9.0 | 9.0 | 9.0 | 9.0 | 9.0 | 11.0 | 11.0 | 9.0 | - |
| PMwA (×10,000) of (b-1) component | 18.0 | 18.0 | 18.0 | 18.0 | 18.0 | 18.0 | 22.0 | 22.0 | - | - |
| PMwA (×10,000) of (b-2) component | - | - | - | - | - | - | - | - | 36.0 | - |
| BSPMw (×10,000) | 1.3 | 1.4 | 1.3 | 1.2 | 1.3 | 1.0 | 1.6 | 1.4 | 1.4 | 1.5 |
| Ratio (%) of (a) component | 30.0 | 30.0 | 30.0 | 50.0 | 50.0 | 30.0 | 30.0 | 30.0 | 30.0 | - |

(continued)

| | Example 12 | Example 13 | Example 14 | Example 15 | Example 16 | Example 17 | Example 18 | Example 19 | Example 20 | Example 21 |
|---|---|---|---|---|---|---|---|---|---|---|
| Ratio (%) of (b-1) component | 70.0 | 70.0 | 70.0 | 50.0 | 50.0 | 70.0 | 70.0 | 70.0 | - | - |
| Ratio (%) of (b-2) component | - | - | - | - | - | - | - | - | 70.0 | - |
| PMwB (×10,000) | - | - | - | - | - | - | - | - | - | 15.2 |
| PMwB (×10,000) of (a) component | 6.8 | 6.8 | 6.9 | 6.8 | 6.8 | 6.5 | 8.4 | 8.1 | 6.8 | - |
| PMwB (×10,000) of (b-1) component | 13.7 | 13.6 | 13.8 | 13.7 | 13.7 | 13.0 | 16.7 | 16.3 | - | - |
| PMwB (×10,000) of (b-2) component | - | - | - | - | - | - | - | - | 27.4 | - |
| Block copolymer (D) (% by mass) | 70.0 | 70.0 | 70.0 | 50.0 | 50.0 | 70.0 | 70.0 | 70.0 | 70.0 | 100.0 |
| Amino group-containing | ○ | ○ | ○ | ○ | ○ | ○ | ○ | ○ | ○ | ○ |
| Alkoxysilyl group-containing | ○ | ○ | ○ | ○ | ○ | ○ | ○ | ○ | ○ | × |

[Table 10]

| | Example 22 | Example 23 | Example 24 | Example 25 | Example 26 | Example 27 | Example 28 | Example 29 | Example 30 | Example 31 | Example 32 |
|---|---|---|---|---|---|---|---|---|---|---|---|
| Block copolymer | 31 | 32 | 33 | 34 | 35 | 36 | 37 | 38 | 39 | 40 | 41 |
| TS (% by mass) | 41 | 41 | 40 | 40 | 62 | 18 | 40 | 52 | 45 | 30 | 35 |
| BS (% by mass) | 20 | 20 | 21 | 20 | 25 | 14 | 8 | 42 | 15 | 30 | 25 |
| 5% by mass toluene solution viscosity (mPa·s) | 12 | 22 | 14 | 13 | 16 | 14 | 10 | 18 | 11 | 17 | 43 |
| Nitrogen content (ppm) | 230 | 51 | 115 | 77 | 145 | 147 | 147 | 149 | 148 | 150 | 85 |
| RS (% bv mass) | 26.3 | 26.3 | 24.1 | 25.0 | 49.3 | 4.7 | 34.8 | 17.2 | 35.3 | 0.0 | 13.3 |
| Vinyl bond content (% bv mass) | 28 | 29 | 31 | 30 | 28 | 30 | 30 | 30 | 51 | 9 | 28 |
| Hydrogenation rate (mol%) | 59 | 60 | 60 | 61 | 62 | 57 | 60 | 59 | 60 | 58 | 89 |
| Silicon content (ppm) | 154 | 103 | 145 | 139 | 150 | 147 | 149 | 144 | 146 | 144 | 88 |
| tanδ peak temperature (°C) | -28 | -29 | -30 | -27 | -5 | -50 | -15 | -30 | -18 | -54 | -34 |
| tanδ peak height | 0.8 | 0.8 | 0.9 | 1.0 | 0.8 | 0.8 | 0.9 | 0.9 | 1.0 | 0.9 | 0.8 |
| Mw (×10,000) | 16.3 | 42.7 | 28.2 | 16.2 | 16.4 | 16.4 | 16.2 | 16.7 | 16.6 | 16.4 | 27.3 |
| Mn (×10,000) | 13.5 | 17.6 | 19.0 | 13.8 | 13.5 | 13.3 | 14.0 | 13.8 | 13.8 | 13.2 | 23.0 |
| Mw/Mn | 1.21 | 2.43 | 1.49 | 1.18 | 1.21 | 1.23 | 1.16 | 1.21 | 1.21 | 1.24 | 1.19 |
| PMwA (×10,000) | | | | | | | | | | | |
| PMwA (×10,000) of (a) component | 9.0 | 9.0 | 9.0 | 9.0 | 9.0 | 9.0 | 9.0 | 9.0 | 9.0 | 9.0 | 15.0 |
| PMwA (×10,000) of (b-1) component | 18.0 | - | - | 18.0 | 18.0 | 18.0 | 18.0 | 18.0 | 18.0 | 18.0 | 30.0 |
| PMwA (×10,000) of (b-2) component | - | 27.0 | 36.0 | - | - | - | - | - | - | - | - |
| BSPMw (×10,000) | 1.3 | | | 1.3 | 1.6 | 0.9 | 0.5 | 2.7 | 1.0 | 1.9 | 2.7 |
| Ratio (%) of (a) component | 30.0 | 10.0 | 30.0 | 30.0 | 30.0 | 30.0 | 30.0 | 30.0 | 30.0 | 30.0 | 30.0 |
| Ratio (%) of (b-1) component | 70.0 | - | | 70.0 | 70.0 | 70.0 | 70.0 | 70.0 | 70.0 | 70.0 | 70.0 |
| Ratio (%) of (b-2) component | - | 20.0 | 70.0 | - | - | - | - | - | - | - | - |
| PMwB (×10,000) | - | - | - | - | - | - | - | - | - | - | - |
| PMwB (×10,000) of (a) component | 6.9 | 6.9 | 6.8 | 6.8 | 7.6 | 6.0 | 6.8 | 7.3 | 7.0 | 6.5 | 11.1 |
| PMwB (×10,000) of (b-1) component | 13.8 | - | - | 13.7 | 15.3 | 12.1 | 13.7 | 14.5 | 14.0 | 13.0 | 22.2 |

(continued)

| | Example 22 | Example 23 | Example 24 | Example 25 | Example 26 | Example 27 | Example 28 | Example 29 | Example 30 | Example 31 | Example 32 |
|---|---|---|---|---|---|---|---|---|---|---|---|
| PMwB (×10,000) of (b-2) component | - | 20.6 | 27.4 | - | - | - | - | - | - | - | - |
| Block copolymer (D) (% bv mass) | 70.0 | 90.0 | 70.0 | 70.0 | 70.0 | 70.0 | 70.0 | 70.0 | 70.0 | 70.0 | 70.0 |
| Amino group-containing | ○ | ○ | ○ | ○ | ○ | ○ | ○ | ○ | ○ | ○ | ○ |
| Alkoxysilyl group-containing | ○ | ○ | ○ | × | ○ | ○ | ○ | ○ | ○ | ○ | ○ |

[Table 11]

| | Example 74 | Example 75 | Example 76 | Example 77 | Example 78 | Example 79 | Example 80 | Example 81 | Comparative Example 21 | Comparative Example 22 | Example 82 |
|---|---|---|---|---|---|---|---|---|---|---|---|
| Block copolymer | 42 | 43 | 44 | 45 | 46 | 47 | 48 | 49 | 50 | 51 | 52 |
| TS (% by mass) | 41 | 40 | 35 | 28 | 62 | 40 | 40 | 40 | 49 | 43 | 44 |
| BS (% by mass) | 20 | 20 | 25 | 14 | 35 | 20 | 20 | 19 | 30 | 19 | 19 |
| 5% by mass toluene solution viscosity (mPa·s) | 12 | 16 | 15 | 13 | 15 | 12 | 12 | 18 | 13 | 13 | 13 |
| Nitrogen content (ppm) | 219 | 148 | 149 | 151 | 147 | 151 | 144 | 210 | - | - | 209 |
| RS (% by mass) | 26.3 | 25.0 | 13.3 | 16.3 | 41.5 | 25.0 | 25.0 | 25.9 | 27.1 | 29.6 | 30.9 |
| Vinyl bond content (% by mass) | 29 | 29 | 29 | 28 | 25 | 28 | 28 | 31 | 32 | 31 | 30 |
| Hydrogenation rate (mol%) | 10 | 80 | 60 | 34 | 33 | 11 | 5 | 81 | 35 | 37 | 35 |
| Silicon content (ppm) | - | 150 | 149 | 145 | 149 | 143 | 152 | - | - | - | - |
| tanδ peak temperature (°C) | -55 | -25 | -40 | -47 | -39 | -48 | -53 | -29 | -40.0 | -38 | -44 |
| tanδ peak height | 1.0 | 0.9 | 0.9 | 1.0 | 1.0 | 0.9 | 1.0 | 1 | 0.9 | 1.0 | 1.0 |
| Mw (×10,000) | 19.2 | 16.3 | 16.2 | 16.2 | 16.3 | 16.3 | 16.3 | 19.5 | 19.8 | 19.2 | 19.3 |
| Mn (×10,000) | 16.3 | 13.8 | 13.8 | 13.5 | 13.7 | 13.9 | 14.0 | 17.4 | 16.8 | 17.0 | 16.6 |
| Mw/M n | 1.18 | 1.18 | 1.17 | 1.20 | 1.19 | 1.17 | 1.16 | 1.12 | 1.18 | 1.13 | 1.16 |
| PMwA (×10,000) | 20.0 | - | - | - | - | - | - | 20.0 | 21.0 | 20.0 | 20.0 |
| PMwA (×10,000) of (a) component | - | 9.0 | 9.0 | 9.0 | 9.0 | 9.0 | 9.0 | - | - | - | - |
| PMwA (×10,000) of (b-1) component | - | 18.0 | 18.0 | 18.0 | 18.0 | 18.0 | 18.0 | - | - | - | - |
| PMwA (×10,000) of (b-2) component | - | - | - | - | - | - | - | - | - | - | - |

(continued)

| | Example 74 | Example 75 | Example 76 | Example 77 | Example 78 | Example 79 | Example 80 | Example 81 | Comparative Example 21 | Comparative Example 22 | Example 82 |
|---|---|---|---|---|---|---|---|---|---|---|---|
| BSPMw (×10,000) | 1.4 | 1.3 | 1.6 | 0.9 | 2.3 | 1.3 | 1.3 | 1.4 | 2.3 | 1.4 | 1.4 |
| Ratio (%) of (a) component | - | 30.0 | 30.0 | 30.0 | 30.0 | 30.0 | 30.0 | - | - | - | - |
| Ratio (%) of (b-1) component | - | 70.0 | 70.0 | 70.0 | 70.0 | 70.0 | 70.0 | - | - | - | - |
| Ratio (%) of (b-2) component | - | - | - | - | - | - | - | - | - | - | - |
| PMwB (×10,000) | 15.3 | - | - | - | - | - | - | 15.2 | 16.7 | 15.4 | 15.5 |
| PMwB (×10,000) of (a) component | - | 6.8 | 6.7 | 6.4 | 7.6 | 6.8 | 6.8 | - | - | - | - |
| PMwB (×10,000) of (b-1) component | - | 13.7 | 13.3 | 12.8 | 15.3 | 13.7 | 13.7 | - | - | - | - |
| PMwB (×10,000) of (b-2) component | - | - | - | - | - | - | - | - | - | - | - |
| Block copolymer (D) (% bv mass) | 100.0 | 70.0 | 70.0 | 70.0 | 70.0 | 70.0 | 70.0 | 100.0 | 100.0 | 100.0 | 100.0 |
| Amino group-containing | ○ | ○ | ○ | ○ | ○ | ○ | ○ | ○ | × | × | ○ |
| Alkoxysilyl group-containing | × | ○ | ○ | ○ | ○ | ○ | ○ | × | × | × | × |

[Table 12]

| | Example 83 | Example 84 | Example 85 | Example 86 | Example 87 | Example 88 |
|---|---|---|---|---|---|---|
| Block copolymer | 53 | 54 | 55 | 56 | 57 | 58 |
| TS (% by mass) | 40 | 55 | 35 | 62 | 51 | 50 |
| BS (% by mass) | 34 | 25 | 25 | 28 | 21 | 19 |
| 5% by mass toluene solution viscosity (mPa·s) | 14 | 15 | 14 | 16 | 14 | 17 |
| Nitrogen content (ppm) | 200 | 150 | 148 | 152 | 145 | 153 |
| RS (% by mass) | 9.1 | 40.0 | 13.3 | 47.2 | 38.0 | 38.3 |
| Vinyl bond content (% by mass) | 29 | 30 | 31 | 30 | 27 | 28 |
| Hydrogenation rate (mol%) | 33 | 65 | 31 | 32 | 5 | 87 |
| Silicon content (ppm) | - | 154 | 153 | 148 | 151 | 155 |
| tanδ peak temperature (°C) | -52 | -24 | -51 | -33 | -43 | -5 |
| tanδ peak height | 0.9 | 1.0 | 1.0 | 1.0 | 1.0 | 0.9 |
| Mw (×10,000) | 18.7 | 16.4 | 16.4 | 16.2 | 16.1 | 16.3 |
| Mn (×10,000) | 17.1 | 13.7 | 13.8 | 13.8 | 13.6 | 13.5 |
| Mw/Mn | 1.09 | 1.20 | 1.19 | 1.17 | 1.18 | 1.21 |
| PMwA (×10,000) | 19.0 | - | - | - | - | - |
| PMwA (×10,000) of (a) component | - | 9.0 | 9.0 | 9.0 | 9.0 | 9.0 |
| PMwA (×10,000) of (b-1) component | - | 18.0 | 18.0 | 18.0 | 18.0 | 18.0 |
| PMwA (× 1 0,000) of (b-2) component | - | - | - | - | - | - |
| BSPMw (×10,000) | 2.3 | 1.6 | 1.6 | 1.8 | 1.4 | 1.2 |
| Ratio (%) of (a) component | - | 30.0 | 30.0 | 30.0 | 30.0 | 30.0 |
| Ratio (%) of (b-1) component | - | 70.0 | 70.0 | 70.0 | 70.0 | 70.0 |
| Ratio (%) of (b-2) component | - | - | - | - | - | - |
| PMwB (×10,000) | 14.4 | - | - | - | - | - |
| PMwB (×10,000) of (a) component | - | 7.4 | 6.7 | 7.6 | 7.2 | 7.2 |
| PMwB (×10,000) of (b-1) component | - | 14.8 | 13.3 | 15.3 | 14.5 | 14.4 |
| PMwB (×10,000) of (b-2) component | - | - | - | - | - | - |
| Block copolymer (D) (% by mass) | 100.0 | 70.0 | 70.0 | 70.0 | 70.0 | 70.0 |
| Amino group-containing | ○ | ○ | ○ | ○ | ○ | ○ |
| Alkoxysilyl group-containing | × | ○ | ○ | ○ | ○ | ○ |

[Examples 33 to 64 and 89 to 103] and [Comparative Examples 10 to 18, 23 and 24]

<Preparation of asphalt compositions>

350 g of an asphalt (Straight Asphalt #70 made in China (resin + asphaltene = 40.9%)) was placed in a 750-mL metal can, and the metal can was sufficiently immersed in an oil bath at 180°C.

Next, each block copolymer (indicated as "Polymer" in the tables) was placed little by little in the asphalt in a molten state at the proportion (parts by mass) shown in Table 14 to Table 19 with stirring.

After each material was completely placed, asphalt compositions were prepared by stirring at a rotation speed of 3500 rpm for 120 minutes.

The blending compositions thereof and evaluation results of each asphalt composition measured by the measurement methods described later are shown in Table 14 to Table 19.

[Examples 71 to 73] and [Comparative Examples 19 and 20]

An asphalt composition was prepared in the same manner as described above, except that Straight Asphalt 60-80 (resin + asphaltene = 28.0%) manufactured by JX was used as the asphalt.

[Examples 65 to 70]

After completion of mixing of the above asphalt and each block copolymer, sulfur, polyphosphoric acid, the silane coupling agent Si75 (manufactured by Evonik Degussa), Fischer-Tropsch wax (trade name: Sasobit; melting point is 112°C) were placed little by little with stirring. Each material was completely placed, and then the materials were stirred at a rotation speed of 3500 rpm for 30 minutes to prepare asphalt compositions.
The blending compositions thereof and evaluation results of each asphalt composition measured by the measurement methods described later are shown in Table 14 to Table 19.

<Preparation of modified asphalt mixture]

94.3 parts by mass of a crushed stone mastic asphalt type aggregate having a particle size shown in Table 13 was placed in a mixing machine having a capacity of 27 liters equipped with a heating apparatus, and dry mixed for 25 seconds.
Next, 5.7 parts by mass of each of the asphalt compositions of Examples and Comparative Examples produced by the above method was placed in the above mixing machine and finally mixed for 50 seconds to obtain a modified asphalt mixture.
The modified asphalt mixture obtained was a crushed stone mastic asphalt type asphalt mixture.
The total amount of the modified asphalt mixture was adjusted to 10 kg, and the mixing temperature was adjusted to 177°C for both dry mixing and final mixing.
The aggregates used were No. 6 and No. 7 crushed stones from Miyama-cho, Hachioji-shi, Tokyo, crushed sand produced from Ogura, Midori-ku, Sagamihara-shi, Kanagawa, fine sand produced from Daiei-machi, Narita-shi, Chiba, and a mixture of stone powders produced from Oaza Kaminaguri, Hanno-shi, Saitama.
The particle size distribution of the aggregates used in the modified asphalt mixtures is shown in Table 13.
The obtained modified asphalt mixtures were evaluated by the measurement method described later.
Evaluation results are shown in Table 14 to Table 19.

[Table 13]

| Sieve opening (mm) | Passing mass percentage (%) |
|---|---|
| 19.0 | 100 |
| 13.2 | 97.7 |
| 4.75 | 46.6 |
| 2.36 | 34.0 |
| 0.3 | 18.7 |
| 0.075 | 9.5 |

[Evaluation methods]

The physical properties of the asphalt composition (indicated as Physical properties of As in the tables) were evaluated as follows.
In the tables, the term asphalt is indicated as "AS," the term block copolymer is indicated as "Polymer" and "Polymer," and the term physical properties of the modified asphalt mixture is indicated as "Physical properties of mixture."

(Compatibility (separability) of asphalt compositions)

The compatibility (separability) of the asphalt compositions was measured according to ASTM-D5976.

The asphalt compositions obtained in the Examples and the Comparative Examples were used as samples.
A Teflon (registered trademark) tube having a diameter of 2 cm and a length of 15 cm was filled with a sample, covered with a lid of aluminum foil, and then allowed to stand in an oven at 163°C for 48 hours. After that, the tube was allowed to stand overnight in a freezer, the sample was taken out from the Teflon (registered trademark) tube, divided into three equal parts, and the softening points at the top and the bottom were measured.
The smaller the difference between the measured softening point values of the upper part and the lower part, the better the compatibility, and ratings of ◎, ○, △, and × were given in descending order of goodness according to the following criteria. It was considered that the performance was sufficient for practical use when the rating was △ or higher.
The method for measuring the softening point will be described later.
The evaluation criteria when the content of the block copolymer in the asphalt composition is 4% by mass are as follows.

◎: The difference between the measured softening point values of the upper part and the lower part is 1°C or less
○: The difference between the measured softening point values of the upper part and the lower part is more than 1°C and 3°C or less
△: The difference between the measured softening point values of the upper part and the lower part is more than 3°C and 5°C or less
×: The difference between the measured softening point values of the upper part and the lower part is more than 5°C

It was found that the compatibility tends to be improved by lowering the molecular weight, setting TS to 20 to 60% by mass, and setting RS to 3 to 50% by mass in the block copolymer. It was found that when TS or RS is outside the above range, the compatibility tends to worsen.

(Melt viscosity of asphalt composition)

The melt viscosity of the asphalt composition at 160°C was measured using a Brookfield type viscometer. The asphalt compositions obtained in the Examples and the Comparative Examples were used as samples. The lower the melt viscosity, the better the producibility, and ratings of ◎, ○, △, and × were given in descending order of goodness according to the following criteria. It was considered that the performance was sufficient for practical use when the rating was △ or higher.
The evaluation criteria when the content of the block copolymer in the asphalt composition is 4% by mass are as follows.

◎: The melt viscosity is 300 mPa·s or less
○: The melt viscosity is more than 300 mPa·s and 350 mPa·s or less
△: The melt viscosity is more than 350 mPa·s and 400 mPa·s or less
×: The melt viscosity is more than 400 mPa·s

It was found that the melt viscosity of the asphalt composition tends to be decreased by lowering the molecular weight and reducing the content of the vinyl aromatic monomer in the block copolymer. However, it was found that by doing so, in contrast, the softening point of the asphalt composition and the dynamic stability (DS) of the modified asphalt mixture tend to be decreased.

(Softening point of asphalt composition (ring & ball method))

The softening point of the asphalt composition was measured according to JIS-K2207.
The asphalt compositions obtained in the Examples and the Comparative Examples were used as samples. When a specified ring was filled with a sample, supported horizontally in a glycerin solution, a 3.5-g ball was placed in the center of the sample, and the liquid temperature was raised at a rate of 5°C/min, the temperature when the sample touched the bottom plate of the ring stage under the weight of the ball (softening point) was measured.
The higher the softening point, the better, and ratings of ◎, ○, △, and × were given in descending order of goodness according to the following criteria. It was considered that the performance was sufficient for practical use when the rating was △ or higher.
The evaluation criteria when the content of the block copolymer in the asphalt composition is 4% by mass are as follows.

◎: The temperature (softening point) is 63°C or more
○: The temperature (softening point) is 60°C or more and less than 63°C

△: The temperature (softening point) is 56°C or more and less than 60°C
×: The temperature (softening point) is less than 56°C

It was found that the softening point of the asphalt composition tends to be improved by increasing the molecular weight, increasing the content of the vinyl aromatic monomer unit, and increasing the hydrogenation rate in the block copolymer. However, it was found that by doing so, in contrast, the compatibility with the asphalt is decreased and the melt viscosity of the asphalt composition is increased.

(Elongation recovery (elastic recovery) of asphalt composition)

The measurement was carried out according to the method described in British Standards, BS EN 13398: 2010 / BS 2000-516: 2010.
The modified asphalt composition prepared by the above method was poured into a jig to prepare a dumbbell-shaped specimen having grips at both ends. The dimensions of the specimen excluding the grips at both ends were 1 cm in thickness, 1 cm in width, and 3 cm in length.
The grips of the specimen were set on the chucks of the tensile tester, the specimen was pulled at a rate of 5 cm/min from the state where the distance between the chucks was 3 cm in a water tank at 25°C, and stopped when elongated 20 cm from the initial length. The specimen was allowed to stand in the water tank at 25°C for 10 seconds with the specimen sandwiched between the chucks, and then the specimen was cut at the center. After that, the cut specimens were left in the water tank at 25°C for 30 minutes, the sum $\alpha$ (cm) of the lengths of the portions excluding the grips of both specimens was measured, and the proportion calculated by the following expression (VI) was defined as elongation recovery (%).

$$\text{Elongation recovery (\%)} = \{(3(\text{cm}) + 20(\text{cm}) - \alpha\ (\text{cm}))/20(\text{cm})\} \times 100 \quad \text{(VI)}$$

Higher elongation recovery indicates better crack resistance.
The evaluation criteria when the content of the block copolymer in the asphalt composition is 4% by mass are as follows.

◎: The elongation recovery is 80% or more
○: The elongation recovery is 70% or more and less than 80%
△: The elongation recovery is 60% or more and less than 70%
×: The elongation recovery is less than 60%

It was found that the elongation recovery of the asphalt composition tends to be improved by increasing the molecular weight and increasing the content of the vinyl aromatic monomer unit in the block copolymer. However, it was found that by doing so, in contrast, the viscosity tends to be increased to decrease the processability.

(Heat resistance stability (elastic recovery maintenance rate) of asphalt composition)

RTFOT (Rolling Thin Film Oven Test) was carried out according to EN 12607-1.
The heating time was 240 minutes, and the elastic recovery was measured before and after the heating to determine the maintenance rate.

Maintenance rate = (elastic recovery after heating/elastic recovery before heating)

The higher the maintenance rate, the better the heat resistance, the better the long-term storage stability of the asphalt composition, and the longer the life of the road construction using the mixture, and thus ratings of ◎, ○, △, and × were given in descending order of goodness according to the following criteria.
It was considered that the performance was sufficient for practical use when the rating was △ or higher.
The evaluation criteria when the content of the block copolymer in the asphalt composition is 4% by mass are as follows.

◎: The maintenance rate is 90% or more
○: The maintenance rate is 85% or more and less than 90%
△: The maintenance rate is 80% or more and less than 85%
×: The maintenance rate is less than 80%

It was found that the elastic recovery maintenance rate tends to be improved by increasing the hydrogenation rate in the block copolymer. However, it was found that by doing so, in contrast, the viscosity of the asphalt composition tends to be increased to decrease the processability.

(Low temperature elongation of asphalt composition)

The low temperature elongation of the asphalt composition was measured according to JIS-K2207.
The asphalt compositions obtained in the Examples and the Comparative Examples were used as samples. When a sample was poured into a shape frame, shaped into a specified shape, then kept at 5°C in a constant temperature water bath, and next pulled at a speed of 5 cm/min, the distance (elongation) at the point where the sample was elongated to be cut was measured. The higher the elongation of the asphalt composition, the better the low temperature crack resistance, and ratings of ◎, ○, △, and × were given in descending order of goodness according to the following criteria. It was considered that the performance was sufficient for practical use when the rating was △ or higher.
The evaluation criteria when the content of the block copolymer in the asphalt composition is 4% by mass are as follows.

◎: The elongation is 45 cm or more
○: The elongation is 40 cm or more and less than 45 cm
△: The elongation is 35 cm or more and less than 40 cm
×: The elongation is less than 35 cm

It was found that the low temperature elongation of the asphalt composition tends to be improved by decreasing the content of the vinyl aromatic monomer unit in the block copolymer. However, it was found that by doing so, in contrast, the softening point of the asphalt composition and the dynamic stability of the modified asphalt mixture tend to be decreased.

(Dynamic stability (DS) of modified asphalt mixture)

The dynamic stability (DS) of the modified asphalt mixture was measured by a wheel tracking test. The modified asphalt mixture prepared above was used as a test body.
The wheel tracking test was carried out according to Test Method Handbook B003.
A small loaded rubber wheel was run repeatedly back and forth on a test body having predetermined dimensions at a specified temperature, for a specified time, and at a specified rate, and the dynamic stability (DS) (times/mm) was determined from the amount of deformation per unit time.
Higher dynamic stability indicates that better rutting resistance can be given. Ratings of ◎, ○, △, and × were given in descending order of goodness according to the following criteria. It was considered that the performance was sufficient for practical use when the rating was △ or higher.
The evaluation criteria when the content of the block copolymer in the asphalt composition is 4% by mass are as follows.

◎: The dynamic stability (DS) is 2000 times/mm or more
○: The dynamic stability (DS) is 1500 times/mm or more and less than 2000 times/mm
△: The dynamic stability (DS) is 1000 times/mm or more and less than 1500 times/mm
×: The dynamic stability (DS) is less than 1000 times/mm

It was found that the dynamic stability of the modified asphalt mixture tends to be improved by increasing the molecular weight, increasing the hydrogenation rate, and increasing the content of the vinyl aromatic monomer unit in the block copolymer. However, it was found that by doing so, in contrast, the compatibility with the asphalt tends to be decreased and the melt viscosity of the asphalt composition tends to be increased.

(Water resistance of modified asphalt mixture)

The water resistance of the modified asphalt mixture was measured by a water immersion wheel tracking test. The modified asphalt mixture prepared above was used as a test body.
The water immersion wheel tracking test was carried out according to Test Method Handbook B004.
A small, loaded rubber wheel was repeatedly run back and forth on a test body having predetermined dimensions at a specified temperature, for a specified time, and at a specified speed, the asphalt mixture specimen was divided into parts after the test, and the stripping of the asphalt in the cross section was visually checked to determine the stripped

area ratio.

A lower stripped area ratio indicates that superior water resistance can be imparted. Ratings of ◎, ○, △, and × were given in descending order of goodness according to the following criteria. It was considered that the performance was sufficient for practical use when the rating was △ or higher.

The evaluation criteria when the content of the block copolymer in the asphalt composition is 4% by mass are as follows.

◎: The stripped area ratio is 2% or less
○: The stripped area ratio is more than 2% and 3% or less
△: The stripped area ratio is more than 3% and 5% or less
×: The stripped area ratio is more than 5%

[Table 14]

| | | Example 33 | Example 34 | Example 35 | Example 36 | Example 37 | Example 38 | Example 39 | Example 40 | Example 41 | Example 42 |
|---|---|---|---|---|---|---|---|---|---|---|---|
| As (parts by mass) | Asphalt #70 made in China (asphaltene + resin = 40.9) | 96 | 96 | 96 | 96 | 96 | 96 | 96 | 96 | 96 | 96 |
| | Asphalt 60-80 manufactured by JX (asphaltene + resin = 28.0) | | | | | | | | | | |
| Polymer (parts by mass) | Polymer 2 | 4 | | | | | | | | | |
| | Polymer 3 | | 4 | | | | | | | | |
| | Polymer 4 | | | 4 | | | | | | | |
| | Polymer 5 | | | | | | | | | | |
| | Polymer 6 | | | | | | | | | | |
| | Polymer 7 | | | | 4 | | | | | | |
| | Polymer 8 | | | | | 4 | | | | | |
| | Polymer 9 | | | | | | 4 | | | | |
| | Polymer 10 | | | | | | | 4 | | | |
| | Polymer 11 | | | | | | | | | | |
| | Polymer 12 | | | | | | | | 4 | | |
| | Polymer 13 | | | | | | | | | 4 | |
| | Polymer 14 | | | | | | | | | | |
| | Polymer 15 | | | | | | | | | | 4 |

(continued)

| | | Example 33 | Example 34 | Example 35 | Example 36 | Example 37 | Example 38 | Example 39 | Example 40 | Example 41 | Example 42 |
|---|---|---|---|---|---|---|---|---|---|---|---|
| Additive (parts by mass) | Sulfur | | | | | | | | | | |
| | Polyphosphoric acid | | | | | | | | | | |
| | Silane coupling agent | | | | | | | | | | |
| | Wax | | | | | | | | | | |
| Physical properties of As | Compatibility | ◎ | Δ | Δ | ○ | Δ | Δ | Δ | ○ | Δ | ○ |
| | Melt viscosity | ○ | ○ | Δ | ○ | ○ | Δ | Δ | ○ | Δ | ○ |
| | Softening point | Δ | ○ | ○ | Δ | ○ | ○ | ○ | ○ | ◎ | ○ |
| | Elongation recovery | Δ | ○ | ○ | Δ | ○ | ○ | ○ | ○ | ◎ | ○ |
| | Heat resistance stability (elastic recovery maintenance rate) | ○ | ◎ | ◎ | ○ | ◎ | ◎ | ◎ | ○ | ◎ | ○ |
| | Low temperature elongation | ◎ | ○ | ○ | ◎ | ○ | ○ | Δ | ○ | Δ | ○ |
| Physical properties of mixture | DS | Δ | Δ | ○ | ○ | ○ | ○ | ○ | Δ | Δ | ○ |
| | Water resistance | Δ | Δ | ○ | ○ | ○ | ◎ | ○ | Δ | Δ | ○ |

[Table 15]

| | | Example 43 | Example 44 | Example 45 | Example 46 | Example 47 | Example 48 | Example 49 | Example 50 | Example 51 | Example 52 |
|---|---|---|---|---|---|---|---|---|---|---|---|
| As (parts by mass) | Asphalt #70 made in China (asphaltene + resin = 40.9) | 96 | 96 | 96 | 96 | 96 | 96 | 96 | 96 | 96 | 96 |
| | Asphalt 60-80 manufactured by JX (asphaltene + resin = 28.0) | | | | | | | | | | |
| Polymer (parts by mass) | Polymer 16 | 4 | | | | | | | | | |
| | Polymer 17 | | | | | | | | | | |
| | Polymer 18 | | | | | | | | | | |
| | Polymer 19 | | | | | | | | | | |
| | Polymer 20 | | | | | | | | | | |
| | Polymer 21 | | 4 | | | | | | | | |
| | Polymer 22 | | | 4 | | | | | | | |
| | Polymer 23 | | | | 4 | | | | | | |
| | Polymer 24 | | | | | 4 | | | | | |
| | Polymer 25 | | | | | | 4 | | | | |
| | Polymer 26 | | | | | | | 4 | | | |
| | Polymer 27 | | | | | | | | 4 | | |
| | Polymer 28 | | | | | | | | | 4 | |
| | Polymer 29 | | | | | | | | | | 4 |

(continued)

| | | Example 43 | Example 44 | Example 45 | Example 46 | Example 47 | Example 48 | Example 49 | Example 50 | Example 51 | Example 52 |
|---|---|---|---|---|---|---|---|---|---|---|---|
| Additive (parts by mass) | Sulfur | | | | | | | | | | |
| | Polyphosphoric acid | | | | | | | | | | |
| | Silane coupling agent | | | | | | | | | | |
| | Wax | | | | | | | | | | |
| Physical properties of As | Compatibility | ○ | ◎ | ○ | △ | ○ | ◎ | ◎ | ○ | ◎ | ◎ |
| | Melt viscosity | △ | ○ | ○ | △ | ○ | ○ | ○ | △ | ○ | ○ |
| | Softening point | ◎ | △ | ○ | ○ | ○ | △ | △ | ◎ | ○ | ○ |
| | Elongation recovery | ◎ | △ | ○ | ○ | ○ | △ | △ | ◎ | ○ | ○ |
| | Heat resistance stability (elastic recovery maintenance rate) | ◎ | ○ | ◎ | ◎ | ◎ | ○ | ○ | ◎ | ○ | ○ |
| | Low temperature elongation | △ | ○ | △ | △ | △ | ○ | ○ | △ | ○ | ○ |
| Physical properties of mixture | DS | ○ | ○ | ○ | ◎ | ○ | ○ | ○ | ○ | ○ | ○ |
| | Water resistance | ○ | ○ | ○ | ◎ | ○ | ○ | ○ | ○ | ○ | ○ |

[Table 16]

| | | Example 53 | Example 54 | Example 55 | Example 56 | Example 57 | Example 58 | Example 59 | Example 60 | Example 61 | Example 62 |
|---|---|---|---|---|---|---|---|---|---|---|---|
| As (parts by mass) | Asphalt #70 made in China (asphaltene + resin = 40.9) | 96 | 96 | 96 | 96 | 96 | 96 | 96 | 96 | 96 | 96 |
| | Asphalt 60-80 manufactured by JX (asphaltene + resin = 28.0) | | | | | | | | | | |
| Polymer (parts by mass) | Polymer 30 | 4 | | | | | | | | | |
| | Polymer 31 | | 4 | | | | | | | | |
| | Polymer 32 | | | 4 | | | | | | | |
| | Polymer 33 | | | | 4 | | | | | | |
| | Polymer 34 | | | | | 4 | | | | | |
| | Polymer 35 | | | | | | 4 | | | | |
| | Polymer 36 | | | | | | | 4 | | | |
| | Polymer 37 | | | | | | | | 4 | | |
| | Polymer 38 | | | | | | | | | 4 | |
| | Polymer 39 | | | | | | | | | | 4 |
| Additive (parts by mass) | Sulfur | | | | | | | | | | |
| | Polyphosphoric acid | | | | | | | | | | |
| | Silane coupling agent | | | | | | | | | | |
| | Wax | | | | | | | | | | |

(continued)

| | | Example 53 | Example 54 | Example 55 | Example 56 | Example 57 | Example 58 | Example 59 | Example 60 | Example 61 | Example 62 |
|---|---|---|---|---|---|---|---|---|---|---|---|
| Physical properties of As | Compatibility | △ | ○ | △ | ○ | ○ | × | × | × | △ | ○ |
| | Melt viscosity | ○ | △ | △ | △ | ○ | ○ | ○ | ○ | △ | ○ |
| | Softening point | ○ | ○ | ○ | ○ | ○ | ○ | ○ | △ | ○ | △ |
| | Elongation recovery | ○ | ○ | ○ | ○ | ○ | × | ○ | × | ○ | × |
| | Heat resistance stability (elastic recovery maintenance rate) | ◎ | ◎ | ◎ | ◎ | ◎ | ◎ | ◎ | ◎ | ◎ | ◎ |
| | Low temperature elongation | ○ | △ | △ | △ | △ | × | ○ | ○ | × | ○ |
| Physical properties of mixture | DS | △ | ○ | ○ | ○ | △ | ○ | △ | △ | ○ | △ |
| | Water resistance | △ | ○ | ○ | ○ | △ | ○ | △ | △ | ○ | △ |

[Table 17]

| | | Example 63 | Example 64 | Example 65 | Example 66 | Example 67 | Example 68 | Example 69 | Example 70 | Example 71 | Example 72 | Example 73 |
|---|---|---|---|---|---|---|---|---|---|---|---|---|
| As (parts by mass) | Asphalt #70 made in China (asphaltene + resin = 40.9) | 96 | 96 | 96 | 96 | 96 | 96 | 96 | 96 | | | |
| | Asphalt 60-80 manufactured by JX (asphaltene + resin = 28.0) | | | | | | | | | 96 | 96 | 96 |
| Polymer (parts by mass) | Polymer 22 | | | 4 | | | 4 | | 4 | 4 | | |
| | Polymer 26 | | | | | | | | | | 4 | |
| | Polymer 30 | | | | 4 | 4 | | 4 | | | | 4 |
| | Polymer 40 | 4 | | | | | | | | | | |
| | Polymer 41 | | 4 | | | | | | | | | |
| Additive (parts by mass) | Sulfur | | | | | 0.05 | | | | | | |
| | Polyphosphoric acid | | | 0.10 | 0.50 | | | | | | | |
| | Silane coupling agent | | | | | | 0.4 | 0.4 | | | | |
| | Wax | | | | | | | | 1.5 | | | |

(continued)

| | | Example 63 | Example 64 | Example 65 | Example 66 | Example 67 | Example 68 | Example 69 | Example 70 | Example 71 | Example 72 | Example 73 |
|---|---|---|---|---|---|---|---|---|---|---|---|---|
| Physical properties of As | Compatibility | Δ | × | ◎ | ○ | ○ | ◎ | ○ | Δ | ◎ | ◎ | ○ |
| | Melt viscosity | Δ | × | Δ | Δ | Δ | Δ | Δ | ◎ | ○ | ○ | ○ |
| | Softening point | ○ | ◎ | ◎ | ◎ | ◎ | ◎ | ◎ | ○ | ○ | Δ | ○ |
| | Elongation recovery | ○ | ◎ | ◎ | ◎ | ◎ | ◎ | ◎ | Δ | ○ | Δ | ○ |
| | Heat resistance stability (elastic recovery maintenance rate) | ◎ | ◎ | ◎ | ◎ | ◎ | ◎ | ◎ | ◎ | ◎ | ○ | ◎ |
| | Low temperature elongation | × | ○ | Δ | × | Δ | Δ | Δ | Δ | Δ | ○ | ○ |
| Physical properties of mixture | DS | ○ | ◎ | ○ | Δ | Δ | ○ | Δ | ○ | ○ | ○ | Δ |
| | Water resistance | ○ | ◎ | ○ | Δ | Δ | ◎ | ○ | ○ | ○ | ○ | Δ |

[Table 18]

| | | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 | Comparative Example 20 | Comparative Example 23 | Comparative Example 24 |
|---|---|---|---|---|---|---|---|---|---|---|---|---|---|---|
| As (parts by mass) | Asphalt #70 made in China (asphaltene + resin = 40.9) | 96 | 96 | 96 | 96 | 96 | 96 | 96 | 96 | 96 | | | 96 | 96 |
| | Asphalt 60-80 manufactured by JX (asphaltene + resin = 28.0) | | | | | | | | | | 96 | 96 | | |
| Polymer (parts by mass) | Polymer 1 | 4 | | | | | | | | | | | | |
| | Polymer 5 | | 4 | | | | | | | | 4 | | | |
| | Polymer 6 | | | 4 | | | | | | | | 4 | | |
| | Polymer 11 | | | | 4 | | | | | | | | | |
| | Polymer 14 | | | | | 4 | | | | | | | | |
| | Polymer 17 | | | | | | 4 | | | | | | | |
| | Polymer 18 | | | | | | | 4 | | | | | | |
| | Polymer 19 | | | | | | | | 4 | | | | | |
| | Polymer 20 | | | | | | | | | 4 | | | | |
| | Polymer 50 | | | | | | | | | | | | 4 | |
| | Polymer 51 | | | | | | | | | | | | | 4 |

(continued)

| | | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 | Comparative Example 20 | Comparative Example 23 | Comparative Example 24 |
|---|---|---|---|---|---|---|---|---|---|---|---|---|---|---|
| Additive (parts by mass) | Sulfur | | | | | | | | | | | | | |
| | Polyphosphoric acid | | | | | | | | | | | | | |
| | Silane coupling agent | | | | | | | | | | | | | |
| | Wax | | | | | | | | | | | | | |
| Physical properties of As | Compatibility | × | × | × | × | × | ○ | Δ | × | × | Δ | Δ | Δ | Δ |
| | Melt viscosity | ◎ | ◎ | ◎ | ○ | ○ | ○ | ○ | Δ | Δ | ◎ | ◎ | ○ | ○ |
| | Softening point | Δ | Δ | Δ | ○ | ○ | Δ | ○ | ○ | ○ | Δ | Δ | Δ | Δ |
| | Elongation recovery | Δ | Δ | Δ | ○ | ○ | Δ | ○ | ○ | ○ | Δ | Δ | Δ | Δ |
| | Heat resistance stability (elastic recovery maintenance rate) | × | × | × | × | × | ○ | ◎ | ◎ | ◎ | × | × | ○ | ○ |
| | Low temperature elongation | ◎ | ◎ | ◎ | ○ | ○ | ○ | ○ | Δ | Δ | ◎ | ◎ | ○ | ◎ |

(continued)

| | | Comparative Example | Comparative Example | Comparative Example | Comparative Example | Comparative Example | Comparative Example | Comparative Example | Comparative Example | Comparative Example | Comparative Example | Comparative Example | Comparative Example | Comparative Example |
|---|---|---|---|---|---|---|---|---|---|---|---|---|---|---|
| | | 10 | 11 | 12 | 13 | 14 | 15 | 16 | 17 | 18 | 19 | 20 | 23 | 24 |
| Physical properties of mixture | DS | × | × | Δ | × | Δ | × | × | Δ | Δ | × | Δ | × | × |
| | Water resistance | × | × | Δ | × | Δ | × | × | Δ | Δ | × | Δ | × | × |

[Table 19]

| | | Example 89 | Example 90 | Example 91 | Example 92 | Example 93 | Example 94 | Example 95 | Example 96 | Example 97 | Example 98 | Example 99 | Example 100 | Example 101 | Example 102 | Example 103 |
|---|---|---|---|---|---|---|---|---|---|---|---|---|---|---|---|---|
| As (parts by mass) | Asphalt #70 made in China (asphaltene + resin = 40.9) | 96 | 96 | 96 | 96 | 96 | 96 | 96 | 96 | 96 | 96 | 96 | 96 | 96 | 96 | 96 |
| | Asphalt 60-80 manufactured by JX (asphaltene + resin = 28.0) | | | | | | | | | | | | | | | |
| Polymer (parts by mass) | Polymer 42 | 4 | | | | | | | | | | | | | | |
| | Polymer 43 | | 4 | | | | | | | | | | | | | |
| | Polymer 44 | | | 4 | | | | | | | | | | | | |
| | Polymer 45 | | | | 4 | | | | | | | | | | | |
| | Polymer 46 | | | | | 4 | | | | | | | | | | |
| | Polymer 47 | | | | | | 4 | | | | | | | | | |
| | Polymer 48 | | | | | | | 4 | | | | | | | | |
| | Polymer 49 | | | | | | | | 4 | | | | | | | |
| | Polymer 52 | | | | | | | | | 4 | | | | | | |
| | Polymer 53 | | | | | | | | | | 4 | | | | | |
| | Polymer 54 | | | | | | | | | | | 4 | | | | |
| | Polymer 55 | | | | | | | | | | | | 4 | | | |
| | Polymer 56 | | | | | | | | | | | | | 4 | | |
| | Polymer 57 | | | | | | | | | | | | | | 4 | |
| | Polymer 58 | | | | | | | | | | | | | | | 4 |

(continued)

| | | Example 89 | Example 90 | Example 91 | Example 92 | Example 93 | Example 94 | Example 95 | Example 96 | Example 97 | Example 98 | Example 99 | Example 100 | Example 101 | Example 102 | Example 103 |
|---|---|---|---|---|---|---|---|---|---|---|---|---|---|---|---|---|
| Physical properties of As | Compatibility | ○ | ○ | Δ | Δ | ○ | ○ | Δ | Δ | ○ | Δ | ○ | Δ | Δ | Δ | Δ |
| | Melt viscosity | ◎ | Δ | ○ | ○ | Δ | ◎ | ◎ | Δ | ○ | ○ | ○ | ○ | Δ | ◎ | Δ |
| | Softening point | Δ | ○ | ○ | ○ | ○ | Δ | Δ | ○ | Δ | Δ | ○ | Δ | ○ | Δ | ○ |
| | Elongation recovery | Δ | ○ | ○ | ○ | Δ | Δ | Δ | ○ | Δ | Δ | Δ | Δ | Δ | Δ | ○ |
| | Heat resistance stability (elastic recovery maintenance rate) | Δ | ◎ | ◎ | Δ | Δ | Δ | × | ◎ | ○ | ○ | ◎ | ○ | Δ | × | ◎ |
| | Low temperature elongation | ◎ | Δ | Δ | ○ | Δ | ◎ | ◎ | Δ | ◎ | ◎ | Δ | ○ | Δ | ◎ | Δ |
| Physical properties of mixture | DS | Δ | ◎ | ○ | Δ | ○ | Δ | Δ | ○ | Δ | Δ | ○ | ○ | ○ | Δ | ◎ |
| | Water resistance | Δ | ◎ | ○ | Δ | ○ | Δ | Δ | ○ | Δ | Δ | ○ | ○ | ○ | Δ | ◎ |

The present application is based on a Japanese patent application (Japanese Patent Application No. 2021-173982) filed with the Japan Patent Office on October 25, 2021, the contents of which are incorporated herein by reference.

Industrial Applicability

The block copolymer of the present invention has industrial applicability as a modifier for an asphalt composition in applications such as road pavement, a waterproofing sheet, or roofing and can be particularly suitably used in the field of road pavement.

## Claims

**1.** A block copolymer (P) that is a hydrogenated product of a block copolymer comprising a polymer block (A) mainly composed of a vinyl aromatic monomer unit and a polymer block (B) mainly composed of a conjugated diene monomer unit, the block copolymer (P) satisfying the following conditions (1) and (2):

(1) a 5% by mass toluene solution viscosity at 25°C is 5 mPa·s or more and 45 mPa·s or less
(2) the block copolymer (P) comprises a functional group.

**2.** The block copolymer (P) according to claim 1,
wherein
a nitrogen content is 20 ppm or more and 1000 ppm or less.

**3.** The block copolymer (P) according to claim 1,
wherein
a silicon content is 50 ppm or more and 300 ppm or less.

**4.** The block copolymer (P) according to claim 1,
wherein
a mass proportion (TS) of the vinyl aromatic monomer unit is 20% by mass or more and 60% by mass or less.

**5.** The block copolymer (P) according to claim 1,
wherein
a vinyl bond content derived from the conjugated diene monomer is 9% by mass or more and 50% by mass or less.

**6.** The block copolymer (P) according to claim 1,
wherein
a mass proportion (BS) of the polymer block (A) calculated by the following expression (I) is 10% by mass or more and 40% by mass or less:

$$BS = (\text{mass of polymer block (A)} / \text{mass of copolymer (P)}) \times 100 \quad (I).$$

**7.** The block copolymer (P) according to claim 1,
wherein

the polymer block (B) is a polymer block (C) comprising a vinyl aromatic monomer unit and a conjugated diene monomer unit, and
a mass proportion (RS) of the vinyl aromatic monomer unit in the polymer block (C) calculated by the following expression (II) is 3% by mass or more and less than 50% by mass:

$$RS = (TS - BS)/(100 - BS) \times 100 \quad (II)$$

wherein TS represents a mass proportion of the vinyl aromatic monomer unit in the block copolymer (P), and BS represents a mass proportion of the polymer block (A) in the block copolymer (P).

8. The block copolymer (P) according to claim 1, wherein a weight average molecular weight is 50,000 or more and 500,000 or less.

9. The block copolymer (P) according to claim 1, wherein the block copolymer (P) comprises an amino group and/or an alkoxysilyl group as the functional group.

10. The block copolymer (P) according to claim 9, wherein

the block copolymer (P) comprises a structure in which a polymer chain is attached to a structure represented by either the following general formula (1) or (2):

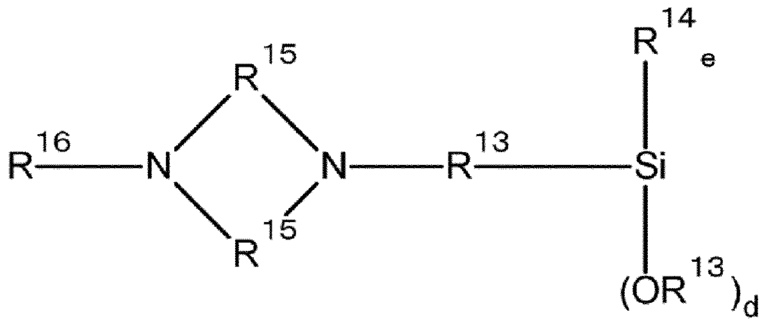

(1)

wherein $R^{13}$ is a hydrocarbon group having 1 to 12 carbon atoms and optionally has an unsaturated bond; a plurality of $R^{13}$ are each optionally different or the same; $R^{14}$ is a hydrocarbon group having 1 to 20 carbon atoms that is optionally substituted with an organic group including Si, O, or N and having no active hydrogen, and optionally has an unsaturated bond;
d is an integer of 2 to 3, and e is an integer of 0 to 1; d + e = 3;
$R^{15}$ is an aliphatic hydrocarbon group having 1 to 6 carbon atoms and optionally has an unsaturated bond; a plurality of $R^{15}$ are each optionally different or the same; and
$R^{16}$ is a hydrocarbon group having 1 to 20 carbon atoms that is optionally substituted with an organic group including Si, O, or N and having no active hydrogen, and optionally has an unsaturated bond;

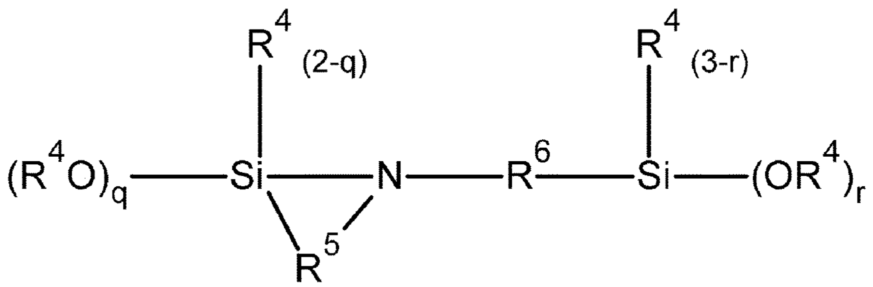

(2)

wherein $R^4$ is an alkyl group having 1 to 20 carbon atoms or an aryl group having 6 to 20 carbon atoms; a plurality of $R^4$ are each optionally different or the same; $R^5$ represents an alkylene group having 1 to 10 carbon atoms, and $R^6$ represents an alkylene group having 1 to 20 carbon atoms; and q represents an integer of 1 or 2, r represents an integer of 2 or 3, and the sum of q and r is an integer of 4 or more.

11. The block copolymer (P) according to claim 1, wherein when 4 parts by mass of the block copolymer (P) and 96 parts by mass of an asphalt in which in composition analysis of the asphalt according to a TLC-FID JPI method (JPI-5S-70), based on 100% by mass in total of a saturated, an aromatic, a resin, and an asphaltene, a total amount of the resin and the asphaltene is 30% by mass or more, are mixed, a separability according to ASTM D5976 is 5°C or less.

**12.** The block copolymer (P) according to claim 1, wherein a hydrogenation rate of a double bond in the conjugated diene monomer unit is 95 mol% or less.

**13.** The block copolymer (P) according to claim 1, wherein a hydrogenation rate of a double bond in the conjugated diene monomer unit is 10 mol% or more.

**14.** The block copolymer (P) according to claim 1, wherein

a nitrogen content is 20 ppm or more and 1000 ppm or less,
a silicon content is 50 ppm or more and 300 ppm or less,
a mass proportion (TS) of the vinyl aromatic monomer unit is 30% by mass or more and 60% by mass or less,
a hydrogenation rate of a double bond in the conjugated diene monomer unit is 10 mol% or more and 80 mol% or less,
the polymer block (B) is a polymer block (C) comprising a vinyl aromatic monomer unit and a conjugated diene monomer unit, and
a mass proportion (RS) of the vinyl aromatic monomer unit in the polymer block (C) calculated by the following expression (II):

$$RS = (TS - BS)/(100 - BS) \times 100 \quad (II)$$

is 15% by mass or more and 45% by mass or less.

**15.** The block copolymer (P) according to claim 1, wherein

a nitrogen content is 20 ppm or more and 1000 ppm or less,
a mass proportion (TS) of the vinyl aromatic monomer unit is 30% by mass or more and 60% by mass or less,
a hydrogenation rate of a double bond in the conjugated diene monomer unit is 10 mol% or more and 40 mol% or less,
the polymer block (B) is a polymer block (C) comprising a vinyl aromatic monomer unit and a conjugated diene monomer unit, and
a mass proportion (RS) of the vinyl aromatic monomer unit in the polymer block (C) calculated by the following expression (II):

$$RS = (TS - BS)/(100 - BS) \times 100 \quad (II)$$

is 15% by mass or more and 45% by mass or less.

**16.** An asphalt composition comprising:

100 parts by mass of an asphalt; and
0.5 parts by mass or more and 30 parts by mass or less of the block copolymer (P) according to any one of claims 1 to 15.

**17.** An asphalt composition comprising:

100 parts by mass of an asphalt; and
0.5 parts by mass or more and 30 parts by mass or less of the block copolymer (P) according to any one of claims 1 to 15, wherein
in composition analysis of the asphalt according to a TLC-FID JPI method (JPI-5S-70), based on 100% by mass in total of a saturate, an aromatic, a resin, and an asphaltene, a total amount of the resin and the asphaltene is 30% by mass or more.

**18.** The asphalt composition according to claim 16, wherein

the asphalt composition comprises 0.01 to 10 parts by mass of a crosslinking agent based on 100 parts by mass of the asphalt.

**19.** The asphalt composition according to claim 16, wherein the asphalt composition comprises 0.05 to 10 parts by mass of an additive comprising sulfur and silicon based on 100 parts by mass of the asphalt.

**20.** A modified asphalt mixture comprising:

3 parts by mass or more and 15 parts by mass or less of the asphalt composition according to claim 16; and 100 parts by mass of an aggregate.

## INTERNATIONAL SEARCH REPORT

International application No.
**PCT/JP2022/030950**

**A. CLASSIFICATION OF SUBJECT MATTER**

***C08F 297/04***(2006.01)i; ***C08F 8/04***(2006.01)i; ***C08L 53/02***(2006.01)i; ***C08L 95/00***(2006.01)i; ***E01C 7/18***(2006.01)i
FI: C08F297/04; C08F8/04; C08L95/00; C08L53/02; E01C7/18

According to International Patent Classification (IPC) or to both national classification and IPC

**B. FIELDS SEARCHED**

Minimum documentation searched (classification system followed by classification symbols)

C08C19/00-19/44, C08F6/00-283/00, C08F283/02-289/00, C08F291/00-297/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2017-25144 A (ASAHI KASEI CORP) 02 February 2017 (2017-02-02) claims, paragraphs [0199], [0201], [0228], [0237], hydrogenated block copolymer (P13) of example, table 3 | 1-2, 4-9, 11-13, 15-20<br><br>3, 10, 14, 17 |
| X<br><br>Y | JP 2017-25141 A (ASAHI KASEI CORP) 02 February 2017 (2017-02-02) claims, paragraphs [0088], [0090], [0123], [0132], block copolymer (Y-8) of example | 1-2, 4-9, 11-13, 15-20<br><br>3, 10, 14, 17 |
| X<br><br>Y | JP 2018-150430 A (ASAHI KASEI CORP) 27 September 2018 (2018-09-27) claims, paragraphs [0061], [0066], [0130], [0138], block copolymer 1 of example | 1-2, 4-9, 11-13, 15, 16, 18-20<br><br>3, 10, 14, 17 |
| X<br><br>Y | JP 2017-25142 A (ASAHI KASEI CORP) 02 February 2017 (2017-02-02) claims, paragraphs [0233], [0235], [0258], [0268], block copolymer composition (P-8) of example, table 2 | 1-2, 4-9, 11-13, 15, 16, 18-20<br><br>3, 10, 14, 17 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 September 2022** | **11 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**

International application No.
**PCT/JP2022/030950**

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2016-65192 A (ASAHI KASEI CHEMICALS CORP) 28 April 2016 (2016-04-28)<br>claims, paragraphs [0055], [0060], [0061], [0064], example of polymer 16, table 1 | 1-2, 4-9, 11-13, 15, 16, 18-20<br>3, 10, 14, 17 |
| X<br>Y | JP 2005-126485 A (ASAHI KASEI CHEMICALS CORP) 19 May 2005 (2005-05-19)<br>claims, paragraphs [0122], [0123], [0136], [0137], example 4, table 1 | 1-2, 4-9, 11-13, 15, 16, 18-20<br>3, 10, 14, 17 |
| X<br>Y<br>A | JP 2002-201333 A (ASAHI KASEI CORP) 19 July 2002 (2002-07-19)<br>claims, paragraph [0058], example 7, table 1 | 1-2, 4-9, 11-13, 15<br>3, 10, 14<br>16-20 |
| Y | JP 2011-68828 A (ASAHI KASEI CHEMICALS CORP) 07 April 2011 (2011-04-07)<br>claims, paragraph [0109], examples | 3, 10, 14 |
| Y | JP 2013-82841 A (ASAHI KASEI CHEMICALS CORP) 09 May 2013 (2013-05-09)<br>claims, paragraphs [0039], [0158], examples | 3, 10, 14 |

Form PCT/ISA/210 (second sheet) (January 2015)

**INTERNATIONAL SEARCH REPORT**
**Information on patent family members**

International application No.
**PCT/JP2022/030950**

| Patent document cited in search report | Publication date (day/month/year) | Patent family member(s) | Publication date (day/month/year) |
|---|---|---|---|
| JP 2017-25144 A | 02 February 2017 | (Family: none) | |
| JP 2017-25141 A | 02 February 2017 | (Family: none) | |
| JP 2018-150430 A | 27 September 2018 | (Family: none) | |
| JP 2017-25142 A | 02 February 2017 | (Family: none) | |
| JP 2016-65192 A | 28 April 2016 | US 2019/0153214 A1<br>claims, paragraphs [0256], [0268], [0271], [0279], example of polymers 9, 26<br>EP 3095802 A1<br>TW 201533140 A<br>KR 10-2016-0101059 A<br>CN 105899562 A<br>EA 201691253 A<br>MX 2016009298 A | |
| JP 2005-126485 A | 19 May 2005 | US 2005/0107521 A1<br>claims, paragraph [0075]<br>US 2007/0179220 A1<br>CN 1621451 A | |
| JP 2002-201333 A | 19 July 2002 | TW 225505 B | |
| JP 2011-68828 A | 07 April 2011 | (Family: none) | |
| JP 2013-82841 A | 09 May 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9012898 A
- JP 2004059781 A
- JP 3619286 B
- JP 4317979 B
- JP 46032415 A
- JP 49036957 A
- JP 48002423 A
- JP 48004106 A
- JP 56028925 A
- JP 59166518 A
- JP 60186577 A
- JP 428704 A
- JP 436636 A
- JP 63004841 A
- JP 1037970 A
- JP 1053851 A
- JP 2009041 A
- JP 8109219 A
- JP 2021173982 A


### Non-patent literature cited in the description


- **I.M. KOLTHOFF.** *J. Polym. Sci.,* 1946, vol. 1, 429
- The Shell Bitumen Handbook. Shell Bitumen, 1990
- **I. M. KOLTHOFF et al.** *J. Polym. Sci.,* 1946, vol. 1, 429